# EUROPÄISCHE PATENTANMELDUNG

(11) **EP 3 626 767 A1**
(43) Veröffentlichungstag der Anmeldung: **25.03.2020**
(21) Anmeldenummer: 19194855.3
(22) Anmeldetag: 02.09.2019
(51) Int. Cl.: C08J 5/18, C08L 67/02, C08L 67/04, C08G 63/08, C08G 63/16, C08G 63/183, C08L 51/00

(54) **VERFAHREN ZUR HERSTELLUNG BIOLOGISCH ABBAUBARER FLACHKÖRPER**

(30) Priorität: 24.09.2018 DE 102018007495; 24.01.2019 DE 102019101775; 20.02.2019 DE 102019104270; 28.02.2019 DE 102019105089
(71) Anmelder: FRAUNHOFER-GESELLSCHAFT zur Förderung der angewandten Forschung e.V., 80686 München (DE)
(72) Erfinder: Tolga, Sengül, 80686 München (DE); Roch, Hendrik, 80686 München (DE)
(74) Vertreter: Schleitzer, Dirk-Karsten

(57) **Zusammenfassung**

Die vorliegende Erfindung betrifft ein Verfahren zur Herstellung von Flachkörpern, insbesondere in Form von Platten oder Folien, aus biologisch abbaubaren Kunststoffmaterialien sowie die auf diese Weise hergestellten Flachkörper und deren Verwendungen, insbesondere im Bereich der Verpackungen.

## Beschreibung

Die vorliegende Erfindung betrifft das technische Gebiet von biologisch abbaubaren Kunststoffmaterialien sowie der auf dieser Basis hergestellten Produkte, insbesondere Flachkörper, wie Platten oder Folien, welche insbesondere im Verpackungsbereich eingesetzt werden können, sowie deren Verwendung und der damit im Zusammenhang stehenden Herstellungsverfahren.

Insbesondere betrifft die vorliegende Erfindung ein Verfahren zur Herstellung eines Flachkörpers, insbesondere in Form einer Platte oder Folie, aus einem biologisch abbaubaren (bioabbaubaren bzw. biodegradierbaren) Kunststoffmaterial.

Weiterhin betrifft die vorliegende Erfindung auch einen Flachkörper, welcher insbesondere in Form einer Platte bzw. eines plattenförmigen Flachkörpers oder aber in Form einer Folie bzw. folienförmigen Flachkörpers ausgebildet ist und welcher auf Basis des erfindungsgemäßen Verfahrens erhalten werden kann, sowie einen Flachkörper der vorgenannten Art als solchen.

Darüber hinaus betrifft die vorliegende Erfindung auch eine Verpackung, welche insbesondere als biologisch abbaubare Verpackung ausgebildet ist und welche den erfindungsgemäßen Flachkörper aufweist oder hieraus besteht.

Zudem betrifft die vorliegende Erfindung auch eine spezielle Kunststoffzusammensetzung (synonym auch als Kunststoffmaterial bezeichnet), wobei die Kunststoffzusammensetzung eine biologische Abbaubarkeit (Bioabbaubarkeit) aufweist und wobei die Kunststoffzusammensetzung insbesondere im Rahmen des erfindungsgemäßen Verfahrens bzw. für die erfindungsgemäßen Flachkörper eingesetzt werden kann.

Die vorliegende Erfindung betrifft weiterhin auch die erfindungsgemäßen Verwendungen des Flachkörpers nach der Erfindung bzw. der erfindungsgemäßen Kunststoffzusammensetzung.

Schließlich betrifft die vorliegende Erfindung auch eine Produktionsanlage, welche sich insbesondere zur Durchführung des Verfahrens nach der Erfindung und in diesem Zusammenhang zur Herstellung eines speziellen Flachkörpers, insbesondere in Form einer Platte oder Folie, aus einem biologisch abbaubaren Kunststoffmaterial eignet.

Im Allgemeinen werden im Stand der Technik bislang maßgeblich petrochemisch basierte Kunststoffe, welche auf fossile, nicht nachwachsende Ressourcen, wie insbesondere Erdöl, zurückgehen, auch im technischen Bereich der Verpackungen eingesetzt. Hierbei handelt es sich beispielsweise um Kunststoffe auf Basis von Polypropylen (PP), Hart-Polyethylen bzw. High Density Polyethylene (HDPE), Polystyrol (PS), Polyvinylchlorid (PVC), Polycarbonat (PC), Acrylnitril-Butadien-Styrol (ABS), Polymethylmethacrylat (PMMA), Polyethylenterephthalat (PET) sowie Styrol-Acrylnitril-Copolymerisat (SAN), wobei im Stand der Technik auch entsprechende Mischungen bzw. Blends dieser Kunststoffe eingesetzt werden.

Die vorgenannten Kunststoffe eignen sich zwar insbesondere für eine Verarbeitung mittels Profil- oder Flachfolienextrusion, wie sie zur Herstellung von Verpackungen oftmals eingesetzt wird, wobei die auf dieser Basis hergestellten (Verpackungs-) Produkte im Allgemeinen auch hinreichende Material- und Anwendungseigenschaften insbesondere hinsichtlich ihrer Beanspruchbarkeit und Dauerhaftigkeit aufweisen; jedoch ist ein zentraler Nachteil, welcher mit den vorgenannten Kunststoffen einhergeht, darin zu sehen, dass diese nicht biologisch abbaubar sind, was mit entsprechenden Problemen in Bezug auf deren Entsorgung einhergeht, und zwar insbesondere im Hinblick auf das Vorliegen eines hohen Abfallaufkommens.

In diesem Zusammenhang ist es insbesondere problematisch, dass aufgrund der umfangreichen Verwendung derartiger Kunststoffe eine entsprechend große Menge an Abfall resultiert, und zwar auch von daher, dass die in Rede stehenden Kunststoffe oftmals im Bereich von Einwegverpackungen oder dergleichen eingesetzt werden. Hinzu kommt dabei auch, dass neben der nicht vorhandenen biologischen Abbaubarkeit auch eine nachhaltige Rezyklierung bzw. Wiederverwertung dieser Kunststoffe oftmals nicht oder nur unter hohem verfahrenstechnischen Aufwand und damit einhergehenden hohen Kosten möglich ist, so dass eine Rezyklierung oftmals wirtschaftlich nicht sinnvoll ist und zudem oftmals nur zu Produkten mit verminderter Qualität führt.

Im Hinblick auf die mit herkömmlichen, nicht den Biopolymeren zugeordneten Kunststoffen hergestellten Verpackungen ist dabei auch beachtlich, dass in Deutschland ein Bedarf an Verpackungsmaterial von zur Zeit mehr als 15 Millionen Tonnen pro Jahr besteht, wobei etwa 20 % der Verpackungen aus Kunststoff bestehen, von denen wiederum ein großer Anteil auf kurzlebige oder nur einmal gebräuchliche Verpackungsformen, wie Folien, Beutel, Tragetaschen, Säcke oder dergleichen, entfällt. Eine Reduzierung des Verpackungsaufkommens ist dabei oftmals auch vor dem Hintergrund der Einhaltung hygienischer Anforderungen, beispielsweise im Bereich der Lebensmittelindustrie, nicht ohne Weiteres möglich.

Zusammenfassend ist somit anzuführen, dass der Nachteil bei den vorgenannten, auf Erdöl basierenden Kunststoffen bzw. Polymeren darin zu sehen ist, dass eine weiterführende bioabbaubare Lösung bzw. eine nachhaltige Verwertung im Stand der Technik nicht bislang gegeben ist.

Nicht zuletzt auch vor diesem Hintergrund besteht im Stand der Technik ein großer Bedarf an biologisch abbaubaren bzw. bioabbaubaren Kunststoffen, bzw. diesbezüglichen Kunststoffzusammensetzungen und auf dieser Basis hergestellten Verpackungen. Die hierzu im Stand der Technik bekannten Materialien bzw. bioabbaubaren Kunststoffe weisen jedoch oftmals nicht die gewünschten bzw. erforderlichen Verarbeitungseigenschaften bzw. Materialeigenschaften auf, um den hohen Anforderungen im Bereich der Verpackungsindustrie gerecht zu werden. Insbesondere ist bei den im Stand der Technik bekannten bioabbaubaren Kunststoffen eine entsprechende Verarbeitung unter Anwendung einer Profil- oder Flachfolienextrusion, wie sie zum Erhalt beispielsweise von Flachplatten oder Flachfolien (wie vollgefüllten oder mit Profil oder mit Hohlkammern ausgestatteten Flachplatten bzw. -folien) erforderlich ist, oftmals nur unzureichend oder nur mit großem Aufwand möglich, wobei zudem die resultierenden (Verpackungs-) Materialien oftmals nicht die erforderlichen Qualitäten aufweisen. Insbesondere ist die Verarbeitung der bekannten bioabbaubaren Kunststoffe auch insofern problematisch, als nicht immer ein optimaler Prozessablauf gewährleistet ist, was wiederum verfahrensökonomisch nachteilig ist und zudem zu Produkten mit unzureichender Qualität führt.

Biologisch abbaubare bzw. bioabbaubare Kunststoffe, wie sie im Stand der Technik beispielsweise von Polylactid (PLA) als solchem gebildet werden, weisen folglich nicht immer optimale Verarbeitungs- bzw. Materialeigenschaften auf, und zwar auch was deren Verarbeitung mittels Extrusion, insbesondere Profil- oder Flachfolienextrusion, anbelangt: So weisen die in Rede stehenden bioabbaubaren Kunststoffe, wie insbesondere Polylactid bzw. wie sie im Stand der Technik bekannt sind, oftmals nur eine unzureichende bzw. geringe (Dehn-)Viskosität und Schmelzefestigkeit auf, was insbesondere im Hinblick auf eine Verarbeitung zu Flachkörpern unter Anwendung von Extrusionsprozessen nachteilig ist bzw. einer solchen Verarbeitung sogar abträglich ist, was somit einen zentralen Nachteil darstellt.

Zudem gilt für Polylactid als Reinsubstanz insbesondere auch, dass dieses Kunststoffmaterial sehr spröde und steif ist und in diesem Zusammenhang auch nur eine geringe Wärmeformbeständigkeit aufweist, was gleichermaßen in Bezug auf die Verarbeitung mittels Extrusion nachteilig ist und dem Erhalt qualitativ hochwertiger Produkte abträglich ist. Aufgrund der nicht optimalen Material- bzw. Anwendungseigenschaften ist es in Bezug auf Polylactid bislang auch nicht oder nur bedingt möglich, eine Verarbeitung in herkömmlichen Extrusionsanlagen bzw. -vorrichtungen zum Erhalt beständiger Produkte mit entsprechenden Materialeigenschaften durchzuführen.

Insbesondere ist eine Verarbeitung von biologisch abbaubaren Kunststoffen zu insbesondere dünnwandigen extrudierten Folien mitunter nicht möglich, da bei der Extrusion oftmals Instabilitäten und Ungleichmäßigkeiten im Rahmen der Verarbeitung auftreten.

Eine weiterführende Anwendung von Kunststoffen als solchen im Bereich der Verpackungen ist - neben der Bereitstellung von Folien - in der Verarbeitung zu sogenannten Profilplatten, welche insbesondere in Form von Hohlprofilplatten bzw. Hohlkammerplatten, wie Hohlkammerstegplatten, vorliegen, zu sehen. Die in Rede stehenden plattenförmigen Flachkörper weisen aufgrund ihrer körperlichen Struktur bei geringem Flächengewicht im Vergleich zu Folien eine höhere mechanische Stabilität auf, so dass auch von daher eine hohe Eignung für den Verpackungsbereich vorliegt. Im Stand der Technik sind jedoch stabile bzw. dauerhafte und anwendungsgeeignete plattenförmige Flachkörper aus bioabbaubaren Kunststoffen nicht bekannt, was auch mit den nicht optimalen Anwendungs- bzw. Verarbeitungseigenschaften von bioabbaubaren Kunststoffen zusammenhängt. Denn insbesondere die nicht ausreichende (Dehn-)Viskosität und Schmelzefestigkeit von biologisch abbaubaren Kunststoffen des Standes der Technik führen zwangsläufig zu verfahrenstechnischen Problemen und verminderten Produktqualitäten, beispielsweise was eine mechanische Instabilität resultierender Hohlkammerprofile anbelangt, einhergehend mit einem übermäßigen Zusammenfallen bzw. Kollabieren der zugrundeliegenden Kammern.

Die vorgenannten unzureichenden Material- bzw. Verarbeitungseigenschaften von biologisch abbaubaren Kunststoffen des Standes der Technik stellen dabei auch einen maßgeblichen Hinderungsgrund für eine höhere Marktdurchsetzung von bioabbaubaren Kunststoffen bzw. Biopolymeren dar, da, wie zuvor angeführt, die zu geringe (Dehn-)Viskosität bzw. Schmelzfestigkeit einer (Extrusions-)Verarbeitung grundsätzlich abträglich ist und die auf dieser Basis erhaltenen Produkte oftmals qualitativ wenig zufriedenstellend sind.

In diesem Zusammenhang sind bislang im Stand der Technik auch keine zielführenden Ansätze beispielsweise in Form von weiterentwickelten bioabbaubaren Kunststoffen oder diesbezüglichen Verfahrensoptimierungen bekannt. Insbesondere fehlt es im Stand der Technik an Maßnahmen zur Bereitstellung einer verbesserten Verarbeitbarkeit zu entsprechenden Formkörpern bei gleichzeitiger Gewährleistung einer hohen biologischen Abbaubarkeit und einer akzeptablen Verfahrenseffizienz, zumal die verfügbaren Ausgangsstoffe bereits als solche nur selten den hiermit einhergehenden Anforderungen entsprechen.

In diesem Zusammenhang ist auch die Verwendung von hohen Mengen an Füllstoffen, um hierdurch die Verarbeitungseigenschaften zu verändern, insofern nicht zielführend, als dies zu verarbeitungsspezifischen Nachteilen führen kann, beispielsweise was eine Blockierung bzw. ein Verstopfen von dünnen Kavitäten einer Profildüse bei der Extrusion bzw. der verfahrensmäßig eingesetzten Vorrichtungen bzw. Werkzeuge anbelangt. Zudem können hierdurch die grundsätzlichen Verarbeitungs- und Handhabungsnachteile nicht nachhaltig überwunden werden. Im Bereich der dickwandigen Profilextrusion können bei sogenannten Holz-Kunststoff-Verbundwerkstoffen (WPC; Wood-Plastic-Composites) neben konventionellen Matrixmaterialien auf Basis von Polypropylen oder Polyvinylchlorid vereinzelt Biokunststoffe Verwendung finden, wobei die resultierenden Produkte jedoch nicht immer die gewünschten Eigenschaften aufweisen, und zwar auch was deren Bioabbaubarkeit anbelangt. Im Hinblick auf die Verwendung von herkömmlichen bioabbaubaren Kunststoffen ist zudem eine Absenkung der Verarbeitungstemperatur, um hierdurch eine höhere Schmelzefestigkeit zu erreichen, im Allgemeinen nicht zielführend, da die zugrundeliegenden Kunststoffmaterialien nicht hinreichend aufgeschmolzen werden und in diesem Zusammenhang auch nicht die erforderliche Fließfähigkeit erreicht wird, was der Durchführung eines stabilen und kontinuierlichen Extrusionsvorgangs insbesondere in dünnwandigen Bereichen abträglich ist.

Zudem ist es im Stand der Technik versucht worden, die diesbezüglichen Material- bzw. Verarbeitungseigenschaften von biologisch abbaubaren Kunststoffen, insbesondere von Polylactid, zu beeinflussen, und zwar im Hinblick auf die Sprödigkeit und das zugrundeliegende Schmelzverhalten, wobei hierzu auf spezielle Kunststoffzusammensetzungen bzw. Kunststoffblends abgestellt wird. Jedoch sind die im Stand der Technik in diesem Zusammenhang vorgesehenen Maßnahmen mitunter unzureichend bzw. nicht zufriedenstellend, da nicht immer eine weitreichende Verbesserung der Materialeigenschaften insbesondere auch im Hinblick auf eine Verarbeitung mittels Extrusion erreicht wird. Insbesondere führen die im Stand der Technik vorgesehenen Maßnahmen auch nicht dazu, dass die Kunststoffzusammensetzungen auf herkömmlichen Extrusionsanlagen bzw. -vorrichtungen zufriedenstellend verarbeitet werden können, beispielsweise zu plattenförmigen Gebilden, wie Profilplatten einerseits oder folienartigen Gebilden, wie Flachfolien, andererseits. Bislang sind im Stand der Technik dabei auch keine nachhaltigen Schritte eingeleitet worden, spezielle Verfahren bereitzustellen, anhand derer biologisch abbaubare Kunststoffe zu entsprechenden Formkörpern mit dem geforderten Anforderungsprofil verarbeitet werden können.

Die WO 2011/071666 A1 betrifft ein Verfahren zur Herstellung eines thermoformbaren Verbundstoffs durch Vernetzung von Polyhydroxyalkanoate (PHA) einerseits und Polylactid (PLA) andererseits in Gegenwart eines Additivs zur Herstellung von PHA- und PLA-Mischungen bzw. -Harzen mit speziellen Eigenschaften.

Die im Stand der Technik im Allgemeinen vorgesehenen Maßnahmen führen jedoch, wie zuvor angeführt, nicht immer zu effizienten Verfahren bzw. zur Bereitstellung von insbesondere im Verpackungsbereich verwendbaren bioabbaubaren Kunststoffmaterialien mit den diesbezüglich geforderten Eigenschaften, so dass auch von daher insgesamt ein großer Bedarf an der Bereitstellung entsprechender Verfahren bzw. bioabbaubarer Kunststoffmaterialien als solchen mit diesbezüglich verbesserten Eigenschaften besteht.

Vor diesem technischen Hintergrund liegt daher der vorliegenden Erfindung die Aufgabe zugrunde, ein leistungsfähiges Verfahren zur Herstellung eines Flachkörpers, insbesondere in Form einer Platte oder Folie, aus einem biologisch abbaubaren bzw. biodegradierbaren Kunststoffmaterial bereitzustellen, wobei die zuvor geschilderten Nachteile des Standes der Technik zumindest weitgehend vermieden oder aber wenigstens abgeschwächt werden sollen.

Insbesondere ist eine Aufgabe der vorliegenden Erfindung darin zu sehen, ein diesbezügliches Verfahren bereitzustellen, anhand dessen in effektiver Weise ein Flachkörper aus einem biologisch abbaubaren Kunststoffmaterial hergestellt werden kann, wobei der anhand des Verfahrens bereitgestellte Flachkörper über entsprechend gute Materialeigenschaften verfügen soll, welche einen Einsatz im technischen Bereich der Verpackungen ermöglicht, und zwar sowohl was dessen mechanische Eigenschaften als auch dessen biologische Abbaubarkeit anbelangt.

In diesem Zusammenhang ist eine weitere Aufgabe der vorliegenden Erfindung insbesondere auch darin zu sehen, ein effizientes Verfahren bereitzustellen, mit welchem ein insgesamt optimierter und vereinfachter Verfahrensablauf zur Herstellung der in Rede stehenden Flachkörper aus einem biologisch abbaubaren Kunststoffmaterial gewährleistet wird. Diesbezüglich soll das erfindungsgemäße Verfahren auch eine hohe Flexibilität und Anpassbarkeit hinsichtlich seiner Durchführung zum einen und der zu verarbeitenden Materialien zum anderen aufweisen. Insbesondere soll das Verfahren auch die Bereitstellung entsprechender Zwischenprodukte ermöglichen, welche wiederum in individueller Weise zu den angeführten Endprodukten verarbeitet werden können. Zudem soll das Verfahren auch die Bereitstellung einer Vielzahl unterschiedlich ausgebildeter bzw. maßgeschneiderter Produkte ermöglichen, insbesondere im Hinblick auf die Bereitstellung folien- bzw. plattenartiger Produkte.

Diesbezüglich soll - gemäß einer weiteren Aufgabe der vorliegenden Erfindung - auch eine sozusagen universelle Durchführung des Verfahrens auf standardmäßigen Extrusionsanlagen bzw. -vorrichtungen ermöglicht werden, wobei in diesem Zusammenhang auch die verfahrensgemäß eingesetzten Ausgangsmaterialien optimierte Eigenschaften aufweisen sollen, insbesondere im Hinblick auf die Bereitstellung hoher Schmelzefestigkeiten und Viskositäten, insbesondere Dehnviskositäten.

Weiterhin soll - gemäß einer wiederum weiteren Aufgabe der vorliegenden Erfindung - auch ein leistungsfähiges Verfahren zur Bereitstellung der in Rede stehenden Flachkörper auf Basis von biologisch abbaubaren Kunststoffmaterialien bereitgestellt werden, welches eine sichere und insbesondere hinsichtlich der jeweils zugrundeliegenden Verfahrensschritte störungs- und unterbrechungsfreie Verfahrensführung bzw. Herstellung der zugrundeliegenden Endprodukte ermöglicht.

Insgesamt ist somit zusammenfassend eine Aufgabe der vorliegenden Erfindung darin zu sehen, ein für die Herstellung von Flachkörpern (wie Platten oder Folien) auf Basis eines biologisch abbaubaren Kunststoffmaterials universelles Verfahren bereitzustellen, welches zu insbesondere im Hinblick auf den jeweiligen Anwendungs- bzw. Einsatzzweck optimierten Produkten mit verbesserten Eigenschaften führt und welches gleichermaßen eine hohe Flexibilität und individuelle Anpassbarkeit sowohl hinsichtlich der eingesetzten (Ausgangs-) Materialien, der Verfahrensführung als solcher als auch der resultierenden (End-) Produkte ermöglicht, und dies bei gleichzeitiger Gewährleistung einer hohen biologischen Abbaubarkeit der Produkte. Insbesondere soll das erfindungsgemäße Verfahren auch auf konventionellen Extrusions-Produktionsanlagen umgesetzt werden können, wie sie auch für herkömmliche bzw. nicht biologisch abbaubare Kunststoffe, beispielsweise auf reiner Erdölbasis oder dergleichen, eingesetzt werden.

Zur Lösung der zuvor geschilderten Aufgabe schlägt die vorliegende Erfindung somit - gemäß einem **ersten** Erfindungsaspekt der vorliegenden Erfindung - ein Verfahren zur Herstellung eines Flachkörpers, insbesondere in Form einer Platte oder Folie, aus einem biologisch abbaubaren bzw. biodegradierbaren Kunststoffmaterial gemäß Patentanspruch 1 vor; weitere vorteilhafte Weiterbildungen und Ausgestaltungen dieses Erfindungsaspekts sind Gegenstand der entsprechenden Verfahrensunteransprüche.

Weiterer Gegenstand der vorliegenden Erfindung ist zudem - gemäß einem **zweiten** Erfindungsaspekt der vorliegenden Erfindung - ein insbesondere in Form einer Platte oder Folie ausgebildeter Flachkörper, vorzugsweise biologisch abbaubarer bzw. biodegradierbarer Flachkörper, welcher gemäß dem Verfahren nach der Erfindung erhältlich ist, bzw. ein diesbezüglicher Flachkörper als solcher, wie in den entsprechenden und den erfindungsgemäßen Flachkörper betreffenden unabhängigen Patentansprüchen definiert.

Darüber hinaus ist ein weiterer Gegenstand der vorliegenden Erfindung - gemäß einem **dritten** Erfindungsaspekt der vorliegenden Erfindung - auch die erfindungsgemäße Verpackung, insbesondere biologisch abbaubare bzw. biodegradierbare Verpackung, wie sie in dem diesbezüglichen, die Verpackung als solche betreffenden unabhängigen Patentanspruch definiert ist.

Darüber hinaus ist ein weiterer Gegenstand der vorliegenden Erfindung - gemäß einem **vierten** Erfindungsaspekt der vorliegenden Erfindung - auch eine Kunststoffzusammensetzung als solche, welche insbesondere biologisch abbaubar bzw. biodegradierbar ist und welche vorzugsweise in Form einer Mischung vorliegt, wie in dem diesbezüglichen, die Kunststoffzusammensetzung betreffenden unabhängigen Patentanspruch angeführt.

Weiterhin ist Gegenstand der vorliegenden Erfindung - gemäß einem **fünften** Erfindungsaspekt der vorliegenden Erfindung - auch die erfindungsgemäße Verwendung des Flachkörpers nach der Erfindung, wie in dem diese Verwendung betreffenden unabhängigen Patentanspruch definiert.

Zudem ist ein weiterer Gegenstand der vorliegenden Erfindung - gemäß einem **sechsten** Erfindungsaspekt der vorliegenden Erfindung - auch die erfindungsgemäße Verwendung der Kunststoffzusammensetzung nach der Erfindung, wie in dem die diesbezügliche Verwendung betreffenden unabhängigen Patentanspruch definiert.

Schließlich ist ein weiterer Gegenstand der vorliegenden Erfindung - gemäß einem **siebten** Erfindungsaspekt der vorliegenden Erfindung - auch die erfindungsgemäße Produktionsanlage, insbesondere zur Durchführung des Verfahrens nach der Erfindung, wie in dem die Produktionsanlage betreffenden unabhängigen Patentanspruch definiert.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es hierzu einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 23 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben und erläutert, und zwar auch anhand von bevorzugte Ausführungsformen bzw. Ausführungsbeispiele darstellenden Zeichnungen bzw. Figurendarstellungen.

Gegenstand der vorliegenden Erfindung - gemäß einem **ersten** Aspekt der vorliegenden Erfindung - ist somit Verfahren zur Herstellung eines Flachkörpers, insbesondere in Form einer Platte oder Folie, aus einem biologisch abbaubaren und/oder biodegradierbaren Kunststoffmaterial,
wobei das Verfahren die folgenden Verfahrensschritte in der nachfolgend spezifizierten Abfolge umfasst:
(a) Herstellung einer Vielzahl von insbesondere partikulären Formkörpern, vorzugsweise in Form von Granalien, Pellets, Extrudaten, Kügelchen, Prills oder dergleichen, bevorzugt Granalien, wobei eine Mischung, welche als Komponenten (Inhaltsstoffe)
   (i) mindestens ein Polylactid (PLA),
   (ii) mindestens ein Polybutylensuccinat (PBS),
   (iii) gegebenenfalls mindestens einen weiteren Polyester aus der Gruppe von
      (α) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT),
      (β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie
      (γ) Mischungen von (α) und (β),
   (iv) gegebenenfalls mindestens einen reaktiven Polymerkettenmodifizierer (Polymerkettenmodifizierungsmittel)
   umfasst, in eine vorzugsweise homogene Schmelze überführt wird, vorzugsweise unter Vermischung, wobei im Fall der Anwesenheit der Komponente (iv) gleichzeitig eine Polymerisationsreaktion erfolgt, und nachfolgend die resultierende Schmelze zu der Vielzahl von insbesondere partikulären Formkörpern verarbeitet wird, vorzugsweise mittels Extrusion; dann
(b) Weiterverarbeitung der in Verfahrensschritt (a) erhaltenen, insbesondere partikulären Formkörper zu einem Flachkörper, insbesondere einer Platte oder Folie, vorzugsweise mittels Extrusion, bevorzugt mittels Profilextrusion.

Eine grundlegende Idee der vorliegenden Erfindung ist insbesondere darin zu sehen, ein gegenüber dem Stand der Technik verbessertes Verfahren zur Bereitstellung eines gleichermaßen verbesserten Flachkörpers, welcher insbesondere in Form einer Platte oder Folie vorliegt, aus einem biologisch abbaubaren Kunststoffmaterial bereitzustellen, wobei der Flachkörper bei gleichzeitig gegebener Bioabbaubarkeit auch hervorragende mechanische Eigenschaften (Stabilität) aufweist und somit besonders für den Verpackungsbereich geeignet ist.

In diesem Zusammenhang stellt die vorliegende Erfindung insbesondere auf die Bereitstellung eines modularen bzw. mehrstufigen, insbesondere zweistufigen, Verfahrens ab, wonach nämlich in einem ersten Schritt (Verfahrensschritt (a)) zunächst eine spezielle Mischung auf Basis wiederum spezieller Ausgangsmaterialien hergestellt und zu einer Vielzahl von partikulären Formkörpern verarbeitet wird, welche in einem nachfolgenden zweiten Schritt (Verfahrensschritt (b)) zu dem Flachkörper verarbeitet werden. Dabei sind die in dem ersten Schritt bereitgestellten Formkörper sozusagen eigenständig handhabbar, was beispielsweise eine entsprechende (Zwischen-)Aufbewahrung bzw. Lagerung ermöglicht, was wiederum zu produktionstechnischen Vorteilen führt, da beispielsweise zwischen Herstellung der Formkörper als Zwischenprodukt einerseits und Flachkörper als Endprodukt andererseits eine räumliche oder zeitliche Trennung vorliegen kann und zudem eine individuelle Dosierbarkeit bei der nachfolgenden Flachkörperherstellung ermöglicht wird.

Eine weitere Idee der vorliegenden Erfindung ist auch darin zu sehen, dass erfindungsgemäß in dem ersten Verfahrensschritt die partikulären Formkörper auf Basis einer sehr speziellen und im Hinblick auf das erfindungsgemäße Verfahren optimierten biologisch abbaubaren (Kunststoff-)Mischung (synonym auch als Kunststoffzusammensetzung bezeichnet) hergestellt werden [nämlich auf Basis von Polylactid; Polybutylensuccinat; sowie gegebenenfalls mindestens einem weiteren Polyester, wie beispielsweise Polybutylenadipat-terephthalat (PBAT) und/oder Polybutylensuccinat-terephthalat (PBST) und/oder Polybutylensebacat-terephthalat (PBSeT) und/oder Polyhydroxyalkanoat (PHA); und gegebenenfalls einem reaktiven Polymerkettenmodifizierer], welche bereits auch als solche über verbesserte Material- bzw. Anwendungseigenschaften insbesondere im Hinblick auf eine verbesserte bzw. erhöhte (Dehn-)Viskosität und Schmelzefestigkeit in der Schmelze verfügt, was wiederum deren Verarbeitung zu den Formkörpern bzw. Flachkörpern in dem zweiten Verfahrensschritt nachhaltig verbessert, und zwar insbesondere auch was die erfindungsgemäß bevorzugt vorgesehene Verfahrensführung mittels Extrusion anbelangt.

Somit ist es im Rahmen der vorliegenden Erfindung auch gelungen, eine hinsichtlich der Material- und Anwendungseigenschaften verbesserte Kunststoffzusammensetzung bzw. Mischung bereitzustellen, welche insbesondere in Bezug auf ihre (Dehn-)Viskosität bzw. Schmelzefestigkeit dahingehend verbessert wurde, dass eine Verarbeitung in industriell herkömmlichen Produktionsanlagen, insbesondere mittels Extrusion, zu den in Rede stehenden Formkörpern gemäß dem ersten Verfahrensschritt bzw. zu dem erfindungsgemäßen Flachkörper gemäß dem zweiten Verfahrensschritt erfolgen kann.

In diesem Zusammenhang können insbesondere auch leichte und trotzdem stabile und beständige Flachkörper, beispielsweise in Form von Hohlkammerplatten, insbesondere Hohlkammerstegplatten, oder dergleichen bereitgestellt werden, welche beispielsweise mittels einer Hohlkammerprofil-Extrusion in dem zweiten Verfahrensschritt hergestellt werden. Demgegenüber können zudem auch Flachfolien mit geringen Dicken bereitgestellt werden, welche auch eine verbesserte Biegsamkeit und Reißfestigkeit aufweisen. Insbesondere weisen die auf Basis des erfindungsgemäßen Verfahrens hergestellten Flachkörper bei gleichzeitig hervorragender Stabilität und Homogenität des zugrundeliegenden Materials auch eine entsprechend hohe biologische Abbaubarkeit auf. Nicht zuletzt aufgrund der optimierten Materialeigenschaften, beispielsweise auch im Hinblick auf die Duktilität der zugrundeliegenden Materialien, liegt eine hohe Eignung der erfindungsgemäß bereitgestellten Flachkörper zur Verwendung im Verpackungsbereich vor. Aufgrund der zugrundeliegenden Materialeigenschaften ist dabei auch die Oberfläche der erfindungsgemäß bereitgestellten Flachkörper homogen bzw. glatt ausgebildet, wobei keine Einfallstellen oder übermäßige Rauigkeiten vorliegen. Insbesondere werden in Bezug auf die erfindungsgemäß hergestellten Flachkörper glatte Oberflächen ohne Schuppeneffekt erzeugt. Nicht zuletzt von daher werden somit auf Basis des erfindungsgemäßen Verfahrens entsprechende Flachkörper mit insgesamt verbesserten Eigenschaften bereitgestellt.

Erfindungsgemäß kann zudem die resultierenden Flächengewichte der erfindungsgemäß erhaltenen Flachkörper bei der Verarbeitung auf einen vorgegebenen bzw. definierten Zielwert eingestellt werden. Im Allgemeinen kann es sich erfindungsgemäß auch derart verhalten, dass die Dichte der eingesetzten Kunststoffzusammensetzung bzw. Mischung etwas höher als diejenige von Polypropylen ist.

Die erfindungsgemäßen Kunststoffzusammensetzungen bzw. Mischungen führen somit auch zu einer höheren Werkstoffstabilität bei der Extrusion, welche sogar höher sein kann als bei entsprechenden Vergleichsprodukten, beispielsweise auf Basis von Polypropylen.

Die vorliegenden Kunststoffzusammensetzungen bzw. Mischungen sowie die hierauf basierenden Form- bzw. Flachkörper basieren dabei vorrangig auf nachwachsenden Rohstoffen, was einerseits ressourcenschonend ist und andererseits der biologischen Abbaubarkeit zuträglich ist.

Die im Rahmen der vorliegenden Erfindung eingesetzte bzw. bereitgestellte Kunststoffmischung dient insgesamt somit zur Fertigung von Flachkörpern, welche in hohem Maße biologisch abbaubar sind (und zwar auch im Zusammenhang mit der zugrundeliegenden Norm). Dabei kann die biologisch abbaubare Kunststoffzusammensetzung bzw. Mischung gemäß dem ersten Verfahrensschritt sozusagen universell für Extrusionsanwendungen eingesetzt werden, und zwar auch bei solchen Extrusionsanwendungen, bei denen hohe Schmelzefestigkeiten und Viskositäten, insbesondere Dehnviskositäten, erforderlich sind. In diesem Zusammenhang erfüllt das erweichte Extrudat der erfindungsgemäß eingesetzten Kunststoffzusammensetzung bzw. Mischung auch die für die Verarbeitung insbesondere mittels Extrusion unter entsprechenden Standardbedingungen vorliegenden Anforderungen, wie sie auch bei der Verarbeitung herkömmlicher bzw. nicht biologisch abbaubarer Kunststoffzusammensetzungen gefordert sind. Wie zuvor angeführt, sind die im Rahmen des erfindungsgemäßen Verfahrens resultierenden Produkte insbesondere in Form der Flachkörper biologisch abbaubar bzw. industriell kompostierbar.

Nicht zuletzt ergeben sich infolgedessen im Rahmen der vorliegenden Erfindung neue Einsatzmöglichkeiten für die vorliegende Kunststoffzusammensetzung bzw. Mischung, und zwar auch im Hinblick auf die Herstellung funktionaler Profile bzw. Folien in Form der erfindungsgemäßen Flachkörper.

In diesem Zusammenhang verhält es sich im Rahmen der vorliegenden Erfindung auch so, dass die erfindungsgemäße Verfahrensführung mit der Verwendung einer speziellen Mischung ihren unmittelbaren Niederschlag auch in dem erfindungsgemäß erhaltenen Flachkörper findet, und zwar sowohl was die verbesserte biologische Abbaubarkeit als auch die weiterführenden Materialeigenschaften insbesondere im Hinblick auf Stabilität, Homogenität und dergleichen des resultierenden Flachkörpers anbelangt.

Insbesondere wird im Rahmen der vorliegenden Erfindung in dem ersten Verfahrensschritt eine spezielle Kunststoffzusammensetzung bzw. Mischung eingesetzt bzw. hergestellt, welche insbesondere im Vergleich zu Polylactid als solchem über signifikant verbesserte Material- bzw. Anwendungseigenschaften verfügt. Im Rahmen der vorliegenden Erfindung ist es somit in überraschender Weise gelungen, eine auf Polylactid basierende Mischung bzw. Zusammensetzung durch gezielte Zugabe weiterer Komponenten, wie vorliegend angeführt, zu modifizieren, und zwar insbesondere dahingehend, dass entsprechende Zusammensetzungen bzw. Mischungen vorliegen, welche sich in hervorragender Weise im Rahmen der erfindungsgemäßen Verfahrensführung zur Herstellung entsprechender Formkörper eignen, welche weiterhin eine hohe biologische Abbaubarkeit aufweisen.

Erfindungsgemäß wird somit eine spezielle Kunststoffzusammensetzung bzw. Mischung eingesetzt, welche zudem durch den ziel- und zweckgerichteten Einsatz eines Polymerkettenmodifizierers und den damit einhergehenden Polymerisationsprozessen bzw. -reaktionen weiterführend modifiziert bzw. insbesondere vor dem jeweiligen Anwendungs- und Einsatzhintergrund maßgeschneidert werden kann.

Wie zuvor gleichermaßen angeführt, eignet sich die erfindungsgemäß eingesetzte spezielle Kunststoffzusammensetzung bzw. -mischung für eine Verarbeitung auf konventionellen Extrusionsanlagen, was für das erfindungsgemäße Verfahren bedeutet, dass dieses sozusagen universell und ohne großen bzw. zusätzlichen apparativen Aufwand durchführbar ist, einhergehend mit entsprechenden verfahrens- und kostenspezifischen Vorteilen. Bei der Verarbeitung treten dabei keine Nachteile gegenüber konventionellen Kunststoffen auf, wobei es auch nicht erforderlich ist, die eingesetzten Anlagen bzw. Vorrichtungen bzw. den zugrundeliegenden Prozess spezifisch anzupassen.

In diesem Zusammenhang ist im Rahmen der vorliegenden Erfindung auch das im Stand der Technik vorliegende Vorurteil überwunden worden, wonach nämlich bislang davon ausgegangen worden ist, dass sich biologisch abbaubare Kunststoffe als solche infolge ihrer nicht optimalen (Verarbeitungs-)Eigenschaften im Allgemeinen nicht für eine (Profilextrusions-)Verarbeitung zu Flachkörpern oder dergleichen eignen.

Ein weiterer Vorteil des erfindungsgemäßen Verfahrens unter Verwendung einer speziellen Kunststoffmischung zur Herstellung der in Rede stehenden Formkörper bzw. Flachkörper ist darin zu sehen, dass erfindungsgemäß im Vergleich zur Verarbeitung konventioneller Kunststoffe, wie Polyolefinen, geringere Verarbeitungstemperaturen eingesetzt werden, was mit einer entsprechenden Ressourcen- und Energieeinsparung und somit mit einer höheren Kosteneffizienz einhergeht. So wird im Rahmen der vorliegenden Erfindung beispielsweise ein Aufschmelzen der zugrundeliegenden Kunststoffmischung bzw. Formkörper zur Herstellung der erfindungsgemäß bereitgestellten Flachkörper bereits bei Temperaturen insbesondere ab 160 °C erreicht. Zudem kann im Rahmen der vorliegenden Erfindung bei Einsatz entsprechender Extrusionsvorrichtungen bei Düsentemperaturen von weniger als 200 °C verfahren werden.

Die erfindungsgemäß erhaltenen Flachkörper, welche in Form von Profilplatten, insbesondere Hohlkammerplatten, einerseits und Flachfolien andererseits, vorzugsweise Profilplatten, vorliegen, sind auch aufgrund der zuvor dargelegten biologisch abbaubaren Materialzusammensetzung für den Verpackungsbereich aufgrund zahlreicher ökologischer und ökonomischer Aspekte von hohe Interesse, wie nachfolgend angeführt:
- So eignen sich die erfindungsgemäß bereitgestellten Flachkörper zur Bereitstellung von bzw. zur Verwendung als biologisch abbaubare(n) Ein- bzw. Mehrwegprodukte(n) insbesondere für den Endkonsumenten;
- im Hinblick auf die erfindungsgemäß bevorzugte Ausführungsform, wonach der Formkörper in Form einer Platte, insbesondere als Profilplatte bzw. Hohlkammerplatte, ausgebildet ist, liegt eine effiziente Gewichtsersparnis (Leichtbau) bzw. Materialersparnis (Kostenreduktion) für die Bereitstellung von Verpackungslösungen mit gleichzeitig hoher Steifigkeit und Festigkeit vor, was einen entscheidenden Vorteil gegenüber bislang am Markt etablierten Verpackungslösungen und Produkten insbesondere auf Basis herkömmlicher bioabbaubarer Kunststoffe darstellt, da die vorgenannten Eigenschaften häufig als Ausschlusskriterium für eine Vielzahl herkömmlicher Materialien anzusehen sind. Die erfindungsgemäßen Flachkörper weisen somit auch von daher eine hohe Markttauglichkeit auf.
- Im Rahmen der erfindungsgemäßen Verfahrensführung liegt zudem ein reduzierter Energieeintrag bzw. Energieeinsatz, insbesondere bedingt durch die niedrigeren Verarbeitungstemperaturen, im direkten Vergleich zu konventionellen Materialien vor, so dass die erfindungsgemäß bereitgestellten Flachkörper energie- bzw. kosteneffizient hergestellt bzw. bereitgestellt werden können.
- Insbesondere aufgrund der hohen Viskosität der Kunststoffzusammensetzung bzw. Mischung in der Schmelze bzw. bei deren Verarbeitung bei moderater Verarbeitungstemperatur tritt insbesondere im Hinblick auf die Weiterverarbeitung zu Flachkörpern in Form von Folien erfindungsgemäß nur ein geringer "Neck-In" und somit ein nur geringes Einschnüren am Folienrand auf, welcher bzw. welches sogar geringer ausfallen kann als bei der Verarbeitung von herkömmlichen Kunststoffen, wie Polypropylen. Aufgrund des geringen "Neck-In" kann das Abschneiden am Rand reduziert werden, so dass eine höhere Materialausbeute bzw. größere Breiten der resultierenden Flachkörper realisiert werden können.

Wie zuvor angeführt, wird erfindungsgemäß auf eine spezielle Kunststoffzusammensetzung bzw. Mischung auf Basis von Polylactid einerseits und Polybutylensuccinat andererseits abgestellt, wobei die Mischung darüber hinaus gegebenenfalls Polybutylenadipat-terephthalat bzw. Polybutylensuccinat-terephthalat bzw. Polybutylensebacat-terephthalat enthalten kann und zudem mittels eines reaktiven Polymerkettenmodifizierers modifiziert werden kann.

In diesem Zusammenhang hat die Anmelderin in völlig überraschender Weise herausgefunden, dass eine derartige Kunststoffzusammensetzung bzw. Mischung insgesamt verbesserte Eigenschaften insbesondere im Hinblick auf deren Verarbeitung zu entsprechenden Formkörpern bzw. Flachkörpern, wie im Rahmen des erfindungsgemäßen Verfahrens vorgesehen, aufweist, so dass auf dieser Basis verbesserte Extrusionsergebnisse erzielt werden. Dabei ist es im Rahmen der vorliegenden Erfindung gelungen, eine insgesamt biologisch abbaubare Kunststoffzusammensetzung bereitzustellen, welche darüber hinaus über verbesserte Material- bzw. Anwendungseigenschaften verfügt. Dabei können die zugrundeliegenden Eigenschaften der Kunststoffzusammensetzung bzw. Mischung durch die ziel- bzw. zweckgerichtete Zugabe des reaktiven Polymerkettenmodifizierers nochmals nachhaltig verbessert werden, und zwar ohne die Bioabbaubarkeit nachhaltig zu beeinflussen.

Was das im Rahmen der vorliegenden Erfindung eingesetzte Polylactid (PLA) [Komponente (i)] anbelangt, so zählt dieses chemisch zu den Polyestern, wobei das Polymer aus chemisch aneinander gebundenen Milchsäuremolekülen aufgebaut ist. Polylactid ist natürlichen Ursprungs, wobei aus Stärke oder Zucker mittels Fermentation und Aufreinigung zunächst Milchsäure hergestellt wird, auf deren Basis im Rahmen einer chemisch-technischen Polymerisation das in Rede stehende Polylactid resultiert. Bei Polylactid handelt es sich im Allgemeinen um einen steifen, transparenten thermoplastischen Kunststoff, der grundsätzlich mit Polystyrol vergleichbare Eigenschaften aufweist. Aufgrund der Molekülstruktur weist Polylactid eine biologische Abbaubarkeit auf, wobei hierfür bestimmte Umweltbedingungen erforderlich sind, welche im Allgemeinen in industriellen Kompostieranlagen zu finden sind. Polylactid weist Eigenschaften auf, die für zahlreiche Einsatzgebiete grundsätzlich von Vorteil sind, wie eine geringe Feuchtigkeitsaufnahme sowie eine geringe Entflammbarkeit, eine hohe UV-Beständigkeit und hohe Farbechtheit. Zudem ist die Dichte von Polylactid derart, dass es sich auch für Leichtbauanwendungen eignet. Die vorliegende Transparenz und niedrige Migrationswerte führen dazu, dass Polylactid für einen Einsatz im Bereich von Verpackungen, insbesondere für Lebensmittel, geeignet ist.

Was zudem das im Rahmen der vorliegenden Erfindung eingesetzte Polybutylensuccinat [Komponente (ii)] anbelangt, so handelt es sich hierbei insbesondere um ein Kondensationsprodukt aus der Dicarbonsäure Bernsteinsäure und 1,4-Butandiol. Bei Polybutylensuccinat handelt es sich insbesondere um einen niedrigschmelzenden, flexiblen thermoplastischen Kunststoff, welcher im Allgemeinen gute Verarbeitungseigenschaften auch im Hinblick auf Extrusionsverfahren verfügt.

Weiterhin handelt es sich bei dem erfindungsgemäß gegebenenfalls eingesetzten Polybutylenadipat-terephthalat bzw. Polybutylensuccinat-terephthalat bzw. Polybutylensebacat-terephthalat um einen aliphatisch-aromatischen Polyester fossilen Ursprungs, insbesondere polymerisiert aus Butandiol, Adipinsäure bzw. Bernsteinsäure und Terephthalsäure, wobei es sich hierbei insbesondere um einen thermoplastischen Kunststoff mit hoher Flexibilität handelt.

Im Hinblick auf die vorliegende Erfindung ist es in diesem Zusammenhang auch überraschend, dass die erfindungsgemäß eingesetzte Kunststoffzusammensetzung bzw. Mischung sich hervorragend für eine Verarbeitung mittels Extrusion, insbesondere Profilextrusion, eignet, da die vorgenannten Kunststoffe in Form von Polybutylensuccinat bzw. Polybutylensuccinat-terephthalat und/oder Polybutylenadipat-terephthalat als solche nicht über eine hinreichende Festigkeit für eine (Profil-)Extrusion verfügen. Diese Nachteile sind im Rahmen der erfindungsgemäß eingesetzten Kunststoffzusammensetzung bzw. Mischung gleichermaßen überkommen worden.

Die vorliegende Erfindung setzt dabei auch auf eine Werkstoffentwicklung einer biologisch abbaubaren Kunststoffzusammensetzung bzw. Mischung, wie sie im Rahmen des erfindungsgemäßen Verfahrens eingesetzt wird, wobei die Kunststoffzusammensetzung bzw. Mischung auf den Polyestern Polylactid (PLA, poly(lactid acid)) einerseits und Polybutylensuccinat (PBS, poly(butylene succinate)) andererseits basiert, welche gegebenenfalls ergänzt werden durch ein aliphatisch-aromatisches Polymer insbesondere in Form von Polybutylenadipat-terephthalat (PBAT, poly(butylene adipate-co-terephthalate)) bzw. Polybutylensuccinat-terephthalat (PBST, poly(butylene succinate-co-terephthalate)) bzw. Polybutylensebacat-terephthalat (PBSeT, poly(butylene sebacat-co-terephthalat)) und/oder durch ein Polyhydroxyalkanoat (PHA) insbesondere in Form von Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), und wobei gegebenenfalls ein reaktiver Polymerkettenmodifizierer zum Einsatz kommen kann.

Gemäß einer erfindungsgemäßen Ausführungsform kann es dabei vorgesehen sein, dass die Kunststoffzusammensetzung bzw. die Mischung chemisch insbesondere durch Molekülkettenvernetzung, -verlängerung oder -verzweigung modifiziert wird, und zwar auf Basis des Polymerkettenmodifizierers (welcher insbesondere als Polymerkettenverlängerer, Polymerkettenvernetzer bzw. Polymerkettenverzweigerer fungiert). Auf diese Weise können die Eigenschaften der Kunststoffzusammensetzung insbesondere im Hinblick auf ihre Verarbeitung insbesondere mittels Extrusion weiterführend eingestellt bzw. maßgeschneidert werden.

Folglich kann es erfindungsgemäß insbesondere vorgesehen sein, dass der erfindungsgemäß eingesetzten Kunststoffzusammensetzung bzw. Mischung gegebenenfalls mindestens ein reaktiver Polymerkettenmodifizierer bzw. Polymerkettenmodifizierungsmittel zugegeben wird, wobei es sich hierbei beispielsweise um einen Polymerisationsinitiator, wie ein Peroxid, und/oder um ein Polymerkettenverlängerer, wie beispielsweise Styrol/(Meth)Acrylat-Copolymer oder ein mit Glycidylmethacrylat (GMA) oder Acrylsäure (AS) oder Maleinsäureanhydrid (MSA) gepfropftes Polymer oder Copolymer, handeln kann. Durch den ziel- und zweckgerichteten Einsatz der vorgenannten Verbindungen werden die Eigenschaften der eingesetzten Kunststoffzusammensetzung bzw. Mischung insbesondere im Hinblick auf Viskosität und Schmelzverhalten bzw. -stabilität weiterführend modifiziert. Unter Verwendung des reaktiven Polymerkettenmodifizierers wird bei der Verarbeitung insbesondere mittels reaktiver Extrusion bzw. Reaktivextrusion verfahren.

Ohne sich auf diese Theorie beschränken oder festlegen zu wollen, erfolgt durch den Einsatz des reaktiven Polymerkettenmodifizierers eine zusätzliche Vernetzung bzw. Erhöhung des Molekulargewichts der eingesetzten Komponenten. Insbesondere kann eine Erhöhung des Molekulargewichts (insbesondere durch den Einsatz von Polymerkettenverlängerern, lineare Struktur) sowie eine Erzeugung von Vernetzungen bzw. Vernetzungsbrücken zwischen Kohlenstoffverbindungen in den zugrundeliegenden Polymerketten (Einsatz eines Polymerisationsinitiators, insbesondere Peroxid, quervernetzende Struktur) erfolgen. Auch hierdurch wird die Schmelzstabilität bzw. (Dehn-)Viskosität bzw. Schmelzefestigkeit erhöht bzw. weiterführend eingestellt. Erfindungsgemäß kann somit die zugrundeliegende Kunststoffzusammensetzung chemisch durch Molekülkettenvernetzung, -verlängerung und/oder -verzweigung aufgrund des Einsatzes des reaktiven Polymerkettenmodifizierers modifiziert werden.

Was darüber hinaus die erfindungsgemäß verwendeten Begriffe "biologisch abbaubar" bzw. "biodegradierbar" anbelangt, welche vorliegend synonym auch als "bioabbaubar" bzw. "biologisch degradierbar" oder dergleichen bezeichnet werden, so sind diese im Rahmen der vorliegenden Erfindung sehr breit zu verstehen. Insbesondere beziehen sich die in Rede stehenden Begriffe auf die Eigenschaften der erfindungsgemäß bereitgestellten Flachkörper, biologisch abgebaut zu werden, insbesondere unter definierten Bedingungen biologisch abgebaut zu werden (und zwar insbesondere insofern, als eine Zerlegung bzw. ein Abbau des dem Flachkörper zugrundeliegenden Kunststoffs bzw. der diesbezüglich eingesetzten Kunststoffzusammensetzung bzw. Mischung bzw. der dem Flachkörper zugrundeliegenden organischen Verbindungen erfolgt, wobei die Zerlegung bzw. der Abbau bis zum Erhalt anorganischer Stoffe, wie Kohlendioxid, erfolgen kann). Erfindungsgemäß beziehen sich die in Rede stehenden Begriffe dabei insbesondere auf eine industrielle Kompostierbarkeit bzw. biologische Abbaubarkeit der in Rede stehenden Formkörper. Insbesondere beziehen sich die vorgenannten Begriffe auf einen definierten Abbau der zugrundeliegenden Flachkörper bzw. Materialien in einem definierten Zeitraum unter Bedingungen einer Industriekompostierung, wie sie gemäß der europäischen Norm (DIN EN 13432 oder DIN EN 14995) oder der ASTM D6400 angegeben sind. Dabei kann das Vorliegen auf biologische Abbaubarkeit bzw. Bioabbaubarkeit insbesondere anhand der DIN EN ISO 14855-1 erfolgen.

Wie zuvor angeführt, zeichnet sich der erfindungsgemäß bereitgestellte Flachkörper durch eine hohe biologische Abbaubarkeit aus, insbesondere wobei ein effizienter biologischer Abbau unter den Bedingungen industrieller Kompostierung möglich ist. Aufgrund der speziellen Produkteigenschaften ist der erfindungsgemäß bereitgestellte Flachkörper grundsätzlich auch einer insbesondere mechanischen Rezyklierung oder thermischen Verwertung zugänglich, zumal der Flachkörper einer Rezyklierung bzw. thermischen Verwertung zugängliche Inhaltsstoffe aufweist, welche nicht zu einer übermäßigen Schadstoffbelastung oder dergleichen führen. Im Ergebnis weist der Flachkörper somit neben der biologischen Abbaubarkeit zahlreiche weitere Verwertungs- bzw. Entsorgungsmöglichkeiten auf.

Gemäß einer erfindungsgemäß bevorzugten Ausführungsform betrifft die vorliegende Erfindung insbesondere ein Verfahren zur Herstellung eines Flachkörpers, insbesondere in Form einer Platte oder Folie, aus einem biologisch abbaubaren und/oder biodegradierbaren Kunststoffmaterial,
wobei das Verfahren die folgenden Verfahrensschritte in der nachfolgend spezifizierten Abfolge umfasst:
(a) Herstellung einer Vielzahl von insbesondere partikulären Formkörpern, vorzugsweise in Form von Granalien, Pellets, Extrudaten, Kügelchen, Prills oder dergleichen, bevorzugt Granalien, wobei eine Mischung, welche als Komponenten (Inhaltsstoffe)
   (i) mindestens ein Polylactid (PLA),
   (ii) mindestens ein Polybutylensuccinat (PBS),
   (iii) gegebenenfalls mindestens ein Polybutylenadipat-terephthalat (PBAT) und/oder Polybutylensuccinat-terephthalat (PBST), insbesondere gegebenenfalls mindestens ein Polybutylenadipat-terephthalat (PBAT), und
   (iv) gegebenenfalls mindestens einen reaktiven Polymerkettenmodifizierer (Polymerkettenmodifizierungsmittel)
   umfasst, in eine vorzugsweise homogene Schmelze überführt wird, vorzugsweise unter Vermischung, wobei im Fall der Anwesenheit der Komponente (iv) gleichzeitig eine Polymerisationsreaktion erfolgt, und nachfolgend die resultierende Schmelze zu der Vielzahl von insbesondere partikulären Formkörpern verarbeitet wird, vorzugsweise mittels Extrusion; dann
(b) Weiterverarbeitung der in Verfahrensschritt (a) erhaltenen, insbesondere partikulären Formkörper zu einem Flachkörper, insbesondere einer Platte oder Folie, vorzugsweise mittels Extrusion.

Was die Mengen der jeweiligen Komponenten der erfindungsgemäß eingesetzten Kunststoffzusammensetzung bzw. Mischung anbelangt, so können diese im Allgemeinen in weiten Bereichen variieren. Im Rahmen der vorliegenden Erfindung werden jedoch besonders gute Ergebnisse erhalten, wenn die nachfolgenden Bereiche verwendet werden:
- Diesbezüglich kann die Mischung das Polylactid [Komponente (i)] in Mengen im Bereich von 10 Gew.-% bis 90 Gew.-%, insbesondere im Bereich von 15 Gew.-% bis 80 Gew.-%, vorzugsweise im Bereich von 20 Gew.-% bis 60 Gew.-%, bevorzugt im Bereich von 25 Gew.-% bis 50 Gew.-%, bezogen auf die Mischung, enthalten.
- Weiterhin kann die Mischung das Polybutylensuccinat [Komponente (ii)] in Mengen im Bereich von 10 Gew.-% bis 90 Gew.-%, insbesondere im Bereich von 20 Gew.-% bis 85 Gew.-%, vorzugsweise im Bereich von 40 Gew.-% bis 80 Gew.-%, bevorzugt im Bereich von 50 Gew.-% bis 70 Gew.-%, bezogen auf die Mischung, enthalten.
- Weiterhin kann die Mischung den weiteren Polyester [Komponente (iii)] in Mengen im Bereich von 0 Gew.-% bis 50 Gew.-%, insbesondere im Bereich von 0 Gew.-% bis 20 Gew.-%, vorzugsweise im Bereich von 0 Gew.-% bis 10 Gew.-%, bevorzugt im Bereich von 2 Gew.-% bis 8 Gew.-%, bezogen auf die Mischung, enthalten. In diesem Zusammenhang ist es erfindungsgemäß bevorzugt, dass die Mischung insbesondere gegebenenfalls mindestens ein Polybutylenadipat-terephthalat und/oder mindestens ein Polyhydroxyalkanoat, vorzugsweise Polybutylenadipat-terephthalat, als Komponente (iii) enthält.
- Was zudem den reaktiven Polymerkettenmodifizierer anbelangt, so kann die Mischung den reaktiven Polymerkettenmodifizierer [Komponente (iv)] in Mengen im Bereich von 0 Gew.-% bis 2 Gew.-%, insbesondere im Bereich von 0 Gew.-% bis 1,5 Gew.-%, vorzugsweise im Bereich von 0 Gew.-% bis 1 Gew.-%, bevorzugt im Bereich von 0,01 Gew.-% bis 0,5 Gew.-%, bezogen auf die Mischung, enthalten.

Die vorliegenden Mengenangaben werden insbesondere jeweils derart gewählt, dass in der Summe, gegebenenfalls unter Einbezug optionaler weiterer Inhaltsstoffe, 100 Gew.-% resultieren.

Auf Basis der vorgenannten Mengenbereiche der jeweiligen Komponenten kann die dem erfindungsgemäßen Verfahren zugrundeliegende Mischung insbesondere hinsichtlich ihrer Verarbeitungs- und Materialeigenschaften weiter eingestellt werden, und zwar auch im Hinblick auf den jeweils vorliegenden Anwendungs- bzw. Einsatzbereich.

In diesem Zusammenhang kann erfindungsgemäß insbesondere eine Kunststoffmischung eingesetzt werden, welche das Polylactid [Komponente (i)] in Mengen im Bereich von 10 bis 90 Gew.-%, das Polybutylensuccinat [Komponente (ii)] in Mengen im Bereich von 10 bis 90 Gew.%, den gegebenenfalls vorhandenen weiteren Polyester [Komponente (iii)] in Mengen im Bereich von 0 bis 20 Gew.-% und den gegebenenfalls vorhandenen reaktiven Polymerkettenmodifizierer bzw. insbesondere das Peroxid [Komponente (iv)] in Mengen im Bereich von 0 bis 1 Gew.-% enthält, jeweils bezogen auf die Zusammensetzung.

Insbesondere kann eine solche Kunststoffzusammensetzung bzw. die Mischung eingesetzt werden, welche das Polylactid [Komponente (i)] in Mengen im Bereich von 25 bis 60 Gew.-%, das Polybutylensuccinat [Komponente (ii)] in Mengen im Bereich von 40 bis 75 Gew.%, den gegebenenfalls vorhandenen weiteren Polyester [Komponente (iii)] in Mengen im Bereich von 0 bis 10 Gew.-% und den reaktiven Polymerkettenmodifizierer bzw. insbesondere das Peroxid [Komponente (iv)] in Mengen im Bereich von 0,01 bis 0,5 Gew.-% enthält, jeweils bezogen auf die Zusammensetzung.

Vorzugsweise kann eine derartige Kunststoffzusammensetzung bzw. die Mischung eingesetzt werden, welche das Polylactid [Komponente (i)] in Mengen im Bereich von 30 bis 50 Gew.-%, das Polybutylensuccinat [Komponente (ii)] in Mengen im Bereich von 50 bis 70 Gew.%, den gegebenenfalls vorhandenen weiteren Polyester [Komponente (iii)] in Mengen im Bereich von 2 bis 8 Gew.-% und den reaktiven Polymerkettenmodifizierer bzw. insbesondere das Peroxid [Komponente (iv)] in Mengen im Bereich von 0,01 bis 0,15 Gew.-% enthält, jeweils bezogen auf die Zusammensetzung.

Darüber hinaus kann auch die Molmasse der für die Kunststoffzusammensetzung bzw. Mischung eingesetzten Komponenten in großen Bereichen variiert werden. In diesem Zusammenhang werden jedoch besonders vorteilhafte Eigenschaften auch im Hinblick auf die Verarbeitbarkeit erreicht, wenn die nachfolgenden Wertebereiche eingestellt werden bzw. vorliegen:
- In diesem Zusammenhang kann das Polylactid [Komponente (i)] eine zahlenmittlere Molmasse Mₙ (zahlenmittleres Molekulargewicht Mₙ) im Bereich von 30.000 g/mol bis 600.000 g/mol, insbesondere im Bereich von 40.000 g/mol bis 500.000 g/mol, vorzugsweise im Bereich von 60.000 g/mol bis 250.000 g/mol, bevorzugt im Bereich von 70.000 g/mol bis 150.000 g/mol, aufweisen.
   Weiterhin kann das Polylactid [Komponente (i)] eine gewichtsmittlere Molmasse M_{w} (gewichtsmittleres Molekulargewicht M_{w}) im Bereich von 60.000 g/mol bis 800.000 g/mol, insbesondere im Bereich von 80.000 g/mol bis 700.000 g/mol, vorzugsweise im Bereich von 100.000 g/mol bis 500.000 g/mol, bevorzugt im Bereich von 125.000 g/mol bis 250.000 g/mol, aufweisen.
- Zudem kann das Polybutylensuccinat [Komponente (ii)] eine zahlenmittlere Molmasse Mₙ (zahlenmittleres Molekulargewicht Mₙ) im Bereich von 2.500 g/mol bis 150.000 g/mol, insbesondere im Bereich von 5.000 g/mol bis 100.000 g/mol, vorzugsweise im Bereich von 7.500 g/mol bis 75.000 g/mol, bevorzugt im Bereich von 10.000 g/mol bis 50.000 g/mol, aufweisen.
   Insbesondere kann das Polybutylensuccinat [Komponente (ii)] eine gewichtsmittlere Molmasse M_{w} (gewichtsmittleres Molekulargewicht M_{w}) im Bereich von 5.000 g/mol bis 300.000 g/mol, insbesondere im Bereich von 10.000 g/mol bis 200.000 g/mol, vorzugsweise im Bereich von 20.000 g/mol bis 150.000 g/mol, bevorzugt im Bereich von 50.000 g/mol bis 150.000 g/mol, aufweisen.
- Darüber hinaus kann der weitere Polyester [Komponente (iii)] eine zahlenmittlere Molmasse Mₙ (zahlenmittleres Molekulargewicht Mₙ) im Bereich von 5.000 g/mol bis 500.000 g/mol, insbesondere im Bereich von 10.000 g/mol bis 300.000 g/mol, vorzugsweise im Bereich von 15.000 g/mol bis 150.000 g/mol, bevorzugt im Bereich von 20.000 g/mol bis 100.000 g/mol, aufweisen.
   Insbesondere kann der weitere Polyester [Komponente (iii)] eine gewichtsmittlere Molmasse M_{w} (gewichtsmittleres Molekulargewicht M_{w}) im Bereich von 10.000 g/mol bis 500.000 g/mol, insbesondere im Bereich von 20.000 g/mol bis 400.000 g/mol, vorzugsweise im Bereich von 40.000 g/mol bis 350.000 g/mol, bevorzugt im Bereich von 80.000 g/mol bis 300.000 g/mol, aufweisen.

Die im Rahmen der vorliegenden Erfindung angegebenen Molmassen (Molekulargewichte) für die polymeren Verbindungen beziehen sich, wie zuvor angeführt, entweder auf die zahlenmittlere Molmasse Mₙ oder die gewichtsmittlere Molmasse M_{w}. Bei der zahlenmittleren Molmasse Mₙ wird die Masse der jeweiligen Einzelpolymere mit ihrem Zahlenanteil gewichtet, wohingegen bei der gewichtsmittleren Molmasse M_{w} die Masse der einzelnen polymeren Verbindungen mit ihrem Gewichtsanteil gewichtet wird. Die Molmassen bzw. die Molmassenverteilung kann durch verschiedene, standardisierte Verfahren und Methoden bestimmt werden, wie beispielsweise durch Lichtstreuung, Rheologie, Massenspektrometrie, Permeations-Chromatographie etc. Die zur Bestimmung der Molmassenverteilung verwendeten Verfahren sind dem Fachmann jedoch geläufig und bedürfen keiner näheren Erläuterung. So können die Molekulargewichte der eingesetzten Polymere insbesondere anhand einer GPC-Methode bestimmt werden, insbesondere auf Basis der DIN 55672 bzw. insbesondere mit Polymethylmethacrylat bzw. Polystyrol als Standard.

Was die vorgenannten Komponenten anbelangt, so können in diesem Zusammenhang insbesondere folgende Stoffe bzw. Zubereitungen eingesetzt werden: So kann das Polylactid [Komponente (i)] auf Basis einer Zubereitung, welche unter der Produktbezeichnung Ingeo® 4032 D, Ingeo® 4043 D, Ingeo® 4044 D bzw. Ingeo® 2003 D, Ingeo® 2500 HP von der Fa. NatureWorks kommerziell erhältlich ist, eingesetzt werden. Zudem kann das Polybutylensuccinat [Komponente (ii)] auf Basis einer Zubereitung eingesetzt werden, welche unter dem Produktnamen Bionolle® 1001 MD von der Fa. Showa Denko oder BioPBS™ FZ 71 bzw. BioPBS™ FZ 91 von der Fa. PTT MCC Biochem Co. Ltd. kommerziell erhältlich ist. Zudem kann der weitere Polyester in Form von Polybutylenadipat-terephthalat oder das Polybutylensuccinat-terephthalat [Komponente (iii)] auf Basis einer Zubereitung eingesetzt werden, welche unter dem Produktnamen Ecoflex® F Blend C1200 von der Fa. BASF oder unter dem Produktnamen Bionolle® 3001 MD von der Fa. Showa Denko kommerziell erhältlich ist. Zudem kann der weitere Polyester in Form von Polyhydroxyalkanoat [Komponente (iii)] auf Basis einer Zubereitung eingesetzt werden, welche unter dem Produktnamen Mirel™ von der Fa. Metabolix oder Enmat Y3000P® von der Fa. TianAn Biologic Materials Co. Ltd. oder Aonilex X131A bzw. Aonilex X151A von der Fa. Kaneka Corp. kommerziell erhältlich ist.

Im Rahmen der vorliegenden Erfindung kann es zudem insbesondere vorgesehen sein, dass die Mischung als Komponenten (i) mindestens ein Polylactid (PLA), (ii) mindestens ein Polybutylensuccinat (PBS), (iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und (iv) mindestens einen reaktiven Polymerkettenmodifizierer (Polymerkettenmodifizierungsmittel) aufweist oder hieraus besteht.

Insbesondere kann es erfindungsgemäß vorgesehen sein, dass die Mischung als Komponenten (i) mindestens ein Polylactid (PLA), (ii) mindestens ein Polybutylensuccinat (PBS), (iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), vorzugsweise gegebenenfalls mindestens ein Polybutylenadipat-terephthalat (PBAT), und (iv) mindestens einen reaktiven Polymerkettenmodifizierer (Polymerkettenmodifizierungsmittel) in Form eines organischen Peroxids aufweist oder hieraus besteht.

Besonders gute Ergebnisse lassen sich zudem erhalten, wenn die Mischung als Komponenten (i) mindestens ein Polylactid (PLA), (ii) mindestens ein Polybutylensuccinat (PBS), (iii) mindestens einen weiteren Polyester, wie zuvor definiert, insbesondere mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), vorzugsweise mindestens ein Polybutylenadipat-terephthalat (PBAT), und (iv) mindestens einen reaktiven Polymerkettenmodifizierer (Polymerkettenmodifizierungsmittel) in Form eines organischen Peroxids aufweist oder hieraus besteht.

Erfindungsgemäß ist es in diesem Zusammenhang von besonderem Vorteil, wenn die in Verfahrensschritt (a) eingesetzte Mischung als Komponenten (i) mindestens ein Polylactid (PLA), insbesondere in Mengen im Bereich von 10 Gew.-% bis 90 Gew.-%, insbesondere im Bereich von 15 Gew.-% bis 80 Gew.-%, vorzugsweise im Bereich von 20 Gew.-% bis 60 Gew.-%, bevorzugt im Bereich von 25 Gew.-% bis 50 Gew.-%, bezogen auf die Mischung; (ii) mindestens ein Polybutylensuccinat (PBS), insbesondere in Mengen im Bereich von 10 Gew.-% bis 90 Gew.-%, insbesondere im Bereich von 20 Gew.-% bis 85 Gew.-%, vorzugsweise im Bereich von 40 Gew.-% bis 80 Gew.-%, bevorzugt im Bereich von 50 Gew.-% bis 70 Gew.-%, bezogen auf die Mischung; (iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), insbesondere in Mengen im Bereich von 0 Gew.-% bis 50 Gew.-%, insbesondere 0 Gew.-% bis 20 Gew.-%, vorzugsweise 0 Gew.-% bis 10 Gew.-%, bevorzugt 2 Gew.-% bis 8 Gew.-%, bezogen auf die Mischung; und (iv) gegebenenfalls mindestens einen reaktiven Polymerkettenmodifizierer (Polymerkettenmodifizierungsmittel), insbesondere in Form eines organischen Peroxids, insbesondere in Mengen im Bereich von 0 Gew.-% bis 2 Gew.-%, insbesondere im Bereich von 0 Gew.-% bis 1,5 Gew.-%, vorzugsweise im Bereich von 0 Gew.-% bis 1 Gew.-%, bevorzugt im Bereich von 0,01 Gew.-% bis 0,5 Gew.-%, bezogen auf die Mischung, enthält, insbesondere wobei die vorgenannten Mengenangaben jeweils derart gewählt werden, dass in der Summe, gegebenenfalls unter Einbezug optionaler weiterer Inhaltsstoffe, 100 Gew.-% resultieren.

Darüber hinaus ist zu der gegebenenfalls eingesetzten Komponente (iv) in Form des Polymerkettenmodifizierers Folgendes auszuführen:
So kann es erfindungsgemäß insbesondere vorgesehen sein, dass der reaktive Polymerkettenmodifizierer [Komponente (iv)] ausgewählt wird aus der Gruppe von Polymerkettenverlängerern (Polymerkettenverlängerungsmitteln), Polymerkettenvernetzern (Polymerkettenvernetzungsmitteln) und Polymerkettenverzweigerer (Polymerkettenverzweigungsmitteln) sowie deren Mischungen oder Kombinationen.

Insbesondere kann der reaktive Polymerkettenmodifizierer [Komponente (iv)] (1) mindestens einen Polymerisationsinitiator (Radikalstarter), insbesondere mindestens ein Peroxid, vorzugsweise organisches Peroxid, und/oder insbesondere mindestens eine Azoverbindung, vorzugsweise Azoisobutyronitril (AIBN), und/oder (2) mindestens ein Styrol/(Meth)Acrylat-Copolymer, insbesondere modifiziertes und/oder reaktives Styrol/(Meth)Acrylat-Copolymer, und/oder (3) mindestens ein mit Glycidylmethacrylat (GMA) oder Acrylsäure (AS) oder Maleinsäureanhydrid (MSA) gepfropftes Polymer oder Copolymer, vorzugsweise ein mit Glycidylmethacrylat (GMA) gepfropftes Polymer oder Copolymer, umfassen oder hieraus bestehen.

In diesem Zusammenhang kann es zudem vorgesehen sein, dass der reaktive Polymerkettenmodifizierer [Komponente (iv)] mindestens einen Polymerisationsinitiator (Radikalstarter), insbesondere mindestens ein Peroxid, vorzugsweise organisches Peroxid, umfasst oder hieraus besteht.

Im Rahmen der vorliegenden Erfindung ist es dabei bevorzugt, wenn der reaktive Polymerkettenmodifizierer in Form eines Peroxids, vorzugsweise organisches Peroxids, eingesetzt wird. In diesem Zusammenhang fungiert das Peroxid insbesondere als Polymerkettenvernetzer bzw. Polymerkettenverzweiger, bevorzugt Polymerkettenvernetzer, insbesondere einhergehend mit der Ausbildung von Vernetzungsbrücken insbesondere zwischen den Kohlenstoffverbindungen in der Polymerkette, wodurch die entsprechenden Eigenschaften der Kunststoffzusammensetzung bzw. Mischung weiterführend eingestellt bzw. modifiziert werden können.

Als Peroxid können insbesondere die unter dem Produktnamen Trigonox® 117 bzw. Trigonox® 101 bzw. Perkadox BC-FF kommerziell erhältlichen Zubereitungen der Fa. AkzoNobel oder die unter dem Produktnamen Peroxan® BEC bzw. Peroxan® HX bzw. Peroxan® DC von der Fa. Pergan im Rahmen der vorliegenden Erfindung eingesetzt werden.

Als Peroxid kann insbesondere tert-Butylperoxy-2-ethylhexylcarbonat eingesetzt werden. Zudem kann Dicumylperoxid als Peroxid bzw. als reaktiver Polymerkettenmodifizierer [Komponente (iv)] eingesetzt werden. Als Azoverbindung kann insbesondere Azoisobutyronitril von der Fa. Merck eingesetzt werden.

Als Polymerkettenmodifizierer kann insbesondere ein Acrylat-Copolymer eingesetzt werden, wie das zuvor angeführte Styrol/(Meth)Acrylat-Copolymer, insbesondere wobei die vorgenannten Verbindungen insbesondere als Polymerkettenverlängerer fungieren. Diesbezüglich kann beispielsweise die unter dem Produktnamen Joncryl® ADR 4368 bzw. Joncryl® 4380 bzw. Joncryl® ADR 4468 bzw. Joncryl® ADR 4300 von der Fa. BASF kommerziell erhältlichen Zubereitungen eingesetzt werden.

Als Polymerkettenmodifizierer kann, wie zuvor angeführt, zudem ein mit Glycidylmethacrylat (GMA) oder Acrylsäure (AS) oder Maleinsäureanhydrid (MSA) gepfropftes Polymer oder Copolymer, insbesondere ein mit Glycidylmethacrylat gepfropftes Polymer oder Copolymer, beispielsweise die unter dem Produktnamen Scona® TPKD 8304 PCC erhältliche Zubereitung von der Fa. BYK-Chemie GmbH, eingesetzt werden.

Durch den zweckgerichteten Einsatz eines Polymerkettenverlängerers wird insbesondere die lineare Struktur der zugrundeliegenden Polymere modifiziert, einhergehend mit einer Erhöhung des zugrundeliegenden Molekulargewichts.

Durch die Zugabe der vorgenannten Polymerkettenmodifizierer, insbesondere des Peroxids, vorzugsweise des organischen Peroxids, aber auch des Kettenverlängerers bzw. Styrol/(Meth)Acrylat-Copolymers wird sozusagen eine Reaktivextrusion eingeleitet bzw. ermöglicht, insbesondere einhergehend mit einer entsprechenden chemischen Modifizierung der Mischung (wie beispielsweise einer peroxidischen Vernetzung der Mischung), was auch zu einer Erhöhung der Schmelzstabilität führt (was wiederum eine verbesserte Weiterverarbeitung zu Flachkörpern bzw. entsprechenden Extrudaten führt, insbesondere in Form von plattenförmigen Formkörpern, wie den zuvor angeführten Hohlprofilplatten bzw. Hohlkammerplatten, insbesondere Hohlkammerstegplatten, aber auch im Hinblick auf folienförmige Ausbildungen des Flachkörpers).

Insbesondere kann es im Rahmen der vorliegenden Erfindung somit vorgesehen sein, dass der reaktive Polymerkettenmodifizierer [Komponente (iv)] ausgewählt wird aus der Gruppe von (1) Polymerisationsinitiatoren (Radikalstartern), insbesondere Peroxiden, vorzugsweise organischen Peroxiden, und/oder Azoverbindungen, vorzugsweise Azoisobutyronitril (AIBN), (2) Styrol/(Meth)Acrylat-Copolymeren, insbesondere modifizierten und/oder reaktiven Styrol/(Meth)Acrylat-Copolymeren, (3) mit Glycidylmethacrylat (GMA) oder Acrylsäure (AS) oder Maleinsäureanhydrid (MSA) gepfropfte Polymere oder Copolymere, vorzugsweise mit Glycidylmethacrylat (GMA) gepfropfte Polymere oder Copolymere, sowie (4) deren Mischungen oder Kombinationen.

Insbesondere kann es dabei vorgesehen sein, dass der reaktive Polymerkettenmodifizierer [Komponente (iv)] ausgewählt wird aus der Gruppe von Polymerisationsinitiatoren, insbesondere Peroxiden, vorzugsweise organischen Peroxiden.

Insbesondere kann als reaktiver Polymerkettenmodifizierer [Komponente (iv)] ein Polymerisationsinitiator in Form eines Peroxids, insbesondere organischen Peroxids eingesetzt wird, wie zuvor angeführt.

Was das erfindungsgemäße Verfahren weiterhin anbelangt, so kann das Verfahren, insbesondere Verfahrensschritt (a), mittels Reaktivextrusion durchgeführt werden. Insbesondere kann somit in Verfahrensschritt (a) die eingesetzte Mischung mittels Reaktivextrusion in die Schmelze überführt werden und zu den partikulären Formkörpern verarbeitet werden. Die erfindungsgemäß gegebenenfalls vorgesehene Reaktivextrusion wird insbesondere durch die Verwendung des reaktiven Polymerkettenmodifizierers gemäß Komponente (iv) bedingt.

Im Rahmen der vorliegenden Erfindung kann es insbesondere vorgesehen sein, dass die Mischung aus der Komponente (i), Komponente (ii), gegebenenfalls Komponente (iii) und gegebenenfalls Komponente (iv) besteht; oder dass die Mischung aus der Komponente (i), Komponente (ii), gegebenenfalls Komponente (iii) und Komponente (iv) besteht; oder dass die Mischung aus der Komponente (i), Komponente (ii), Komponente (iii) und Komponente (iv) besteht.

Demgegenüber kann es im Rahmen der vorliegenden Erfindung auch vorgesehen sein, dass die Kunststoffzusammensetzung bzw. Mischung neben den vorgenannten Komponenten weitere Inhaltsstoffe bzw. Komponenten aufweist:
In diesem Zusammenhang kann die Mischung mindestens einen Füllstoff (Additiv), insbesondere anorganischen und/oder mineralischen Füllstoff (Additiv), vorzugsweise Talkum, Kreide und/oder Magnesium- und/oder Calciumcarbonat, [Komponente (v)] enthalten. Hierdurch können die rheologischen Eigenschaften der Schmelze weiterführend eingestellt werden. Insbesondere kann die Viskosität der Schmelze erhöht werden. Im Allgemeinen genügen dabei insbesondere aufgrund der speziell vorliegenden Mischung mit den diesbezüglichen Eigenschaften schon geringe Mengen an Additiv, so dass die Verfahrensdurchführung hierdurch nicht beeinträchtigt wird.

Erfindungsgemäß kann es insbesondere vorgesehen sein, dass der Mischung mindestens ein Füllstoff (Additiv), insbesondere anorganischer und/oder mineralischer Füllstoff (Additiv), vorzugsweise Talkum, Kreide und/oder Magnesium- und/oder Calciumcarbonat, [Komponente (v)] zugegeben wird. Hierzu sollte der Füllstoff vorzugsweise gleichmäßig in die Mischung eingearbeitet bzw. inkorporiert werden.

Im Allgemeinen kann die Mischung den Füllstoff (Additiv) [Komponente (v)] in Mengen im Bereich von 0,001 Gew.-% bis 20 Gew.-%, insbesondere im Bereich von 0,01 Gew.-% bis 15 Gew.-%, vorzugsweise im Bereich von 0,05 Gew.-% bis 10 Gew.-%, bevorzugt im Bereich von 0,05 Gew.-% bis 5 Gew.-%, bezogen auf die Mischung, enthalten. Dabei sollten die vorgenannten Mengenangaben derart gewählt werden, dass in der Summe, gegebenenfalls unter Einbezug optionaler weiterer Inhaltsstoffe, 100 Gew.-% resultieren.

Weiterhin kann die Mischung mindestens einen Hilfsstoff, ausgewählt aus der Gruppe von Verarbeitungshilfsmitteln, Gleitmitteln, wie niedermolekularen Amiden, Estern bzw. Wachsen; Dispergierhilfsmitteln (Dispergatoren), Tensiden oder oberflächenaktiven Stoffen; Entschäumern; Rheologiemodifizierern; Bindemitteln; Bioziden; Markerstoffen; Farbstoffen, insbesondere Farbpigmenten; UV-Absorbern; Anticloggingmitteln und Stabilisatoren sowie deren Mischungen und Kombinationen [Komponente (vi)] enthalten. Insbesondere kann der Mischung mindestens ein Hilfsstoff, ausgewählt aus der Gruppe von Verarbeitungshilfsmitteln, Gleitmitteln, wie niedermolekularen Amiden, Estern bzw. Wachsen; Dispergierhilfsmitteln (Dispergatoren), Tensiden oder oberflächenaktiven Stoffen, Entschäumern, Rheologiemodifizierern, Bindemitteln, Bioziden, Markerstoffen, Farbstoffen, insbesondere Farbpigmenten, UV-Absorbern, Anticloggingmitteln und Stabilisatoren sowie deren Mischungen und Kombinationen, [Komponente (vi)] zugegeben werden. Diesbezüglich sollte der Hilfsstoff vorzugsweise gleichmäßig in die Mischung eingearbeitet bzw. inkorporiert werden.

Erfindungsgemäß ist es dabei von Vorteil, wenn die Mischung den Hilfsstoff [Komponente (vi)] in Mengen im Bereich von 0,0001 Gew.-% bis 15 Gew.-%, insbesondere im Bereich von 0,001 Gew.-% bis 10 Gew.-%, vorzugsweise im Bereich von 0,01 Gew.-% bis 5 Gew.-%, bezogen auf die Mischung, enthält, insbesondere wobei die vorgenannten Mengenangaben derart gewählt werden, dass in der Summe, gegebenenfalls unter Einbezug optionaler weiterer Inhaltsstoffe, 100 Gew.-% resultieren.

Als Verarbeitungshilfsmittel bzw. Gleitmittel können insbesondere Zubereitungen eingesetzt werden, wie sie unter der Produktbezeichnung Loxiol® 8315 bzw. Loxiol® E Spez. P bzw. Loxiol® P728 bzw. Loxiol® P861 der Fa. Emery Oleo Chemicals GmbH, Crodamide™ BR bzw. Crodamide™ ER der Fa. Croda und Behensäureamid BR bzw. Erucasäureamid BR der Fa. Avokal GmbH vertrieben werden.

Gemäß einer erfindungsgemäßen Ausführungsform kann es zudem vorgesehen sein, dass die Mischung bzw. erfindungsgemäß eingesetzte Kunststoffzusammensetzung zumindest im Wesentlichen lösemittelfrei ist bzw. zumindest im Wesentlichen lösemittelfrei ausgebildet wird. In diesem Zusammenhang kann es insbesondere vorgesehen sein, dass Verfahrensschritt (a), und/oder Verfahrensschritt (b), insbesondere Verfahrensschritt (a), vorzugsweise das Gesamtverfahren, zumindest im Wesentlichen unter Ausschluss bzw. ohne Zugabe von Lösemitteln durchgeführt wird. Hierdurch wird neben umweltspezifischen Aspekten auch die Kosteneffizienz des erfindungsgemäßen Verfahrens weiterführend verbessert.

Was die Verwendung eines reaktiven Polymerkettenmodifizierers [Komponente (iv)] anbelangt, so kann diesbezüglich in Verfahrensschritt (a) in Form einer einstufigen Verfahrensführung bzw. eines einstufigen Compoundings verfahren werden, wonach der reaktive Polymerkettenmodifizierer, insbesondere in Form des Peroxids, vorzugsweise organischen Peroxids, aber auch in Form des Kettenverlängerers, gemeinsam bzw. zusammen mit den weiteren Komponenten der Mischung in Verfahrensschritt (a) verarbeitet bzw. extrudiert wird (d. h. gemeinsam mit den Komponenten (i), (ii) und gegebenenfalls (iii)).

Gemäß einer weiteren, erfindungsgemäß bevorzugten Ausführungsform kann demgegenüber auch derart vorgegangen werden, dass in Verfahrensschritt (a) eine mehr- bzw. zweistufige Verfahrensführung bzw. ein mehr- bzw. zweistufiges Compounding unter Verwendung des Polymerkettenmodifizierers [Komponente (iv)] durchgeführt wird. Hierzu kann insbesondere in einer ersten Stufe von Verfahrensschritt (a) bzw. einer ersten Compounding-Stufe eine vorgeschaltete Verarbeitung bzw. Vermischung, insbesondere in Form einer vorgeschalteten Reaktivextrusion, zum Erhalt einer Vormischung des Polymerkettenmodifizierers [Komponente (iv)] mit dem Polylactid [Komponente (i)] und/oder dem Polybutylensuccinat [Komponente (ii)], vorzugsweise mit dem Polylactid [Komponente (ii)], durchgeführt werden, insbesondere wobei gleichzeitig eine entsprechende Polymerisationsreaktion vorliegt bzw. erfolgt. Nachfolgend kann dann die so erhaltene Vormischung (mit den diesbezüglichen Reaktionsprodukten) im Rahmen einer zweiten Stufe von Verfahrensschritt (a) bzw. einer zweiten Compounding-Stufe mit den weiteren Komponenten zusammengeführt werden, insbesondere in Form einer Extrusion, um auf diese Weise die in Rede stehende (Gesamt-)Mischung zu erhalten.

Für den speziellen Fall der Herstellung einer Vormischung auf Basis des Polymerkettenmodifizierers [Komponente (iv)] mit dem Polylactid [Komponente (i)] insbesondere in einer vorgeschalteten Reaktivextrusion kann somit nachfolgend ein Zusammenführen der Vormischung insbesondere im Rahmen einer weiteren Extrusionsstufe mit dem Polybutylensuccinat [Komponente (ii)] und dem gegebenenfalls eingesetzten weiteren Polyester, wie zuvor definiert, insbesondere dem gegebenenfalls eingesetzten Polybutylenadipat-terephthalat bzw. Polybutylensuccinat-terephthalat bzw. Polybutylensebacat-terephthalat (PBSeT) bzw. Polyhydroxybutyrat (PHB) bzw. Polyhydroxyvalerat (PHV) bzw. Polyhydroxybutyrat-Polyhydroxyvalerat-Copolymer (PHBV bzw. PHB-PHV-Copolymer), [Komponente (iii)] erfolgen. Durch die Herstellung der in Rede stehenden Vormischung kann die Modifizierung der Mischung nochmals weiterführend kontrolliert bzw. maßgeschneidert werden.

Im Rahmen der vorliegenden Erfindung kann vor diesem Hintergrund somit insbesondere derart vorgegangen werden, dass in Verfahrensschritt (a) zunächst eine Vormischung von einer oder zwei der Komponenten (i) bis (iii) einerseits mit dem reaktiven Polymerkettenmodifizierer, insbesondere Peroxid, vorzugsweise organischen Peroxid, [Komponente (iv)] andererseits hergestellt und/oder bereitgestellt wird, insbesondere mit der Maßgabe, dass die Vormischung nicht sämtliche Komponenten (i) bis (iii) der Mischung gemäß Verfahrensschritt (a) und/oder mit der Maßgabe, dass die Vormischung mindestens eine der Komponenten (i) bis (iii) der Mischung gemäß Verfahrensschritt (a) nicht enthält, insbesondere wobei die Vormischung in eine vorzugsweise homogene Vormischungs-Schmelze überführt wird, insbesondere mittel Reaktivextrusion.

In diesem Zusammenhang kann es vorgesehen sein, dass in Verfahrensschritt (a) zunächst eine Vormischung des Polylactids [Komponente (i)] und/oder des Polybutylensuccinats [Komponente (ii)], vorzugsweise des Polylactids [Komponente (i)], einerseits mit dem reaktiven Polymerkettenmodifizierer, insbesondere Peroxid, vorzugsweise organischen Peroxid, [Komponente (iv)] andererseits hergestellt und/oder bereitgestellt wird, insbesondere wobei die Vormischung in eine vorzugsweise homogene Vormischungs-Schmelze überführt wird. Erfindungsgemäß kann es dabei auch vorgesehen sein, dass die der Vormischung insbesondere die vorgenannten Füllstoffe oder Additive, zugegeben werden.

Erfindungsgemäß kann es vorgesehen sein, dass die Vormischung, insbesondere die Vormischungs-Schmelze, zu einer Vielzahl von insbesondere partikulären Vormischungs-Formkörpern verarbeitet wird.

Erfindungsgemäß kann die Vormischung mit den weiteren Komponenten, insbesondere den weiteren Komponenten (i) bis (ii), welche nicht Bestandteil der Vormischung sind, zusammengeführt werden, insbesondere so dass die Mischung gemäß Verfahrensschritt (a) erhalten wird, insbesondere wobei das Zusammenführen ausgehend von der Vormischungs-Schmelze oder ausgehend von den Vormischungs-Formkörpern durchgeführt wird, insbesondere mittels Extrusion.

Im Allgemeinen kann die Herstellung und/oder Bereitstellung der Vormischungs-Schmelze und/oder der Vormischungs-Formkörper mittels (Vormischungs-) Extrusion, insbesondere (Vormischungs)-Reaktivextrusion, erfolgen.

Wie zuvor angeführt, können durch die Bereitstellung einer entsprechenden Vormischung die Material- und Anwendungseigenschaften der Mischung gemäß Verfahrensschritt (a) weiterführend eingestellt werden, insbesondere im Hinblick auf die zugrundeliegende Schmelzefestigkeit und Dehnviskosität.

Was das erfindungsgemäße Verfahren darüber hinaus im Allgemeinen anbelangt, so kann in Verfahrensschritt (a), insbesondere bei der Extrusion, vorzugsweise bei der Reaktivextrusion, bei Temperaturen im Bereich von 130 °C bis 220 °C, insbesondere im Bereich von 140 °C bis 210 °C, vorzugsweise im Bereich von 145 °C bis 205 °C, bevorzugt im Bereich von 150 °C bis 200 °C, verfahren werden.

Insbesondere kann in Verfahrensschritt (a), insbesondere bei der Extrusion, vorzugsweise bei der Reaktivextrusion, die Überführung der Mischung in die Schmelze und/oder die Verarbeitung der Schmelze zu den insbesondere partikulären Formkörpern bei Temperaturen im Bereich von 140 °C bis 215 °C, insbesondere im Bereich von 140 °C bis 210 °C, vorzugsweise im Bereich von 145 °C bis 205 °C, bevorzugt im Bereich von 150 °C bis 200 °C, durchgeführt werden.

In diesem Zusammenhang kann bei der Verwendung von Extrudern, insbesondere Schneckenextrudern, oder dergleichen auch mit entsprechenden Temperaturprofilen verfahren werden, wobei der Fachmann jederzeit in der Lage ist, die diesbezüglichen Temperaturprofile entsprechend auszuwählen bzw. einzustellen.

Erfindungsgemäß kann in Verfahrensschritt (a) ein Extruder, insbesondere Schneckenextruder, vorzugsweise Doppelschneckenextruder, eingesetzt werden. Beispielsweise können solche Extruder verwendet werden, welche mindestens zwei Heizzonen aufweisen. Zudem können die in Rede stehenden Extruder entsprechende Eingangszonen bzw. "Trichter" sowie weiterführende Mischzonen bzw. Kompressionszonen aufweisen, was dem Fachmann grundsätzlich bekannt ist.

Was die in Verfahrensschritt (a) erhaltenen Formkörper anbelangt, so sollten diese im Rahmen der vorliegenden Erfindung zumindest im Wesentlichen gleichförmig und/oder gleichartig und/oder homogen ausgebildet sein, insbesondere was deren jeweilige Form, Größe sowie Verteilung der Polymere bzw. Homogenität der Mischung in den zugrundeliegenden Formkörpern anbelangt. Insbesondere kann im Rahmen der vorliegenden Erfindung ein Granulat der Formkörper bereitgestellt werden, welches auf einer Vielzahl der erhaltenen Granalien basiert.

Was weiterhin Verfahrensschritt (b) des erfindungsgemäßen Verfahrens anbelangt, so kann in Verfahrensschritt (b), insbesondere bei der Extrusion, bei Temperaturen im Bereich von 140 °C bis 230 °C, insbesondere im Bereich von 145 °C bis 220 °C, vorzugsweise im Bereich von 150 °C bis 210 °C, bevorzugt im Bereich von 155 °C bis 205 °C, verfahren werden. Insbesondere kann in Verfahrensschritt (b), insbesondere bei der Extrusion, die Weiterverarbeitung der insbesondere partikulären Formkörper zu dem Flachkörper bei Temperaturen im Bereich von 140 °C bis 230 °C, insbesondere im Bereich von 145 °C bis 220 °C, vorzugsweise im Bereich von 150 °C bis 210 °C, bevorzugt im Bereich von 155 °C bis 205 °C, durchgeführt werden.

Dabei kann auch in Verfahrensschritt (b) unter Anwendung entsprechender Temperaturprofile oder dergleichen verfahren werden.

Insbesondere kann in Verfahrensschritt (b) ein Extruder, eingesetzt werden. Insbesondere kann in Verfahrensschritt (b) eine Profilextrusion, insbesondere Hohlkammerprofilextrusion; Folienextrusion, insbesondere Flachfolienextrusion; und/oder Schaumextrusion durchgeführt werden. Gleichermaßen kann in Verfahrensschritt (b), insbesondere bei der Extrusion, somit die Weiterverarbeitung der partikulären Formkörper zu dem Flachkörper mittels Profilextrusion, insbesondere Hohlkammerprofilextrusion; Folienextrusion, insbesondere Flachfolienextrusion; und/oder Schaumextrusion durchgeführt werden. Beispielsweise kann hierzu ein Hohlkammerprofilextruder eingesetzt werden.

Insbesondere ist ein Vorteil der vorliegenden Erfindung darin zu sehen, dass die Extrusionsvorrichtungen und -anlagen sowohl in Verfahrensschritt (a) als auch Verfahrensschritt (b) des erfindungsgemäßen Verfahrens herkömmliche Extrusionsvorrichtungen und -anlagen sein können. Dabei können im Rahmen der vorliegenden Erfindung grundsätzlich geringere Verarbeitungstemperaturen als bei herkömmlichen Kunststoffen vorliegen, beispielsweise was die Aufschmelztemperatur bzw. die Düsentemperatur der zugrundeliegenden Vorrichtungen anbelangt. Insbesondere kann bei Verarbeitungstemperaturen verfahren werden, welche deutlich geringer sind als diejenigen, welche für konventionelle Polyolefine bzw. petrochemische Standardkunststoffe erforderlich sind. Auch von daher geht dies mit einer Energie- bzw. Ressourceneinsparung einher.

Darüber hinaus ist in Bezug auf den Flachkörper, wie er im Rahmen des erfindungsgemäßen Verfahrens erhalten wird, Folgendes anzuführen:
So können die Ausbildung bzw. Formgebung mit den zugrundeliegenden Ausmaßen des Flachkörpers in großen Bereich variieren. Erfindungsgemäß weist der im Rahmen des erfindungsgemäßen Verfahrens bereitgestellte Flachkörper insbesondere folgende Eigenschaften auf.

Insbesondere kann der in Verfahrensschritt (b) erhaltene Flachkörper als solcher eine Dicke im Bereich von 50 µm bis 100 mm, insbesondere im Bereich von 75 µm bis 50 mm, vorzugsweise im Bereich von 100 µm bis 10 mm, bevorzugt im Bereich von 150 µm bis 5 mm, besonders bevorzugt im Bereich von 200 µm bis 3 mm, aufweisen.

Im Allgemeinen kann erfindungsgemäß in Verfahrensschritt (b) der Flachkörper kontinuierlich und/oder durchbrechungsfrei ausgebildet werden (z.B. als kontinuierlich bzw. durchbrechungsfreie Platte oder Folie). Demgegenüber kann in Verfahrensschritt (b) der Flachkörper aber auch diskontinuierlich bzw. mit einer Vielzahl von Durchbrechungen, Löchern, Öffnungen oder dergleichen ausgebildet bzw. versehen werden. In diesem Zusammenhang kann der Flachkörper netzförmig bzw. in Form eines insbesondere extrudierten Netzes ausgebildet werden. Diesbezüglich kann eine flächige Ausbildung oder aber eine schlauchförmige Ausbildung vorgesehen sein.

Gemäß der vorliegenden Erfindung kann der in Verfahrensschritt (b) erhaltene Flachkörper als Platte und/oder plattenförmiger Flachkörper, insbesondere Flachplatte, vorzugsweise als Profilplatte, bevorzugt Hohlprofilplatte, und/oder als Hohlkammerplatte, insbesondere Hohlkammerstegplatte, ausgebildet sein. Derartige plattenförmige Gebilde weisen bei gleichzeitig definiertem Flächengewicht eine hohe Stabilität auf, so dass eine gute Eignung insbesondere für den Verpackungsbereich vorliegt. Zudem weisen die auf diese Weise ausgebildeten Flachkörper auch gute Umformungs- bzw. Knickeigenschaften auf, so dass diese beispielsweise zu kartonartigen Behältnissen bzw. Verpackungen verarbeitet werden können.

Insbesondere im Hinblick auf die Ausbildung des Flachkörpers in Form einer Platte ist es im Rahmen der vorliegenden Erfindung bevorzugt, dass der Flachkörper eine Dicke im Bereich von 0,25 mm bis 100 mm, insbesondere im Bereich von 0,5 mm bis 50 mm, vorzugsweise im Bereich von 0,75 mm bis 10 mm, bevorzugt im Bereich von 1 mm bis 5 mm, besonders bevorzugt im Bereich von 1,5 mm bis 3,5 mm, aufweist.

Insbesondere im Hinblick auf die Ausbildung des Flachkörpers als Profilplatte, bevorzugt Hohlprofilplatte, und/oder als Hohlkammerplatte, insbesondere Hohlkammerstegplatte, kann es erfindungsgemäß vorgesehen sein, dass der Flachkörper Stege und/oder Verstrebungen und/oder Decklagen aufweist. In diesem Zusammenhang können die Stege und/oder Verstrebungen und/oder Decklagen, unabhängig voneinander, eine Dicke, insbesondere eine Wandstärke, im Bereich von 10 µm bis 3.000 µm, insbesondere im Bereich von 20 µm bis 2.000 µm, vorzugsweise im Bereich von 50 µm bis 1.500 µm, bevorzugt im Bereich von 100 µm bis 1.000 µm, aufweisen.

Im Rahmen der vorliegenden Erfindung kann es demgegenüber auch vorgesehen sein, dass der erhaltene Flachkörper als Folie oder folienförmiger Flachkörper, insbesondere Flachfolie, ausgebildet wird. Die so erhaltenen Folien weisen insbesondere auch eine hohe Reißfestigkeit und Biegsamkeit auf.

In diesem Zusammenhang kann es in Bezug auf die erfindungsgemäße Ausbildung des Flachkörpers als Folie bzw. folienartiger Flachkörper vorgesehen sein, dass der Flachkörper eine Dicke im Bereich 50 µm bis 1.500 µm, insbesondere im Bereich von 75 µm bis 1.250 µm, vorzugsweise im Bereich von 100 µm bis 1.000 µm, bevorzugt im Bereich von 150 µm bis 900 µm, besonders bevorzugt im Bereich von 200 µm bis 750 µm, aufweist.

Darüber hinaus weist der insbesondere als Folie oder folienförmiger Flachkörper, vorzugsweise Flachfolie, ausgebildete Flachkörper folgende Eigenschaften auf:
- Insbesondere kann der Flachkörper ein Zug-E-Modul (Young's modulus) im Bereich von 500 MPa bis 3.500 MPa, insbesondere im Bereich von 1.000 MPa bis 3.000 MPa, vorzugsweise im Bereich von 1.250 MPa bis 2.500 MPa, aufweisen. Das Zug-E-Modul kann insbesondere gemäß der DIN EN ISO 527-1 bestimmt werden.
- Weiterhin kann der Flachkörper eine Zugfestigkeit (tensile strength) im Bereich von 20 MPa bis 100 MPa, insbesondere im Bereich von 25 MPa bis 80 MPa, vorzugsweise im Bereich von 25 MPa bis 60 MPa, bevorzugt im Bereich von 30 MPa bis 50 MPa, aufweisen. Die Zugfestigkeit kann insbesondere gemäß der DIN EN ISO 527-1 bestimmt werden.

- Darüber hinaus kann der Flachkörper eine Dehnung bei Zugfestigkeit (tensile elongation) im Bereich von 1 % bis 20 %, insbesondere im Bereich von 1,5 % bis 15 %, vorzugsweise im Bereich von 2 % bis 10 %, aufweisen. Die Dehnung bei Zugfestigkeit kann gleichermaßen gemäß der DIN EN ISO 527-1 bestimmt werden.
- Zudem kann der Flachkörper eine Bruchdehnung (tensile elongation at break) im Bereich von 5 % bis 500 %, insbesondere im Bereich von 7,5 % bis 400 %, vorzugsweise im Bereich von 10 % bis 300 %, aufweisen. Die Bruchdehnung kann gleichermaßen gemäß der DIN EN ISO 527-1 bestimmt werden.
- Zudem kann der Flachkörper eine Durchstoßfestigkeit (puncture resistance) im Bereich von 20 N/mm bis 500 N/mm, insbesondere im Bereich von 40 N/mm bis 400 N/mm, aufweisen. Die Durchstoßfestigkeit kann mit der ASTM D3420 bestimmt werden.

Zudem weist der insbesondere als Folie oder folienförmiger Flachkörper, insbesondere Flachfolie, ausgebildete Flachkörper einen geringen "Neck-In"-Wert auf. Im Allgemeinen beträgt der "Neck-In" bzw. das Einschnüren des insbesondere in Form einer Folie vorliegenden Flachkörpers bei dessen Herstellung höchstens 15 %, insbesondere höchstens 10 %, vorzugsweise höchstens 6 %, bevorzugt höchstens 4 %, bezogen auf die Breite des in Form einer Folie vorliegenden Flachkörpers insbesondere bei Austritt aus der Extrusionsvorrichtung bzw. bezogen auf die Düsenbreite bei der zugrundeliegenden (Folien-)Extrusion. Hierzu kann auch auf obige Ausführungen verwiesen werden.

Was darüber hinaus die in Verfahrensschritt (a) eingesetzte Mischung als solche bzw. die Mischung gemäß Verfahrensschritt (a) anbelangt, so kann diese einen Schmelzindex (Schmelzflussrate, MFR, melt mass flow-rate) [230 °C / 2,16 kg] im Bereich von 2 g/10min bis 50 g/10min, insbesondere im Bereich von 3 g/10min bis 40 g/10min, vorzugsweise im Bereich von 4 g/10min bis 30 g/10min, bevorzugt im Bereich von 4,5 g/10min bis 25 g/10min, besonders bevorzugt im Bereich von 5 g/10min bis 20 g/10min, aufweisen. Der Schmelzindex kann insbesondere gemäß der ASTM D1238 bzw. gemäß der DIN EN ISO 1133-1 bestimmt werden. Die Mischung gemäß Verfahrensschritt (a) weist somit auch in dieser Hinsicht optimierte Verarbeitungseigenschaften auf, insbesondere im Hinblick auf die erfindungsgemäß bevorzugt eingesetzten Extrusionsprozesse in Verfahrensschritt (a) sowie in Verfahrensschritt (b). Auch von daher weist die Mischung gute Fließeigenschaften in der Schmelze auf. Insgesamt wird auch hierdurch eine gute Rheologie in der Schmelze gewährleistet.

Im Rahmen der vorliegenden Erfindung ist es zudem bevorzugt, wenn die insbesondere partikulären Formkörper bzw. der Flachkörper jeweils einen Peroxidgehalt von höchstens 0,2 Gew.-%, insbesondere weniger als 0,2 Gew.-%, insbesondere höchstens 0,15 Gew.-%, vorzugsweise höchstens 0,1 Gew.-%, jeweils bezogen auf den partikulären Formkörper und/oder den Flachkörper, aufweisen. Die in Rede stehenden Peroxidgehalte beziehen sich dabei insbesondere auf das resultierende (End-)Produkt und somit nach etwaiger Reaktion der Komponenten. Infolge der allenfalls geringen Peroxidgehalte bzw. -anteile weisen die bereitgestellten Formkörper bzw. Flachkörper eine Eignung als Verpackungslösungen für den Bereich der Lebensmittel, insbesondere da diesbezüglich vorgegebene Richt- bzw. Grenzwerte eingehalten werden.

Der im Rahmen des erfindungsgemäßen Verfahrens bereitgestellte Flachkörper weist im Allgemeinen zahlreiche Einsatz- bzw. Anwendungsmöglichkeiten auf:
So kann der Flachkörper als Verpackung, insbesondere Lebensmittelverpackung und/oder Industrieverpackung, vorzugsweise Transport-, Um-, Service-, Bulk-, Geschenk-, Retail- und/oder Transportverpackung; Container; Box; Behälter; Ersatzprodukt für Karton und/oder Kartonagen; Halbzeug insbesondere für Tiefzieh- oder Blasformanwendungen; Verkleidungs- und/oder Abdeckmaterial; Schildmaterial und/oder Schild, insbesondere Werbeschild; Aufhänger und/oder Aufsteller; Material für den Baubereich; Material für den Interieur- und/oder Exterieurbereich; Schutzmaterial, insbesondere Schutzverpackung und/oder Schutzfolie; oder dergleichen eingesetzt bzw. ausgebildet werden. Hierbei eignet sich der Flachkörper auch für den Bereich der Verpackungen für Pflanzen, wie Zierpflanzen und/oder Schnittblumen.

Wie zuvor angeführt, zeichnen sich die insbesondere partikulären Formkörper bzw. zeichnet sich der Flachkörper dadurch aus, dass jeweils eine biologische Abbaubarkeit bzw. Biodegradierbarkeit vorliegt, insbesondere unter Abbau- und/oder Kompostierungsbedingungen und/oder -anforderungen gemäß der europäischen Norm (DIN EN 13432 oder DIN EN 14995) oder gemäß der ASTM D6400. In diesem Zusammenhang kann insbesondere zur Analyse des im Rahmen der Kompostierung freigesetzten Kohlenstoffdioxids auf die DIN EN ISO 14855-1 zurückgegriffen werden.

Im Rahmen der vorliegenden Erfindung wird somit insgesamt ein leistungsfähiges Verfahren bereitgestellt, anhand dessen produktionstechnische Vorteile im Hinblick auf die Verarbeitung spezieller bioabbaubarer Kunststoffmischungen zu Formkörpern bzw. Flachkörpern gewährleistet werden, was seinen entsprechenden Niederschlag auch in den resultierenden (End-)Produkten findet.

Darüber hinaus betrifft die vorliegende Erfindung - gemäß einem **weiteren** Aspekt der vorliegenden Erfindung - auch einen Flachkörper, insbesondere Platte oder Folie, vorzugsweise biologisch abbaubaren bzw. biodegradierbaren Flachkörper, wobei der Flachkörper erhältlich ist durch das erfindungsgemäße Verfahren bzw. wobei der Flachkörper durch das Verfahren nach der Erfindung, wie zuvor definiert, erhalten ist.

In diesem Zusammenhang betrifft die vorliegende Erfindung auch einen Flachkörper als solchen, insbesondere Platte oder Folie, vorzugsweise einen biologisch abbaubaren bzw. biodegradierbaren Flachkörper, insbesondere wie zuvor definiert, wobei der Flachkörper eine Mischung von (i) mindestens einem Polylactid (PLA); (ii) mindestens einem Polybutylensuccinat (PBS); (iii) gegebenenfalls mindestens einem weiteren Polyester aus der Gruppe von (a) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT), (β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie (γ) Mischungen von (α) und (β); und (iv) gegebenenfalls mindestens einem reaktiven Polymerkettenmodifizierer (Polymerkettenmodifizierungsmittel) und/oder deren Reaktionsprodukt, insbesondere Polymerisationsprodukt, vorzugsweise Copolymerisationsprodukt, aufweist oder hieraus besteht.

Was den erfindungsgemäßen Flachkörper als solchen anbelangt, so kann die diesbezügliche Mischung das Polylactid [Komponente (i)] in Mengen im Bereich von 10 Gew.-% bis 90 Gew.-%, insbesondere im Bereich von 15 Gew.-% bis 80 Gew.-%, vorzugsweise im Bereich von 20 Gew.-% bis 60 Gew.-%, bevorzugt im Bereich von 25 Gew.-% bis 50 Gew.-%, bezogen auf die Mischung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Zudem kann die Mischung das Polybutylensuccinat [Komponente (ii)] in Mengen im Bereich von 10 Gew.-% bis 90 Gew.-%, insbesondere im Bereich von 20 Gew.-% bis 85 Gew.-%, vorzugsweise im Bereich von 40 Gew.-% bis 80 Gew.-%, bevorzugt im Bereich von 50 Gew.-% bis 70 Gew.-%, bezogen auf die Mischung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Zudem kann die Mischung den weiteren Polyester [Komponente (iii)] in Mengen im Bereich von 0 Gew.-% bis 50 Gew.-%, insbesondere im Bereich von 0 Gew.-% bis 20 Gew.-%, vorzugsweise im Bereich von 0 Gew.-% bis 10 Gew.-%, bevorzugt im Bereich von 2 Gew.-% bis 8 Gew.-%, bezogen auf die Mischung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Zudem kann die Mischung den reaktiven Polymerkettenmodifizierer [Komponente (iv)] in Mengen im Bereich von 0 Gew.-% bis 2 Gew.-%, insbesondere im Bereich von 0 Gew.-% bis 1,5 Gew.-%, vorzugsweise im Bereich von 0 Gew.-% bis 1 Gew.-%, bevorzugt im Bereich von 0,01 Gew.-% bis 0,5 Gew.-%, bezogen auf die Mischung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Erfindungsgemäß kann es in diesem Zusammenhang vorgesehen sein, dass die Mischung (i) mindestens ein Polylactid (PLA), (ii) mindestens ein Polybutylensuccinat (PBS), (iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und (iv) mindestens einen reaktiven Polymerkettenmodifizierer (Polymerkettenmodifizierungsmittel) aufweist oder hieraus besteht.

Weiterhin kann es erfindungsgemäß vorgesehen sein, dass die Mischung (i) mindestens ein Polylactid (PLA), (ii) mindestens ein Polybutylensuccinat (PBS), (iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und (iv) mindestens einen reaktiven Polymerkettenmodifizierer (Polymerkettenmodifizierungsmittel) in Form eines organischen Peroxids aufweist oder hieraus besteht.

Insbesondere kann die Mischung (i) mindestens ein Polylactid (PLA), (ii) mindestens ein Polybutylensuccinat (PBS), (iii) mindestens einen weiteren Polyester, wie zuvor definiert, insbesondere mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und (iv) mindestens einen reaktiven Polymerkettenmodifizierer (Polymerkettenmodifizierungsmittel) in Form eines organischen Peroxids aufweisen oder hieraus bestehen. Im Rahmen der vorliegenden Erfindung kann es insbesondere vorgesehen sein, dass die Mischung umfasst: (i) mindestens ein Polylactid (PLA), insbesondere in Mengen im Bereich von 10 Gew.-% bis 90 Gew.-%, insbesondere im Bereich von 15 Gew.-% bis 80 Gew.-%, vorzugsweise im Bereich von 20 Gew.-% bis ys60 Gew.-%, bevorzugt im Bereich von 25 Gew.-% bis 50 Gew.-%, bezogen auf die Mischung; (ii) mindestens ein Polybutylensuccinat (PBS), insbesondere in Mengen im Bereich von 10 Gew.-% bis 90 Gew.-%, insbesondere im Bereich von 20 Gew.-% bis 85 Gew.-%, vorzugsweise im Bereich von 40 Gew.-% bis 80 Gew.-%, bevorzugt im Bereich von 50 Gew.-% bis 70 Gew.-%, bezogen auf die Mischung; (iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), insbesondere in Mengen im Bereich von 0 Gew.-% bis 50 Gew.-%, insbesondere im Bereich von 0 Gew.-% bis 20 Gew.-%, vorzugsweise im Bereich von 0 Gew.-% bis 10 Gew.-%, bevorzugt im Bereich von 2 Gew.-% bis 8 Gew.-%, bezogen auf die Mischung; und (iv) gegebenenfalls mindestens einen reaktiven Polymerkettenmodifizierer (Polymerkettenmodifizierungsmittel), insbesondere in Form eines organischen Peroxids, insbesondere in Mengen im Bereich von 0 Gew.-% bis 2 Gew.-%, insbesondere im Bereich von 0 Gew.-% bis 1,5 Gew.-%, vorzugsweise im Bereich von 0 Gew.-% bis 1 Gew.-%, bevorzugt im Bereich von 0,01 Gew.-% bis 0,5 Gew.-%, bezogen auf die Mischung, enthält, insbesondere wobei die vorgenannten Mengenangaben jeweils derart gewählt sind, dass in der Summe, gegebenenfalls unter Einbezug optionaler weiterer Inhaltsstoffe, 100 Gew.-% resultieren.

Was weiterhin den erfindungsgemäßen Flachkörper als solchen anbelangt, so kann der reaktive Polymerkettenmodifizierer [Komponente (iv)] ausgewählt sein aus der Gruppe von Polymerkettenverlängerern (Polymerkettenverlängerungsmitteln), Polymerkettenvernetzern (Polymerkettenvernetzungsmitteln) und Polymerkettenverzweigerer (Polymerkettenverzweigungsmitteln) sowie deren Mischungen oder Kombinationen.

In diesem Zusammenhang kann der reaktive Polymerkettenmodifizierer [Komponente (iv)] mindestens einen (1) Polymerisationsinitiator (Radikalstarter), insbesondere mindestens ein Peroxid, vorzugsweise organisches Peroxid, und/oder insbesondere mindestens eine Azoverbindung, vorzugsweise Azoisobutyronitril (AIBN), und/oder (2) mindestens ein Styrol/(Meth)Acrylat-Copolymer, insbesondere modifiziertes und/oder reaktives Styrol/(Meth)Acrylat-Copolymer, und/oder (3) mindestens ein mit Glycidylmethacrylat (GMA) oder Acrylsäure (AS) oder Maleinsäureanhydrid (MSA) gepfropftes Polymer oder Copolymer, vorzugsweise ein mit Glycidylmethacrylat (GMA) gepfropftes Polymer oder Copolymer, umfassen oder hieraus bestehen.

Insbesondere kann der reaktive Polymerkettenmodifizierer [Komponente (iv)] mindestens einen Polymerisationsinitiator (Radikalstarter), insbesondere mindestens ein Peroxid, vorzugsweise organisches Peroxid, umfassen oder hieraus bestehen.

Der reaktive Polymerkettenmodifizierer [Komponente (iv)] kann im Allgemeinen ausgewählt sein aus der Gruppe von (1) Polymerisationsinitiatoren (Radikalstartern), insbesondere Peroxiden, vorzugsweise organischen Peroxiden, und/oder Azoverbindungen, vorzugsweise Azoisobutyronitril (AIBN), (2) Styrol/(Meth)Acrylat-Copolymeren, insbesondere modifizierten und/oder reaktiven Styrol/(Meth)Acrylat-Copolymeren, (3) mit Glycidylmethacrylat (GMA) oder Acrylsäure (AS) oder Maleinsäureanhydrid (MSA) gepfropfte Polymere oder Copolymere, vorzugsweise mit Glycidylmethacrylat (GMA) gepfropfte Polymere oder Copolyme, sowie (4) deren Mischungen oder Kombinationen.

Zudem kann es sich auch in Bezug auf den Flachkörper nach der Erfindung derart verhalten, dass die Mischung aus der Komponente (i), Komponente (ii), gegebenenfalls Komponente (iii) und gegebenenfalls Komponente (iv) besteht oder dass die Mischung aus der Komponente (i), Komponente (ii), gegebenenfalls Komponente (iii) und Komponente (iv) besteht oder dass die Mischung aus der Komponente (i), Komponente (ii), Komponente (iii) und Komponente (iv) besteht.

Demgegenüber kann die Mischung gegebenenfalls aber auch mindestens einen Füllstoff (Additiv), insbesondere anorganischen und/oder mineralischen Füllstoff (Additiv), vorzugsweise Talkum, Kreide und/oder Magnesium- und/oder Calciumcarbonat, [Komponente (v)] enthalten.

Insbesondere kann in diesem Zusammenhang der Mischung mindestens ein Füllstoff (Additiv), insbesondere anorganischer und/oder mineralischer Füllstoff (Additiv), vorzugsweise Talkum, Kreide und/oder Magnesium- und/oder Calciumcarbonat, [Komponente (v)] zugegeben sein, insbesondere wobei der Füllstoff vorzugsweise gleichmäßig in die Mischung eingearbeitet und/oder inkorporiert ist.

Im Allgemeinen kann die Mischung den Füllstoff (Additiv) [Komponente (v)] in Mengen im Bereich von 0,001 Gew.-% bis 20 Gew.-%, insbesondere im Bereich von 0,01 Gew.-% bis 15 Gew.-%, vorzugsweise im Bereich von 0,05 Gew.-% bis 10 Gew.-%, bevorzugt im Bereich von 0,05 Gew.-% bis 5 Gew.-%, bezogen auf die Mischung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Insbesondere kann die Mischung weiterhin mindestens einen Hilfsstoff, ausgewählt aus der Gruppe von Verarbeitungshilfsmitteln, Gleitmitteln, wie niedermolekularen Amiden, Estern, Wachsen; Dispergierhilfsmitteln (Dispergatoren); Tensiden oder oberflächenaktiven Stoffen; Entschäumern; Rheologiemodifizierern; Bindemitteln; Bioziden; Markerstoffen; Farbstoffen, insbesondere Farbpigmenten; UV-Absorbern; Anticloggingmitteln und Stabilisatoren oder deren Mischungen und Kombinationen, [Komponente (vi)] enthalten.

Insbesondere kann der Mischung mindestens ein Hilfsstoff, ausgewählt aus der Gruppe von Verarbeitungshilfsmitteln, Gleitmitteln, wie niedermolekularen Amiden, Estern, Wachsen; Dispergierhilfsmitteln (Dispergatoren), Tensiden oder oberflächenaktiven Stoffen, Entschäumern, Rheologiemodifizierern, Bindemitteln, Bioziden, Markerstoffen, Farbstoffen, insbesondere Farbpigmenten, UV-Absorbern, Anticloggingmitteln und Stabilisatoren sowie deren Mischungen und Kombinationen, [Komponente (vi)] zugegeben sein, insbesondere wobei der Hilfsstoff vorzugsweise gleichmäßig in die Mischung eingearbeitet und/oder inkorporiert wird.

In diesem Zusammenhang kann die Mischung den Hilfsstoff [Komponente (vi)] in Mengen im Bereich von 0,0001 Gew.-% bis 15 Gew.-%, insbesondere im Bereich von 0,001 Gew.-% bis 10 Gew.-%, vorzugsweise im Bereich von 0,01 Gew.-% bis 5 Gew.-%, bezogen auf die Mischung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Wie zuvor angeführt, kann der Flachkörper eine Dicke im Bereich von 50 µm bis 100 mm, insbesondere im Bereich von 75 µm bis 50 mm, vorzugsweise im Bereich von 100 µm bis 10 mm, bevorzugt im Bereich von 150 µm bis 5 mm, besonders bevorzugt im Bereich von 200 µm bis 3 mm, aufweisen.

Im Allgemeinen kann der Flachkörper kontinuierlich und/oder durchbrechungsfrei ausgebildet sein. Demgegenüber kann der Flachkörper aber auch diskontinuierlich bzw. mit einer Vielzahl von Durchbrechungen, Löchern, Öffnungen oder dergleichen ausgebildet bzw. versehen sein. In diesem Zusammenhang kann es vorgesehen sein, dass der Flachkörper netzförmig bzw. in Form eines insbesondere extrudierten Netzes ausgebildet ist.

Erfindungsgemäß kann es insbesondere vorgesehen sein, dass der Flachkörper als Platte und/oder plattenförmiger Flachkörper, insbesondere Flachplatte, vorzugsweise als Profilplatte, bevorzugt Hohlprofilplatte, und/oder als Hohlkammerplatte, insbesondere Hohlkammerstegplatte, ausgebildet ist.

In diesem Zusammenhang kann der Flachkörper eine Dicke im Bereich von 0,25 mm bis 100 mm, insbesondere im Bereich von 0,5 mm bis 50 mm, vorzugsweise im Bereich von 0,75 mm bis 10 mm, bevorzugt im Bereich von 1 mm bis 5 mm, besonders bevorzugt im Bereich von 1,5 mm bis 3,5 mm, aufweisen.

Insbesondere im Hinblick auf die Ausbildung des Flachkörpers als Profilplatte, bevorzugt Hohlprofilplatte, und/oder als Hohlkammerplatte, insbesondere Hohlkammerstegplatte, kann es erfindungsgemäß vorgesehen sein, dass der Flachkörper Stege und/oder Verstrebungen und/oder Decklagen aufweist. In diesem Zusammenhang können die Stege und/oder Verstrebungen und/oder Decklagen, unabhängig voneinander, eine Dicke, insbesondere eine Wandstärke, im Bereich von 10 µm bis 3.000 µm, insbesondere im Bereich von 20 µm bis 2.000 µm, vorzugsweise im Bereich von 50 µm bis 1.500 µm, bevorzugt im Bereich von 100 µm bis 1.000 µm, aufweisen.

Zudem kann der Flachkörper in diesem Zusammenhang ein Flächengewicht im Bereich von 100 g/m² bis 2.000 g/m², insbesondere im Bereich von 100 g/m² bis 2.000 g/m², vorzugsweise im Bereich von 200 g/m² bis 1.600 g/m², bevorzugt im Bereich von 250 g/m² bis 1.400 g/m², besonders bevorzugt im Bereich von 300 g/m² bis 1.200 g/m², aufweisen.

Gemäß einer weiteren erfindungsgemäßen Ausführungsform kann der Flachkörper als Folie oder folienförmiger Flachkörper, insbesondere Flachfolie, ausgebildet sein.

In diesem Zusammenhang kann der Flachkörper eine Dicke im Bereich von 50 µm bis 1.500 µm, insbesondere im Bereich von 75 µm bis 1.250 µm, vorzugsweise im Bereich von 100 µm bis 1.000 µm, bevorzugt im Bereich von 150 µm bis 900 µm, besonders bevorzugt im Bereich von 200 µm bis 750 µm, aufweisen.

Insbesondere kann der Flachkörper ein Zug-E-Modul (Young's modulus) im Bereich von 500 MPa bis 3.500 MPa, insbesondere im Bereich von 1.000 MPa bis 3.000 MPa, vorzugsweise im Bereich von 1.250 MPa bis 2.500 MPa, aufweisen.

Weiterhin kann der Flachkörper eine Zugfestigkeit (tensile strength) im Bereich von 20 MPa bis 100 MPa, insbesondere im Bereich von 25 MPa bis 80 MPa, vorzugsweise im Bereich von 25 MPa bis 60 MPa, bevorzugt im Bereich von 30 MPa bis 50 MPa, aufweisen.

Darüber hinaus kann der Flachkörper eine Dehnung bei Zugfestigkeit (tensile elongation) im Bereich von 1 % bis 20 %, insbesondere im Bereich von 1,5 % bis 15 %, vorzugsweise im Bereich von 2 % bis 10 %, aufweisen.

Weiterhin kann der Flachkörper eine Bruchdehnung (tensile elongation at break) im Bereich von 5 % bis 500 %, insbesondere im Bereich von 7,5 % bis 400 %, vorzugsweise im Bereich von 10 % bis 300 %, aufweisen.

Wie bereits zuvor für das erfindungsgemäße Verfahren angeführt, können die vorgenannten Angaben bzw. Parameter (Zug-E-Modul, Zugfestigkeit, Dehnung bei Zugfestigkeit bzw. Bruchdehnung) jeweils insbesondere gemäß der DIN EN ISO 527-1 bestimmt werden.

Weiterhin kann der Flachkörper eine Durchstoßfestigkeit (puncture resistance) im Bereich von 20 N/mm bis 500 N/mm, insbesondere im Bereich von 40 N/mm bis 400 N/mm, aufweisen. Diesbezüglich kann die Durchstoßfestigkeit insbesondere gemäß der ASTM D3420 berechnet werden.

Was den Flachkörper als solchen weiterhin anbelangt, so ist es erfindungsgemäß bevorzugt, wenn dieser einen Peroxidgehalt von höchstens 0,2 Gew.-%, insbesondere weniger als 0,2 Gew.-%, insbesondere höchstens 0,15 Gew.-%, vorzugsweise höchstens 0,1 Gew.-%, bezogen auf den partikulären Formkörper und/oder den Flachkörper, aufweist.

Erfindungsgemäß kann der Flachkörper als Verpackung, insbesondere Lebensmittelverpackung und/oder Industrieverpackung, vorzugsweise Transport-, Um-, Service-, Bulk-, Geschenk-, Retail- und/oder Transportverpackung; Container; Box; Behälter; Ersatzprodukt für Karton und/oder Kartonagen; Halbzeug insbesondere für Tiefzieh- oder Blasformanwendungen; Verkleidungs- und/oder Abdeckmaterial; Schildmaterial und/oder Schild, insbesondere Werbeschild; Aufhänger und/oder Aufsteller; Material für den Baubereich; Material für den Interieur- und/oder Exterieurbereich; Schutzmaterial, insbesondere Schutzverpackung und/oder Schutzfolie; oder dergleichen ausgebildet sein.

Der Flachkörper nach der Erfindung ist vorzugsweise biologisch abbaubar bzw. biodegradierbar, insbesondere unter Abbau- und/oder Kompostierungsbedingungen und/oder -anforderungen gemäß der DIN EN 13432 oder DIN EN 14995 oder der ASTM D6400. Hierzu kann auch auf obige Ausführungen verwiesen werden.

Darüber hinaus betrifft die vorliegende Erfindung - gemäß einem nochmals **weiteren** Aspekt der vorliegenden Erfindung - auch die erfindungsgemäße Verpackung, wie nachfolgend angeführt:
So betrifft die vorliegende Erfindung auch die Verpackung nach der Erfindung, insbesondere biologisch abbaubare bzw. biodegradierbare Verpackung, wobei die erfindungsgemäße Verpackung mindestens einen Flachkörper nach der Erfindung, insbesondere wie zuvor definiert, aufweist oder hieraus besteht bzw. wobei die Verpackung aus mindestens einem Flachkörper nach der Erfindung, wie zuvor definiert, hergestellt ist.

In diesem Zusammenhang kann die Verpackung als Lebensmittelverpackung und/oder Industrieverpackung, vorzugsweise Transport-, Um-, Service-, Bulk-, Geschenk-, Retail- und/oder Transportverpackung; Container; Box; Behälter; Ersatzprodukt für Karton und/oder Kartonagen; Halbzeug insbesondere für Tiefzieh- oder Blasformanwendungen; Verkleidungs- und/oder Abdeckmaterial; Schildmaterial und/oder Schild, insbesondere Werbeschild; Aufhänger und/oder Aufsteller; Material für den Baubereich; Material für den Interieur- und/oder Exterieurbereich; Schutzmaterial, insbesondere Schutzverpackung und/oder Schutzfolie; oder dergleichen ausgebildet sein.

Auch für die Verpackung nach der Erfindung gilt, dass diese biologisch abbaubar bzw. biodegradierbar ausgebildet sein kann, insbesondere unter Abbau- und/oder Kompostierungsbedingungen und/oder -anforderungen gemäß der DIN EN 13432 oder DIN EN 14995 oder der ASTM D6400. Auch diesbezüglich kann auf obige Ausführungen verwiesen werden.

Die vorliegende Erfindung betrifft zudem - gemäß einem wiederum **weiteren** Aspekt der vorliegenden Erfindung - auch die Kunststoffzusammensetzung (synonym auch als Mischung bezeichnet) nach der Erfindung, insbesondere biologisch abbaubare bzw. biodegradierbare Kunststoffzusammensetzung, vorzugsweise in Form einer Mischung, wobei die Kunststoffzusammensetzung (i) mindestens ein Polylactid (PLA) und (ii) mindestens ein Polybutylensuccinat (PBS) aufweist oder hieraus besteht mit der Maßgabe, dass die Kunststoffzusammensetzung außerdem (iii) mindestens einen weiteren Polyester aus der Gruppe von (α) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT), (β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie (γ) Mischungen von (α) und (β), und/oder (iv) mindestens einen reaktiven Polymerkettenmodifizierer (Polymerkettenmodifizierungsmittel) und/oder das Reaktionsprodukt, insbesondere Polymerisationsprodukt, vorzugsweise Copolymerisationsprodukt, der vorgenannten Komponenten aufweist.

Somit betrifft die vorliegende Erfindung auch eine Kunststoffzusammensetzung, welche insbesondere derart ausgebildet ist, dass diese die Komponenten (i) und (ii) einerseits und darüber hinaus die Komponenten (iii) und/oder (iv) andererseits bzw. die diesbezüglichen Reaktions- bzw. Polymerisationsprodukte, wie zuvor definiert, der vorgenannten Komponenten (i) bis (iv) aufweist.

Im Allgemeinen kann die erfindungsgemäße Kunststoffzusammensetzung in Verfahrensschritt (a) des erfindungsgemäßen Verfahrens als diesbezügliche Mischung eingesetzt werden.

Was die Kunststoffzusammensetzung insbesondere anbelangt, so kann diese das Polylactid [Komponente (i)] in Mengen im Bereich von 10 Gew.-% bis 90 Gew.-%, insbesondere im Bereich von 15 Gew.-% bis 80 Gew.-%, vorzugsweise im Bereich von 20 Gew.-% bis 60 Gew.-%, bevorzugt im Bereich von 25 Gew.-% bis 50 Gew.-%, bezogen auf die Mischung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Weiterhin kann die Kunststoffzusammensetzung das Polybutylensuccinat [Komponente (ii)] in Mengen im Bereich von 10 Gew.-% bis 90 Gew.-%, insbesondere im Bereich von 20 Gew.-% bis 85 Gew.-%, vorzugsweise im Bereich von 40 Gew.-% bis 80 Gew.-%, bevorzugt im Bereich von 50 Gew.-% bis 70 Gew.-%, bezogen auf die Kunststoffzusammensetzung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Zudem kann die Kunststoffzusammensetzung den weiteren Polyester [Komponente (iii)] in Mengen im Bereich von 0 Gew.-% bis 50 Gew.-%, insbesondere im Bereich von 0 Gew.-% bis 20 Gew.-%, vorzugsweise im Bereich von 0 Gew.-% bis 10 Gew.-%, bevorzugt im Bereich von 2 Gew.-% bis 8 Gew.-%, bezogen auf die Kunststoffzusammensetzung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Zudem kann die Kunststoffzusammensetzung den reaktiven Polymerkettenmodifizierer [Komponente (iv)] in Mengen im Bereich von 0 Gew.-% bis 2 Gew.-%, insbesondere im Bereich von 0 Gew.-% bis 1,5 Gew.-%, vorzugsweise im Bereich von 0 Gew.-% bis 1 Gew.-%, bevorzugt im Bereich von 0,01 Gew.-% bis 0,5 Gew.-%, bezogen auf die Kunststoffzusammensetzung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Im Allgemeinen kann die Kunststoffzusammensetzung (i) mindestens ein Polylactid (PLA), (ii) mindestens ein Polybutylensuccinat (PBS), (iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und (iv) mindestens einen reaktiven Polymerkettenmodifizierer (Polymerkettenmodifizierungsmittel) aufweisen oder hieraus bestehen.

Zudem kann die Kunststoffzusammensetzung (i) mindestens ein Polylactid (PLA), (ii) mindestens ein Polybutylensuccinat (PBS), (iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und (iv) mindestens einen reaktiven Polymerkettenmodifizierer (Polymerkettenmodifizierungsmittel) in Form eines organischen Peroxids aufweisen oder hieraus bestehen.

Insbesondere kann die Kunststoffzusammensetzung zudem (i) mindestens ein Polylactid (PLA), (ii) mindestens ein Polybutylensuccinat (PBS), (iii) mindestens einen weiteren Polyester, wie zuvor definiert, insbesondere mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Poly-hydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und (iv) mindestens einen reaktiven Polymerkettenmodifizierer (Polymerkettenmodifizierungsmittel) in Form eines organischen Peroxids aufweisen oder hieraus bestehen.

Im Allgemeinen kann der reaktive Polymerkettenmodifizierer [Komponente (iv)] ausgewählt sein aus der Gruppe von Polymerkettenverlängerern (Polymerkettenverlängerungsmitteln), Polymerkettenvernetzern (Polymerkettenvernetzungsmitteln) und Polymerkettenverzweigerer (Polymerkettenverzweigungsmitteln) sowie deren Mischungen oder Kombinationen.

In diesem Zusammenhang kann der reaktive Polymerkettenmodifizierer [Komponente (iv)] mindestens einen (1) Polymerisationsinitiator (Radikalstarter), insbesondere mindestens ein Peroxid, vorzugsweise organisches Peroxid, und/oder insbesondere mindestens eine Azoverbindung, vorzugsweise Azoisobutyronitril (AIBN), und/oder (2) mindestens ein Styrol/(Meth)Acrylat-Copolymer, insbesondere modifiziertes und/oder reaktives Styrol/(Meth)Acrylat-Copolymer, und/oder (3) mindestens ein mit Glycidylmethacrylat (GMA) oder Acrylsäure (AS) oder Maleinsäureanhydrid (MSA) gepfropftes Polymer oder Copolymer, vorzugsweise ein mit Glycidylmethacrylat (GMA) gepfropftes Polymer oder Copolymer, umfassen oder hieraus bestehen.

Weiterhin kann der reaktive Polymerkettenmodifizierer [Komponente (iv)] in diesem Zusammenhang mindestens einen Polymerisationsinitiator (Radikalstarter), insbesondere mindestens ein Peroxid, vorzugsweise organisches Peroxid, umfassen oder hieraus bestehen.

Darüber hinaus kann der reaktive Polymerkettenmodifizierer [Komponente (iv)] ausgewählt sein aus der Gruppe von (1) Polymerisationsinitiatoren (Radikalstartern), insbesondere Peroxiden, vorzugsweise organischen Peroxiden, und/oder Azoverbindungen, vorzugsweise Azoisobutyronitril (AIBN), (2) Styrol/(Meth)Acrylat-Copolymeren, insbesondere modifizierten und/oder reaktiven Styrol/(Meth)Acrylat-Copolymeren, und (3) mit Glycidylmethacrylat (GMA) oder Acrylsäure (AS) oder Maleinsäureanhydrid (MSA) gepfropfte Polymere oder Copolymere, vorzugsweise mit Glycidylmethacrylat (GMA) gepfropfte Polymere oder Copolymere, sowie (4) deren Mischungen oder Kombinationen.

Weiterhin kann es erfindungsgemäß vorgesehen sein, dass die Kunststoffzusammensetzung aus der Komponente (i), Komponente (ii), gegebenenfalls Komponente (iii) und gegebenenfalls Komponente (iv) besteht; oder dass die Kunststoffzusammensetzung aus der Komponente (i), Komponente (ii), gegebenenfalls Komponente (iii) und Komponente (iv) besteht; oder dass die Kunststoffzusammensetzung aus der Komponente (i), Komponente (ii), Komponente (iii) und Komponente (iv) besteht.

Demgegenüber kann die Kunststoffzusammensetzung als solche mindestens einen Füllstoff (Additiv), insbesondere anorganischen und/oder mineralischen Füllstoff (Additiv), vorzugsweise Talkum, Kreide und/oder Magnesium- und/oder Calciumcarbonat, [Komponente (v)] enthalten.

In diesem Zusammenhang kann der Kunststoffzusammensetzung mindestens ein Füllstoff (Additiv), insbesondere anorganischer und/oder mineralischer Füllstoff (Additiv), vorzugsweise Talkum, Kreide und/oder Magnesium- und/oder Calciumcarbonat, [Komponente (v)] zugegeben werden, insbesondere wobei der Füllstoff vorzugsweise gleichmäßig in die Kunststoffzusammensetzung, vorzugsweise in Form der Mischung, eingearbeitet und/oder inkorporiert ist.

Diesbezüglich kann die Kunststoffzusammensetzung den Füllstoff (Additiv) [Komponente (v)] in Mengen im Bereich von 0,001 Gew.-% bis 20 Gew.-%, insbesondere 0,01 Gew.-% bis 15 Gew.-%, vorzugsweise 0,05 Gew.-% bis 10 Gew.-%, bevorzugt 0,05 Gew.-% bis 5 Gew.-%, bezogen auf die Kunststoffzusammensetzung, enthalten, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Zudem kann die Kunststoffzusammensetzung mindestens einen Hilfsstoff, ausgewählt aus der Gruppe von Dispergierhilfsmitteln (Dispergatoren), Tensiden oder oberflächenaktiven Stoffen, Entschäumern, Rheologiemodifizierern, Bindemitteln, Bioziden, Markerstoffen, Farbstoffen, insbesondere Farbpigmenten, UV-Absorbern, Anticloggingmitteln und Stabilisatoren sowie deren Mischungen und Kombinationen, [Komponente (vi)] enthalten.

In diesem Zusammenhang kann der Kunststoffzusammensetzung mindestens ein Hilfsstoff, ausgewählt aus der Gruppe von Dispergierhilfsmitteln (Dispergatoren), Tensiden oder oberflächenaktiven Stoffen, Entschäumern, Rheologiemodifizierern, Bindemitteln, Bioziden, Markerstoffen, Farbstoffen, insbesondere Farbpigmenten, UV-Absorbern, Anticloggingmitteln und Stabilisatoren sowie deren Mischungen und Kombinationen, [Komponente (vi)] zugegeben sein, insbesondere wobei der Hilfsstoff vorzugsweise gleichmäßig in die Mischung eingearbeitet und/oder inkorporiert ist.

Im Allgemeinen kann es in diesem Zusammenhang vorgesehen sein, dass die Kunststoffzusammensetzung den Hilfsstoff [Komponente (vi)] in Mengen im Bereich von 0,0001 Gew.-% bis 15 Gew.-%, insbesondere im Bereich von 0,001 Gew.-% bis 10 Gew.-%, vorzugsweise im Bereich von 0,01 Gew.-% bis 5 Gew.-%, bezogen auf die Mischung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

Erfindungsgemäß kann auch die Kunststoffzusammensetzung als solche biologisch abbaubar bzw. biodegradierbar sein, insbesondere unter Abbau- und/oder Kompostierungsbedingungen und/oder -anforderungen gemäß der EN 13432 (d. h. DIN EN 13432) oder der DIN EN 14995 oder der ASTM D6400. Diesbezüglich kann auch auf obige Ausführungen verwiesen werden.

Die vorliegende Erfindung betrifft - gemäß einem nochmals **weiteren** Aspekt der vorliegenden Erfindung - auch die Verwendung des erfindungsgemäßen Flachkörpers, insbesondere wie zuvor definiert, als bzw. zur Herstellung einer Verpackung, insbesondere Lebensmittelverpackung und/oder Industrieverpackung, vorzugsweise Transport-, Um-, Service-, Bulk-, Geschenk-, Retail- und/oder Transportverpackung; Container; Box; Behälter; Ersatzprodukt für Karton und/oder Kartonagen; Halbzeug insbesondere für Tiefzieh- oder Blasformanwendungen; Verkleidungs- und/oder Abdeckmaterial; Schildmaterial und/oder Schild, insbesondere Werbeschild; Aufhänger und/oder Aufsteller; Material für den Baubereich; Material für den Interieur- und/oder Exterieurbereich; Schutzmaterial, insbesondere Schutzverpackung und/oder Schutzfolie; oder dergleichen.

Zudem betrifft die vorliegende Erfindung - gemäß einem wiederum weiteren **weiteren** Aspekt der vorliegenden Erfindung - auch die Verwendung der erfindungsgemäßen Kunststoffzusammensetzung, insbesondere wie zuvor definiert, zur Herstellung des erfindungsgemäßen Flachkörpers, insbesondere wie zuvor definiert.

Die vorliegende Erfindung betrifft weiterhin auch - gemäß einem nochmals **weiteren** Aspekt der vorliegenden Erfindung - die erfindungsgemäße Produktionsanlage, insbesondere zur Durchführung des Verfahrens nach der Erfindung, insbesondere wie zuvor definiert, zur Herstellung eines Flachkörpers, insbesondere in Form einer Platte oder Folie, aus einem biologisch abbaubaren und/oder biodegradierbaren Kunststoffmaterial, wobei die Produktionsanlage die folgenden Vorrichtungen umfasst:
(a) eine erste Vorrichtung zur Herstellung einer Vielzahl von insbesondere partikulären Formkörpern, vorzugsweise in Form von Granalien, Pellets, Extrudaten, Kügelchen, Prills oder dergleichen, bevorzugt Granalien, wobei eine Mischung, welche als Komponenten (Inhaltsstoffe) (i) mindestens ein Polylactid (PLA); (ii) mindestens ein Polybutylensuccinat (PBS); (iii)gegebenenfalls mindestens einen weiteren Polyester aus der Gruppe von (a) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT), (β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie (γ) Mischungen von (α) und (β); und (iv) gegebenenfalls mindestens einen reaktiven Polymerkettenmodifizierer (Polymerkettenmodifizierungsmittel) umfasst oder hieraus besteht, in eine vorzugsweise homogene Schmelze überführt wird, vorzugsweise unter Vermischung, wobei im Fall der Anwesenheit der Komponente (iv) gleichzeitig eine Polymerisationsreaktion erfolgt, und nachfolgend die resultierende Schmelze zu der Vielzahl von insbesondere partikulären Formkörpern verarbeitet wird, und
(b) eine zweite Vorrichtung zur Weiterverarbeitung der mittels der ersten Vorrichtung erhaltenen, insbesondere partikulären Formkörper zu einem Flachkörper, insbesondere einer Platte oder Folie.

Was die erfindungsgemäße Produktionsanlage weiterhin anbelangt, so kann es sich insbesondere derart verhalten, dass die erste Vorrichtung der zweiten Vorrichtung verfahrens- und/oder prozesstechnisch vorgeschaltet ist. In diesem Zusammenhang kann die zweite Vorrichtung der ersten Vorrichtung verfahrens- und/oder prozesstechnisch somit nachgeschaltet sein. Erfindungsgemäß kann es somit insbesondere vorgesehen sein, dass die erste Vorrichtung stromaufwärts zu der zweiten Vorrichtung bzw. die zweite Vorrichtung stromabwärts zu der ersten Vorrichtung angeordnet ist.

Im Allgemeinen kann es sich erfindungsgemäß auch derart verhalten, dass die erste Vorrichtung und die zweite Vorrichtung räumlich voneinander getrennt vorliegen bzw. angeordnet sind. Hierdurch kann ein Betrieb der erfindungsgemäßen Produktionsanlage in verschiedenen Räumlichkeiten bzw. mit entsprechender räumlicher Beabstandung der der Produktionsanlage zugrundeliegenden Vorrichtungen betrieben werden.

Insbesondere kann die erste Vorrichtung mindestens einen Extruder, insbesondere Schneckenextruder, vorzugsweise Doppelschneckenextruder, umfassen. Gleichermaßen kann die erste Vorrichtung als Extruder, insbesondere Schneckenextruder, vorzugsweise Doppelschneckenextruder, ausgebildet sein.

Erfindungsgemäß kann es zudem vorgesehen sein, dass die zweite Vorrichtung einen Extruder, insbesondere zur Durchführung einer Profilextrusion, insbesondere Hohlkammerprofilextrusion; Folienextrusion, insbesondere Flachfolienextrusion; und/oder Schaumextrusion, umfasst. Insbesondere kann die zweite Vorrichtung als Extruder, insbesondere zur Durchführung einer Profilextrusion, insbesondere Hohlkammerprofilextrusion; Folienextrusion, insbesondere Flachfolienextrusion; und/oder Schaumextrusion; ausgebildet sein. Beispielsweise kann ein Hohlkammerprofilextruder eingesetzt werden.

Im Folgenden wird die vorliegende Erfindung anhand von Ausführungsbeispielen bzw. Ausführungsformen darstellenden Zeichnungen bzw. Figurendarstellungen näher erläutert. Im Zusammenhang mit der Erläuterung dieser Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung verdeutlicht.

In den Figurendarstellungen zeigt:

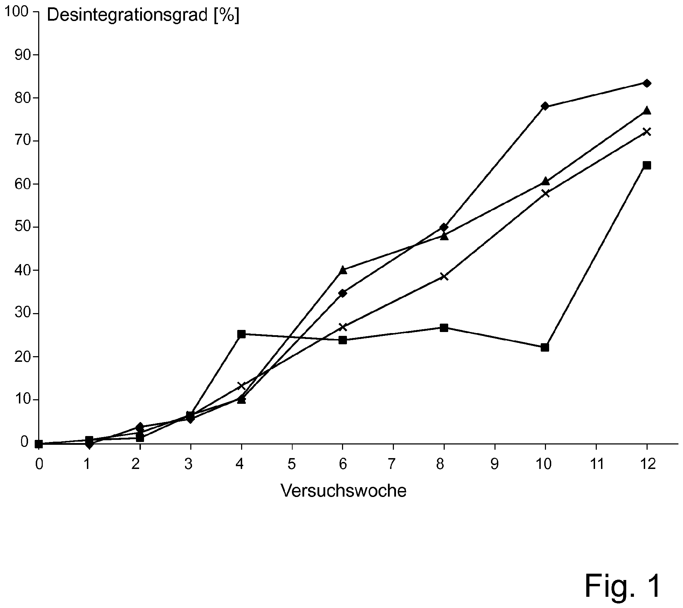

- Fig. 1: eine grafische Darstellung des zeitlichen Verlaufs der im Rahmen von Desintegrationstests ermittelten Desintegrationsraten verschiedener erfindungsgemäßer Flachkörper in Form von Folien mit Dicken zwischen 250 bis 300 µm, wobei die x-Achse den zeitlichen Verlauf zeigt und wobei die γ-Achse den Desintegrationsgrad in Prozent, bezogen auf das Ausgangsmaterial bzw. den jeweiligen Flachkörper, angibt;

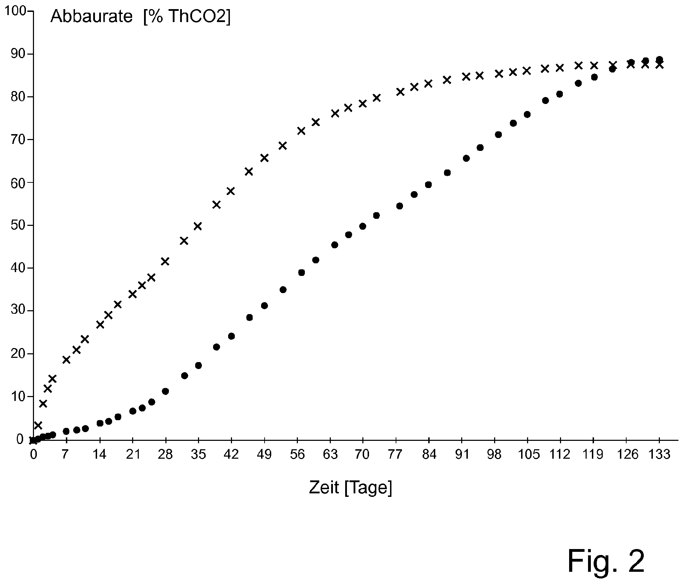

- Fig. 2: eine grafische Darstellung des Abbaus eines erfindungsgemäßen Testmaterials im Vergleich zu einem Referenzmaterial in Form von Cellulose, wobei die x-Achse den zeitlichen Verlauf zeigt und wobei die γ-Achse die prozentuale Abbaurate angibt.

Zu den vorgenannten Figuren wird nachfolgend im Rahmen der Ausführungsbeispiele noch detailliert Stellung genommen.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

Verschiedene Konzentrationsreihen wurden erprobt, insbesondere im Hinblick auf verbesserte Schmelzefestigkeiten und verbesserte mechanische Kennwerte. Besonders gute Ergebnisse werden bei Einsatz von 40 bis 60 Gew.-% PBS, insbesondere 50 Gew.-% bis 60 Gew.-% PBS, in der Mischung erhalten.

**Legende:**

| | |
|---|---|
| PLA: | Mn = 85.000 - 115.000 g/mol |
| PBS | Mn = 15.000 - 30.000 g/mol |
| PBAT | Mn = 30.000 - 65.000 g/mol |
| PBST | Mn = ca. 50.000 g/mol |
| PHA | Mn = ca. 100.000 g/mol |
| Reaktivadditiv 1 | Peroxid(e) (z. B. Dicumylperoxid bzw. tert.-Butylperoxy-2-ethylhexylcarbonat) |
| Reaktivadditiv 2 | Kettenverlängerer, insbesondere auf Basis von modifizierten bzw. reaktiven Styrol/Acrylat-Copolymeren bzw. ein mit Glycidylmethacrylat (GMA) oder Acrylsäure (AS) oder Maleinsäureanhydrid (MSA) gepfropftes Polymer oder Copolymer |
| Prozessadditiv(e) | übliche Verarbeitungshilfsmittel (z. B. anorganische Füllstoffe, wie Talkum, Kreide, Magnesiumcarbonat etc., und/oder Gleitmittel, z. B. niedermolekulare Amide, Ester, Wachse etc.) |

**Ausführungsbeispiel A1**

| PLA | PBS | PBAT | Prozessadditiv | Reaktivadditiv 1 |
|---|---|---|---|---|
| 99 % | 0 % | 0% | ca. 0,5 % | ca. 0,5 % |

### Granulatherstellung, Extruder (Extruderdurchmesser D = 26 mm / Extruderlänge L = 40 D)

| | |
|---|---|
| Temperaturprofil | 160 - 200 °C |
| Drehzahl | 130 rpm (revolutions per minute = UpM) |
| Druck vor Düse | 32 bar |
| MFR (230 °C; 2,16 kg) | 6,9 g/10min |

### Verarbeitung, Flachfolie (Düsenbreite 200 mm)

**Temperaturprofil**

| Extrusion | Flansch | Düse |
|---|---|---|
| 170 - 190 °C | 195 °C | 190 °C |

| | |
|---|---|
| Drehzahl | 60 rpm |
| Druck vor Düse | 40 bar |
| Folienbreite | 166 mm |
| Foliendicke | 250 - 350 µm |

**Ausführungsbeispiel A2**

| PLA | PBS | PBAT | Prozessadditiv | Reaktivadditiv 1 |
|---|---|---|---|---|
| 59,0% | 40,0% | 0,0% | ca. 0,5% | ca. 0,5% |

**Granulatherstellung, Extruder (D = 26 mm / L = 40 D)**

| | |
|---|---|
| Temperaturprofil | 160 - 200 °C |
| Drehzahl | 130 rpm |
| Druck vor Düse | 57 bar |
| MFR (230 °C; 2,16 kg) | 1,8 g/10min |

### Verarbeitung, Flachfolie (Düsenbreite 200 mm)

**Temperaturprofil**

| Extrusion | Flansch | Düse |
|---|---|---|
| 170 - 190 °C | 195 °C | 190 °C |

| | |
|---|---|
| Drehzahl | 60 rpm |
| Druck vor Düse | 70 bar |
| Folienbreite | 179 mm |
| Foliendicke | 330 - 400 µm |

**Ausführungsbeispiel A3**

| PLA | PBS | PBAT | Prozessadditiv | Reaktivadditiv |
|---|---|---|---|---|
| 39,5% | 55,0% | 5,0% | ca. 0,5% | 0% |

**Granulatherstellung, Extruder (D = 54 mm / L = 47 D)**

| | |
|---|---|
| Temperaturprofil: | 150 - 200 °C |
| Drehzahl | 310 rpm |
| Druck vor Düse | 69 bar |
| MFR (230 °C; 2,16 kg) | 14,1 g/10min |

### Verarbeitung, Flachfolie (Düsenbreite 200 mm)

**Temperaturprofil**

| Extrusion | Flansch | Düse |
|---|---|---|
| 170 - 190 °C | 195 °C | 190 °C |

| | |
|---|---|
| Drehzahl | 75 rpm |
| Druck vor Düse | 23 bar |
| Folienbreite | 148 mm |
| Foliendicke | 220 - 520 µm |

### Verarbeitung, Hohlprofilextrusion (Düsenbreite 530 mm)

**Temperaturprofil:**

| Extruder | Schmelzefilter | Schmelzepumpe | Düse |
|---|---|---|---|
| 160 - 175 °C | 160 °C | 160 °C | 180 - 185 °C |

| | |
|---|---|
| Schmelzetemperatur | 169 °C |
| Druck vor Düse | 43 bar |
| Folienbreite | 439 mm |
| Foliendicke | 2,5 mm |
| Flächengewicht | 655 g/m² |

**Ausführungsbeispiel A4**

| PLA | PBS | PBAT | Prozessadditiv | Reaktivadditiv 2 |
|---|---|---|---|---|
| 39,0% | 60,0% | 0,0% | ca. 0,5% | ca. 0,5% |

**Granulatherstellung, Extruder (D = 26 mm / L = 40 D)**

| | |
|---|---|
| Temperaturprofil | 160 - 200 °C |
| Drehzahl | 200 rpm |
| Druck vor Düse | 13 bar |
| MFR (190 °C; 2,16 kg) | 3,2 g/10min |

### Verarbeitung, Flachfolie (Düsenbreite 200 mm)

**Temperaturprofil**

| Extrusion | Flansch | Düse |
|---|---|---|
| 160 - 180 °C | 180 °C | 190 °C |

| | |
|---|---|
| Drehzahl | 60 rpm |
| Druck vor Düse | 18 bar |
| Folienbreite | 172 mm |
| Foliendicke | n.a. (nicht bestimmt) |

**Ausführungsbeispiel A5**

| PLA | PBS | PBAT | Prozessadditiv | Reaktivadditiv 1 |
|---|---|---|---|---|
| 39,4% | 55,0% | 5,0% | ca. 0,5% | ca. 0,1% |

**Granulatherstellung, 2-stufig, Extruder (D = 54 mm / L = 47 D)**

| | |
|---|---|
| Temperaturprofil: | 150 - 200 °C |
| Drehzahl | 275 rpm |
| Druck vor Düse | 60 bar |
| MFR (230 °C; 2,16 kg) | 21,9 g/10min |

### Verarbeitung, Flachfolie (Düsenbreite 200 mm)

**Temperaturprofil**

| Extrusion | Flansch | Düse |
|---|---|---|
| 170 - 190 °C | 190 °C | 190 °C |

| | |
|---|---|
| Drehzahl | 75 rpm |
| Druck vor Düse | 21 bar |
| Folienbreite | 155 mm |
| Foliendicke | 340 - 470 µm |

### Verarbeitung, Hohlprofilextrusion (Düsenbreite 530 mm)

**Temperaturprofil:**

| Extruder | Schmelzefilter | Schmelzepumpe | Düse |
|---|---|---|---|
| 160 - 180 °C | 160 °C | 160 °C | 165 - 170 °C |

| | |
|---|---|
| Schmelzetemperatur | 168 °C |
| Druck vor Düse | 36 bar |
| Folienbreite | 432 mm |
| Foliendicke | 2,5 mm |
| Flächengewicht | 920 g/m² |

**Ausführungsbeispiel A6**

| PLA | PBS | PBAT | Prozessadditiv | Reaktivadditiv 1 |
|---|---|---|---|---|
| 39,4% | 55,0% | 5,0% | ca. 0,5% | ca. 0,1% |

**Granulatherstellung, 1-stufig, Extruder (D = 54 mm / L = 47 D)**

| | |
|---|---|
| Temperaturprofil: | 150 - 200 °C |
| Drehzahl | 275 rpm |
| Druck vor Düse | 60 bar |
| MFR (230 °C; 2,16 kg) | 21,9 g/10min |

### Verarbeitung, Flachfolie (Düsenbreite 200 mm)

**Temperaturprofil**

| Extrusion | Flansch | Düse |
|---|---|---|
| 170 - 190 °C | 190 °C | 190 °C |

| | |
|---|---|
| Drehzahl | 75 rpm |
| Druck vor Düse | 24 bar |
| Folienbreite | 173 mm |
| Foliendicke | 300 - 400 µm |

### Verarbeitung, Hohlprofilextrusion (Düsenbreite 530 mm)

**Temperaturprofil:**

| Extruder | Schmelzefilter | Schmelzepumpe | Düse |
|---|---|---|---|
| 160 - 175 °C | 160 °C | 160 °C | 180 - 190 °C |

| | |
|---|---|
| Schmelzetemperatur | 169 °C |
| Druck vor Düse | 39 bar |
| Folienbreite | 486 mm |
| Foliendicke | 2,5 mm |
| Flächengewicht | 680 g/m² |

### Verarbeitung, Hohlprofilextrusion (Düsenbreite 2600 mm)

**Temperaturprofil:**

| Extruder | Schmelzefilter | Schmelzepumpe | Düse |
|---|---|---|---|
| 170 - 190 °C | 180 °C | 180 °C | 180 - 200 °C |

| | |
|---|---|
| Schmelzetemperatur | 221 °C |
| Druck vor Düse | 79 bar |
| Folienbreite | 2590 mm |
| Foliendicke | 2,6 mm |
| Flächengewicht | 750 g/m² |

**Ausführungsbeispiel A7**

| PLA | PBS | PBAT | Anorganischer Füllstoff | Prozessadditiv | Reaktivadditiv 1 |
|---|---|---|---|---|---|
| 34,4% | 55,0% | 5,0% | 5,0% | ca. 0,5% | ca. 0,1% |

**Granulatherstellung, 1-stufig, Extruder (D = 54 mm / L = 47 D)**

| | |
|---|---|
| Temperaturprofil: | 150 - 200 °C |
| Drehzahl | 365 rpm |
| Druck vor Düse | 60 bar |
| MFR (230 °C; 2,16 kg) | 4,1 g/10min |

### Verarbeitung, Flachfolie (Düsenbreite 200 mm)

**Temperaturprofil**

| Extrusion | Flansch | Düse |
|---|---|---|
| 170 - 190 °C | 190 °C | 190 °C |

| | |
|---|---|
| Drehzahl | 75 rpm |
| Druck vor Düse | 27 bar |
| Folienbreite | 175 mm |
| Foliendicke | 300 - 380 µm |

### Verarbeitung, Hohlprofilextrusion (Düsenbreite 530 mm)

**Temperaturprofil:**

| Extruder | Schmelzefilter | Schmelzepumpe | Düse |
|---|---|---|---|
| 160 - 175 °C | 160 °C | 160 °C | 180 - 195 °C |

| | |
|---|---|
| Schmelzetemperatur | 169 °C |
| Druck vor Düse | 36 bar |
| Folienbreite | 485 mm |
| Foliendicke | 2,0 mm |
| Flächengewicht | 510 g/m² |

**Ausführungsbeispiel A8**

| PLA | PBS | PBAT | Prozessadditiv | Reaktivadditiv 1 |
|---|---|---|---|---|
| 39,4% | 50,0% | 10,0% | ca. 0,5% | ca. 0,1% |

**Granulatherstellung, Extruder (D = 26 mm / L = 40 D)**

| | |
|---|---|
| Temperaturprofil | 170 - 200 °C |
| Drehzahl | 130 rpm |
| Druck vor Düse | 15 bar |
| MFR (190 °C; 2,16 kg) | 17,4 g/10min |

### Verarbeitung, Flachfolie (Düsenbreite 200 mm)

**Temperaturprofil**

| Extrusion | Flansch | Düse |
|---|---|---|
| 170 - 190 °C | 190 °C | 190 °C |

| | |
|---|---|
| Drehzahl | 75 rpm |
| Druck vor Düse | 15 bar |
| Folienbreite | 155 mm |
| Foliendicke | 280 - 290 µm |

**Ausführungsbeispiel A9**

| PLA | PBS | PBAT | Prozessadditiv | Reaktivadditiv 1 |
|---|---|---|---|---|
| 24,4% | 75,0% | 0,0% | ca. 0,5% | ca. 0,1% |

**Granulatherstellung, Extruder (D = 26 mm / L = 40 D)**

| | |
|---|---|
| Temperaturprofil | 170 - 200 °C |
| Drehzahl | 130 rpm |
| Druck vor Düse | 80 bar |
| MFR (190 °C; 2,16 kg) | 0,6 g/10min |

### Verarbeitung, Flachfolie (Düsenbreite 200 mm)

**Temperaturprofil**

| Extrusion | Flansch | Düse |
|---|---|---|
| 170 - 190 °C | 190 °C | 190 °C |

| | |
|---|---|
| Drehzahl | 60 rpm |
| Druck vor Düse | 100 bar |
| Folienbreite | 172 mm |
| Foliendicke | 470 - 650 µm |

**Ausführungsbeispiel A10**

| PLA | PBS | PBAT | Prozessadditiv | Reaktivadditiv 1 |
|---|---|---|---|---|
| 39,4% | 60,0% | 0,0% | ca. 0,5% | ca. 0,1% |

**Granulatherstellung, 2-stufig, Extruder (D = 54 mm / L = 47 D)**

| | |
|---|---|
| Temperaturprofil: | 150 - 200 °C |
| Drehzahl | 300 rpm |
| Druck vor Düse | 64 bar |
| MFR (230 °C; 2,16 kg) | 17,9 g/10min |

### Verarbeitung, Flachfolie (Düsenbreite 200 mm)

**Temperaturprofil**

| Extrusion | Flansch | Düse |
|---|---|---|
| 170 - 190 °C | 190 °C | 180 °C |

| | |
|---|---|
| Drehzahl | 75 rpm |
| Druck vor Düse | 21 bar |
| Folienbreite | 158 mm |
| Foliendicke | 340 - 500 µm |

### Verarbeitung, Hohlprofilextrusion (Düsenbreite 530 mm)

**Temperaturprofil:**

| Extruder | Schmelzefilter | Schmelzepumpe | Düse |
|---|---|---|---|
| 150 - 165 °C | 150 °C | 150 °C | 160 - 180 °C |

| | |
|---|---|
| Schmelzetemperatur | 161 °C |
| Druck vor Düse | 49 bar |
| Folienbreite | 474 mm |
| Foliendicke | 2,5 mm |
| Flächengewicht | 527 g/m² |

**Ausführungsbeispiel A11**

| PLA | PBS | PBAT | Prozessadditiv | Reaktivadditiv |
|---|---|---|---|---|
| 39,5% | 60,0% | 0,0% | ca. 0,5% | 0% |

**Granulatherstellung, Extruder (D = 26 mm / L = 40 D)**

| | |
|---|---|
| Temperaturprofil | 160 - 200 °C |
| Drehzahl | 200 rpm |
| Druck vor Düse | 13 bar |
| MFR (190 °C; 2,16 kg) | 7,1 g/10min |

### Verarbeitung, Flachfolie (Düsenbreite 200 mm)

**Temperaturprofil**

| Extrusion | Flansch | Düse |
|---|---|---|
| 160 - 180 °C | 180 °C | 180 °C |

| | |
|---|---|
| Drehzahl | 60 rpm |
| Druck vor Düse | 9 bar |
| Folienbreite | 164 mm |
| Foliendicke | n.a. |

**Ausführungsbeispiel A12**

| PLA | PBS | PHA | Prozessadditiv | Reaktivadditiv 1 |
|---|---|---|---|---|
| 39,4% | 50,0% | 10,0% | ca. 0,5% | ca. 0,1% |

**Granulatherstellung, Extruder (D = 26 mm / L = 40 D)**

| | |
|---|---|
| Temperaturprofil | 170 - 200 °C |
| Drehzahl | 130 rpm |
| Druck vor Düse | 19 bar |
| MFR (230 °C; 2,16 kg) | 24,6 g/10min |

### Verarbeitung, Flachfolie (Düsenbreite 200 mm)

**Temperaturprofil**

| Extrusion | Flansch | Düse |
|---|---|---|
| 170 - 185 °C | 185 °C | 185 °C |

| | |
|---|---|
| Drehzahl | 75 rpm |
| Druck vor Düse | 22 bar |
| Folienbreite | 154 mm |
| Foliendicke | 250 - 300 µm |

### Herstellung von Hohlprofil-Stegplatten mit einem Flächengewicht von 520 bis 920 g/m²

Alle getesteten Compounds bzw. Blends bzw. Mischungen (Kunststoffzusammensetzungen) zeigten ein gutes und stabiles Verarbeitungsverhalten in der Hohlkammerprofilextrusionsanlage. Die mechanischen Eigenschaften der eingesetzten Blends liegen im gleichen Bereich des Referenzmaterials. Durch geringe Mengen von PBAT kann die Flexibilität der Produkte erhöht werden.

Einstufig hergestellte Compounds mit Peroxidadditiv weisen ähnlich zu PP eine hohe Viskosität und einen geringen Schmelzflussindex (MFR 4 g/10min bei 230 °C) auf. Bei den zweistufig hergestellten Blends ist der Schmelzflussindex höher (MFR 14 bis 22 g/10min bei 230 °C). Die Herstellung der Hohlkammerprofile kann dann bei niedrigeren Temperaturen erfolgen. Manche der Versuchsmaterialien zeigen ein geringeres Einschnürungsverhalten (geringerer Neck-In) und somit eine höhere Plattenbreite als z.B. PP-Platten. Alle Platten sind homogen mit glatten, samtiger Oberflächen und stabilen Außenwänden und Stegen für die Verarbeitung.

### Herstellung von Flachfolien

Aus den Compounds bzw. Blends bzw. Mischungen (Kunststoffzusammensetzungen) lassen sich auch Flachfolien herstellen. Teilweise kann es zu einer geringen, aber akzeptablen Reduzierung der Folienbreite, dem so genannten Neck-In, kommen.

Weitere Materialoptimierungen zeigten eine verbesserte Verarbeitung auch bei erhöhtem Temperaturprofil, eine hohe Viskosität und Schmelzefestigkeit, einen geringen Neck-In sowie homogene Folienextrusion.

**Tabelle: Materialkennwerte optimierter Flachfolien**

| | | Referenz PP-Blend | Ausführungsbeispiel A3 | Ausführungsbeispiel A6 | Ausführungsbeispiel A5 |
|---|---|---|---|---|---|
| MFR (230 °C/2,16 kg) | g/10 min | 1,423 | 14,065 | 3,898 | 21,889 |
| Zug-E-Modul | MPa | 1.470 | 1.425 | 1.622 | 1.430 |
| Zugfestigkeit | MPa | 29,7 | 35,65 | 37,50 | 36,43 |
| Dehnung bei Zugfestigkeit | % | 9,56 | 3,50 | 4,33 | 4,13 |
| Bruchdehnung | % | 88,9 | 98,60 | 16,60 | 128,48 |
| Neck-in (je Seite) | % | 9 | 13 | 7 | 11 |

| | | | | | |
|---|---|---|---|---|---|
| Prüfungen erfolgten nach folgenden Normen: MFR-Werte [g/10 min]: - ASTM D1238 (Standard Test Method for Melt Flow Rates of Thermoplastics by Extrusion Plastometer) / - DIN EN ISO 1133-1 (Kunststoffe - Bestimmung der Schmelze-Massefließrate (MFR) und der Schmelze-Volumenfließrate (MVR) von Thermoplasten - Teil 1: Allgemeines Prüfverfahren) Zugprüfung bzw. Werte zu Zug-E-Modul [MPa] Zugfestigkeit, Streckspannung und Bruchspannung [MPa] Dehnung bei Zugfestigkeit, Streckdehnung und Bruchdehnung [%] - DIN EN ISO 527-1 (Kunststoffe - Bestimmung der Zugeigenschaften - Teil 1: Allgemeine Grundsätze) | | | | | |

### Desintegrationstest

Bewertung des Abbauverhaltens unter industriellen Kompostierungsbedingungen (angelehnt an ISO 16929) unter Berücksichtigung des Additiveinsatzes, insbesondere Peroxiden sowie Kettenverlängerern. Sowohl durch die Zugabe von Peroxiden (Vernetzer) als auch von Kettenverlängerern wird eine Reaktivextrusion eingeleitet, was durch die chemische Modifizierung der Polymerkomponenten im Blendsystem einen Einfluss auf die Abbaubarkeit haben könnte.

In der Versuchsreihe gilt es, Unterschiede zwischen den Abbauverhalten von Blends aus der Reaktivextrusion mit Blends ohne Vernetzung mittels Desintegrationstest zu ermitteln. Es handelt sich hierbei um ein vornehmlich optisches Begutachtungsverfahren, was einen direkten Vergleich der Probenbeurteilung zulässt. Quantitative Angaben zur Höhe des Abbaugrades sind nicht bzw. nur bedingt möglich.

Auch wenn gerade durch die - aus den Gewichtsbestimmungen resultierenden - Schwankungen keine eindeutige Aussage zu den Desintregrationsgraden zu tätigen ist, geben die Ergebnisse - gerade im direkten Vergleich zur Probenreihen zueinander - die Abbauverhältnisse mit gut nachvollziehbaren Trends wieder. Es ist zu erkennen, dass durch Additiveren der Ausgangsrezeptur kein signifikanter Unterschied hinsichtlich des Abbauverhaltens unter definierten Kompostbedingungen (gemäß DIN EN 13432 oder DIN EN 14995 oder ASTM D6400, vergleichbar mit industrieller Kompostierung) zu verzeichnen ist. Im Allgemeinen ist positiv hervorzuheben, dass alle getesteten Probenreihen zeitabhängig abbauen. Die Versuchsreihe wurde nach den vorgeschriebenen 12 Wochen abgebrochen. Die meisten Proben hatten sich dann bereits in kleinste Teile zersetzt, wie es auch die Norm fordert.

Der Desintegrationstest zeigt, dass die Probenreihen unabhängig von Additivierung unter definierten aeroben Kompostierungsverfahren ein vergleichbar hohes Abbauverhalten aufweisen.

Fig. 1 zeigt die Desintegrationsrate verschiedener Ausführungsbeispiele (und zwar gemessen an Folien mit Dicken zwischen 250 µm und 300 µm). Dargestellt sind die Ergebnisse für Folien mit den Blends aus den Beispielen A4 (Quadrat), A6 (Kreuz), A10 (Dreieck) und A11 (Raute).

### Prüfung auf Bioabbaubarkeit

Für Ausführungsbeispiel A6 erfolgte die Prüfung auf Bioabbaubarkeit nach DIN EN ISO 14855-1 "Bestimmung der aeroben Bioabbaubarkeit von Kunststoffen unter kontrollierten Kompostierungsbedingungen - Methode durch Analyse von entwickeltem Kohlendioxid - Teil 1: Allgemeine Methode".

Der gesamte organische Kohlenstoff (TOC) im Testmaterial wurde mit einem Kohlenstoffanalysator (Fa. elementar) bestimmt. Die theoretische Menge an Kohlendioxid (ThCO₂), die durch das Testmaterial in jedem Gefäß erzeugt werden kann, wurde nach DIN EN ISO 14855 berechnet.

Das durch die Blindproben entstandene Kohlendioxid betrug nach 10 Tagen 138 mg/g flüchtige Substanzen und entspricht den Anforderungen der Norm (50-150 mg/g flüchtige Substanzen).

Die biologische Abbaurate des Testmaterials im Vergleich zur Referenz Cellulose ist in Fig. 2 grafisch dargestellt. Die Werte wurden um das in den Blindproben entstandene Kohlendioxid korrigiert.

Fig. 2 zeigt den Abbau des Testmaterials auf Basis von Beispiel A6 (Kreis) im Vergleich zu Cellulose als Referenz (Kreuz).

Die biologische Abbaurate in der Plateauphase, bezogen auf die maximale Abbaurate der Referenzsubstanz, betrug 101 % für das Testmaterial A6.

Das Testmaterial A6 ist unter Kompostierungsbedingungen gemäß den Anforderungen der DIN EN 13432 biologisch abbaubar. Der Prozentsatz des biologischen Abbaus des Prüfmaterials muss nach Norm insgesamt mindestens 90 % oder 90 % des maximalen Abbaus der Referenzsubstanz nach Erreichen einer Plateauphase sowohl für das Prüfmaterial als auch für die Referenzsubstanz betragen.

Die nachfolgende Tabelle zeigt die Ergebnisse der chemischen Analyse des Testmaterials.

**Tabelle: Chemische Analyse des Testmaterials**

| Testmaterial | A6 |
|---|---|
| Gesamter organischer Kohlenstoff (TOC) | 55,4 % |
| Theoretische Menge an Kohlendioxid (ThCO₂) | 152,35 g |

Die Inkubationszeit betrug 133 Tage. Die biologische Abbaurate ist in der nachfolgenden Tabelle angegeben.

**Tabelle: Biologischer Abbau des Testmaterials**

| | CO₂ Nettoproduktion [g] | Biologische Abbaurate: CO₂ Produktion in % des ThCO₂ |
|---|---|---|
| Material A6 | 135 | 88,6 |
| Referenzsubstanz Cellulose | 102 | 87,7 |
| Validität der Messung | Erfüllt | Nicht erfüllt |
| Biologische Abbaurate der Referenzsubstanz 70 % nach 45 Tagen | (X) nach 57 Tagen | |
| Differenz zwischen dem prozentualen biologischen Abbau der Referenzsubstanz in verschiedenen Gefäßen < 20 % | X | |
| CO₂-Produktion in den Blindwertgefäßen 50-150 mg/g flüchtige Substanzen nach 10 Tagen | X | |

Die Referenzsubstanz Cellulose wurde nach 133 Tagen zu etwa 88 % abgebaut. Die Differenz zwischen dem prozentualen biologischen Abbau der Referenzsubstanze in den beiden bewerteten Parallelansätzen betrug 4 % und erfüllte die Anforderungen der Norm (< 20 %).

Die vorliegende Erfindung wird durch die folgenden allgemeinen Aspekte weiter veranschaulicht, welche die Erfindung gleichermaßen wiedergeben und welche vollumfänglich zum Gegenstand der vorliegenden Erfindung gehören:

### Aspekt 1:

Verfahren zur Herstellung eines Flachkörpers, insbesondere in Form einer Platte oder Folie, aus einem biologisch abbaubaren und/oder biodegradierbaren Kunststoffmaterial,
wobei das Verfahren die folgenden Verfahrensschritte in der nachfolgend spezifizierten Abfolge umfasst:
(a) Herstellung einer Vielzahl von insbesondere partikulären Formkörpern, vorzugsweise in Form von Granalien, Pellets, Extrudaten, Kügelchen, Prills oder dergleichen, bevorzugt Granalien, wobei eine Mischung, welche als Komponenten (Inhaltsstoffe)
   (i) mindestens ein Polylactid (PLA),
   (ii) mindestens ein Polybutylensuccinat (PBS),
   (iii) gegebenenfalls mindestens einen weiteren Polyester aus der Gruppe von
      (α) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT),
      (β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie
      (γ) Mischungen von (α) und (β),
   (iv) gegebenenfalls mindestens einen reaktiven Polymerkettenmodifizierer (Polymerkettenmodifizierungsmittel) umfasst, in eine vorzugsweise homogene Schmelze überführt wird, vorzugsweise unter Vermischung, wobei im Fall der Anwesenheit der Komponente (iv) gleichzeitig eine Polymerisationsreaktion erfolgt, und nachfolgend die resultierende Schmelze zu der Vielzahl von insbesondere partikulären Formkörpern verarbeitet wird, vorzugsweise mittels Extrusion; dann
(b) Weiterverarbeitung der in Verfahrensschritt (a) erhaltenen, insbesondere partikulären Formkörper zu einem Flachkörper, insbesondere einer Platte oder Folie, vorzugsweise mittels Extrusion, bevorzugt mittels Profilextrusion.

### Aspekt 2:

Verfahren nach Aspekt 1,
wobei die Mischung das Polylactid [Komponente (i)] in Mengen im Bereich von 10 Gew.-% bis 90 Gew.-%, insbesondere im Bereich von 15 Gew.-% bis 80 Gew.-%, vorzugsweise im Bereich von 20 Gew.-% bis 60 Gew.-%, bevorzugt im Bereich von 25 Gew.-% bis 50 Gew.-%, bezogen auf die Mischung, enthält, insbesondere wobei die vorgenannten Mengenangaben derart gewählt werden, dass in der Summe, gegebenenfalls unter Einbezug optionaler weiterer Inhaltsstoffe, 100 Gew.-% resultieren.

### Aspekt 3:

Verfahren nach Aspekt 1 oder 2,
wobei die Mischung das Polybutylensuccinat [Komponente (ii)] in Mengen im Bereich von 10 Gew.-% bis 90 Gew.-%, insbesondere im Bereich von 20 Gew.-% bis 85 Gew.-%, vorzugsweise im Bereich von 40 Gew.-% bis 80 Gew.-%, bevorzugt im Bereich von 50 Gew.-% bis 70 Gew.-%, bezogen auf die Mischung, enthält, insbesondere wobei die vorgenannten Mengenangaben derart gewählt werden, dass in der Summe, gegebenenfalls unter Einbezug optionaler weiterer Inhaltsstoffe, 100 Gew.-% resultieren.

### Aspekt 4:

Verfahren nach einem der vorangehenden Aspekte,
wobei die Mischung den weiteren Polyester [Komponente (iii)] in Mengen im Bereich von 0 Gew.-% bis 50 Gew.-%, insbesondere im Bereich von 0 Gew.-% bis 20 Gew.-%, vorzugsweise im Bereich von 0 Gew.-% bis 10 Gew.-%, bevorzugt im Bereich von 2 Gew.-% bis 8 Gew.-%, bezogen auf die Mischung, enthält, insbesondere wobei die vorgenannten Mengenangaben derart gewählt werden, dass in der Summe, gegebenenfalls unter Einbezug optionaler weiterer Inhaltsstoffe, 100 Gew.-% resultieren.

### Aspekt 5:

Verfahren nach einem der vorangehenden Aspekte,
wobei die Mischung den reaktiven Polymerkettenmodifizierer [Komponente (iv)] in Mengen im Bereich von 0 Gew.-% bis 2 Gew.-%, insbesondere im Bereich von 0 Gew.-% bis 1,5 Gew.-%, vorzugsweise im Bereich von 0 Gew.-% bis 1 Gew.-%, bevorzugt im Bereich von 0,01 Gew.-% bis 0,5 Gew.-%, bezogen auf die Mischung, enthält, insbesondere wobei die vorgenannten Mengenangaben derart gewählt werden, dass in der Summe, gegebenenfalls unter Einbezug optionaler weiterer Inhaltsstoffe, 100 Gew.-% resultieren.

### Aspekt 6:

Verfahren nach einem der vorangehenden Aspekte,
wobei das Polylactid [Komponente (i)] eine zahlenmittlere Molmasse Mₙ (zahlenmittleres Molekulargewicht Mₙ) im Bereich von 30.000 g/mol bis 600.000 g/mol, insbesondere im Bereich von 40.000 g/mol bis 500.000 g/mol, vorzugsweise im Bereich von 60.000 g/mol bis 250.000 g/mol, bevorzugt im Bereich von 70.000 g/mol bis 150.000 g/mol, aufweist; und/oder
wobei das Polylactid [Komponente (i)] eine gewichtsmittlere Molmasse M_{w} (gewichtsmittleres Molekulargewicht M_{w}) im Bereich von 60.000 g/mol bis 800.000 g/mol, insbesondere im Bereich von 80.000 g/mol bis 700.000 g/mol, vorzugsweise im Bereich von 100.000 g/mol bis 500.000 g/mol, bevorzugt im Bereich von 125.000 g/mol bis 250.000 g/mol, aufweist.

### Aspekt 7:

Verfahren nach einem der vorangehenden Aspekte,
wobei das Polybutylensuccinat [Komponente (ii)] eine zahlenmittlere Molmasse Mₙ (zahlenmittleres Molekulargewicht Mₙ) im Bereich von 2.500 g/mol bis 150.000 g/mol, insbesondere im Bereich von 5.000 g/mol bis 100.000 g/mol, vorzugsweise im Bereich von 7.500 g/mol bis 75.000 g/mol, bevorzugt im Bereich von 10.000 g/mol bis 50.000 g/mol, aufweist; und/oder wobei das Polybutylensuccinat [Komponente (ii)] eine gewichtsmittlere Molmasse M_{w} (gewichtsmittleres Molekulargewicht M_{w}) im Bereich von 5.000 g/mol bis 300.000 g/mol, insbesondere im Bereich von 10.000 g/mol bis 200.000 g/mol, vorzugsweise im Bereich von 20.000 g/mol bis 150.000 g/mol, bevorzugt im Bereich von 50.000 g/mol bis 150.000 g/mol, aufweist.

### Aspekt 8:

Verfahren nach einem der vorangehenden Aspekte,
wobei der weitere Polyester [Komponente (iii)] eine zahlenmittlere Molmasse Mₙ (zahlenmittleres Molekulargewicht Mₙ) im Bereich von 5.000 g/mol bis 500.000 g/mol, insbesondere im Bereich von 10.000 g/mol bis 300.000 g/mol, vorzugsweise im Bereich von 15.000 g/mol bis 150.000 g/mol, bevorzugt im Bereich von 20.000 g/mol bis 100.000 g/mol, aufweist und/oder
wobei der weitere Polyester [Komponente (iii)] eine gewichtsmittlere Molmasse M_{w} (gewichtsmittleres Molekulargewicht M_{w}) im Bereich von 10.000 g/mol bis 500.000 g/mol, insbesondere im Bereich von 20.000 g/mol bis 400.000 g/mol, vorzugsweise im Bereich von 40.000 g/mol bis 350.000 g/mol, bevorzugt im Bereich von 80.000 g/mol bis 300.000 g/mol, aufweist.

### Aspekt 9:

Verfahren nach einem der vorangehenden Aspekte,
wobei die Mischung als Komponenten
(i) mindestens ein Polylactid (PLA),
(ii) mindestens ein Polybutylensuccinat (PBS),
(iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und
(iv) mindestens einen reaktiven Polymerkettenmodifizierer (Polymerkettenmodifizierungsmittel)
aufweist oder hieraus besteht.

### Aspekt 10:

Verfahren nach einem der vorangehenden Aspekte,
wobei die Mischung als Komponenten
(i) mindestens ein Polylactid (PLA),
(ii) mindestens ein Polybutylensuccinat (PBS),
(iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und
(iv) mindestens einen reaktiven Polymerkettenmodifizierer (Polymerkettenmodifizierungsmittel) in Form eines organischen Peroxids
aufweist oder hieraus besteht; und/oder
wobei die Mischung als Komponenten
(i) mindestens ein Polylactid (PLA),
(ii) mindestens ein Polybutylensuccinat (PBS),
(iii) mindestens einen weiteren Polyester, wie zuvor definiert, insbesondere ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und
(iv) mindestens einen reaktiven Polymerkettenmodifizierer (Polymerkettenmodifizierungsmittel) in Form eines organischen Peroxids
aufweist oder hieraus besteht.

### Aspekt 11:

Verfahren nach einem der vorangehenden Aspekte,
wobei die Mischung als Komponenten
(i) mindestens ein Polylactid (PLA), insbesondere in Mengen im Bereich von 10 Gew.-% bis 90 Gew.-%, insbesondere im Bereich von 15 Gew.-% bis 80 Gew.-%, vorzugsweise im Bereich von 20 Gew.-% bis 60 Gew.-%, bevorzugt im Bereich von 25 Gew.-% bis 50 Gew.-%, bezogen auf die Mischung,
(ii) mindestens ein Polybutylensuccinat (PBS), insbesondere in Mengen im Bereich von 10 Gew.-% bis 90 Gew.-%, insbesondere im Bereich von 20 Gew.-% bis 85 Gew.-%, vorzugsweise im Bereich von 40 Gew.-% bis 80 Gew.-%, bevorzugt im Bereich von 50 Gew.-% bis 70 Gew.-%, bezogen auf die Mischung,
(iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), insbesondere in Mengen im Bereich von 0 Gew.-% bis 50 Gew.-%, insbesondere 0 Gew.-% bis 20 Gew.-%, vorzugsweise 0 Gew.-% bis 10 Gew.-%, bevorzugt 2 Gew.-% bis 8 Gew.-%, bezogen auf die Mischung, und
(iv) gegebenenfalls mindestens einen reaktiven Polymerkettenmodifizierer (Polymerkettenmodifizierungsmittel), insbesondere in Form eines organischen Peroxids, insbesondere in Mengen im Bereich von 0 Gew.-% bis 2 Gew.-%, insbesondere im Bereich von 0 Gew.-% bis 1,5 Gew.-%, vorzugsweise im Bereich von 0 Gew.-% bis 1 Gew.-%, bevorzugt im Bereich von 0,01 Gew.-% bis 0,5 Gew.-%, bezogen auf die Mischung,
enthält,
insbesondere wobei die vorgenannten Mengenangaben jeweils derart gewählt werden, dass in der Summe, gegebenenfalls unter Einbezug optionaler weiterer Inhaltsstoffe, 100 Gew.-% resultieren.

### Aspekt 12:

Verfahren nach einem der vorangehenden Aspekte,
wobei der reaktive Polymerkettenmodifizierer [Komponente (iv)] ausgewählt wird aus der Gruppe von Polymerkettenverlängerern (Polymerkettenverlängerungsmitteln), Polymerkettenvernetzern (Polymerkettenvernetzungsmitteln) und Polymerkettenverzweigerer (Polymerkettenverzweigungsmitteln) sowie deren Mischungen oder Kombinationen;
insbesondere wobei der reaktive Polymerkettenmodifizierer [Komponente (iv)] (1) mindestens einen Polymerisationsinitiator (Radikalstarter), insbesondere mindestens ein Peroxid, vorzugsweise organisches Peroxid, und/oder insbesondere mindestens eine Azoverbindung, vorzugsweise Azoisobutyronitril (AIBN), und/oder (2) mindestens ein Styrol/(Meth)Acrylat-Copolymer, insbesondere modifiziertes und/oder reaktives Styrol/(Meth)Acrylat-Copolymer, und/oder (3) mindestens ein mit Glycidylmethacrylat (GMA) oder Acrylsäure (AS) oder Maleinsäureanhydrid (MSA) gepfropftes Polymer oder Copolymer, vorzugsweise ein mit Glycidylmethacrylat (GMA) gepfropftes Polymer oder Copolymer, umfasst oder hieraus besteht; und/oder
insbesondere wobei der reaktive Polymerkettenmodifizierer [Komponente (iv)] mindestens einen Polymerisationsinitiator (Radikalstarter), insbesondere mindestens ein Peroxid, vorzugsweise organisches Peroxid, umfasst oder hieraus besteht.

### Aspekt 13:

Verfahren nach einem der vorangehenden Aspekte,
wobei der reaktive Polymerkettenmodifizierer [Komponente (iv)] ausgewählt wird aus der Gruppe von (1) Polymerisationsinitiatoren (Radikalstartern), insbesondere Peroxiden, vorzugsweise organischen Peroxiden, und/oder Azoverbindungen, vorzugsweise Azoisobutyronitril (AIBN), (2) Styrol/(Meth)Acrylat-Copolymeren, insbesondere modifizierten und/oder reaktiven Styrol/(Meth)Acrylat-Copolymeren, (3) mit Glycidylmethacrylat (GMA) oder Acrylsäure (AS) oder Maleinsäureanhydrid (MSA) gepfropfte Polymere oder Copolymere, vorzugsweise mit Glycidylmethacrylat (GMA) gepfropfte Polymere oder Copolymere, sowie (4) deren Mischungen oder Kombinationen; und/oder
wobei der reaktive Polymerkettenmodifizierer [Komponente (iv)] ausgewählt wird aus der Gruppe von Polymerisationsinitiatoren, insbesondere Peroxiden, vorzugsweise organischen Peroxiden; und/oder
wobei als reaktiver Polymerkettenmodifizierer [Komponente (iv)] ein Polymerisationsinitiator in Form eines Peroxids, insbesondere organischen Peroxids eingesetzt wird.

### Aspekt 14:

Verfahren nach einem der vorangehenden Aspekte,
wobei das Verfahren, insbesondere Verfahrensschritt (a), mittels Reaktivextrusion durchgeführt wird.

### Aspekt 15:

Verfahren nach einem der Aspekte 1 bis 14,
wobei die Mischung aus der Komponente (i), Komponente (ii), gegebenenfalls Komponente (iii) und gegebenenfalls Komponente (iv) besteht; oder
wobei die Mischung aus der Komponente (i), Komponente (ii), gegebenenfalls Komponente (iii) und Komponente (iv) besteht; oder
wobei die Mischung aus der Komponente (i), Komponente (ii), Komponente (iii) und Komponente (iv) besteht.

### Aspekt 16:

Verfahren nach einem der Aspekte 1 bis 14,
wobei die Mischung mindestens einen Füllstoff (Additiv), insbesondere anorganischen und/oder mineralischen Füllstoff (Additiv), vorzugsweise Talkum, Kreide und/oder Magnesium- und/oder Calciumcarbonat, [Komponente (v)] enthält; und/oder
wobei der Mischung mindestens ein Füllstoff (Additiv), insbesondere anorganischer und/oder mineralischer Füllstoff (Additiv), vorzugsweise Talkum, Kreide und/oder Magnesium- und/oder Calciumcarbonat, [Komponente (v)] zugegeben wird, insbesondere wobei der Füllstoff vorzugsweise gleichmäßig in die Mischung eingearbeitet und/oder inkorporiert wird.

### Aspekt 17:

Verfahren nach Aspekt 16,
wobei die Mischung den Füllstoff (Additiv) [Komponente (v)] in Mengen im Bereich von 0,001 Gew.-% bis 20 Gew.-%, insbesondere im Bereich von 0,01 Gew.-% bis 15 Gew.-%, vorzugsweise im Bereich von 0,05 Gew.-% bis 10 Gew.-%, bevorzugt im Bereich von 0,05 Gew.-% bis 5 Gew.-%, bezogen auf die Mischung, enthält, insbesondere wobei die vorgenannten Mengenangaben derart gewählt werden, dass in der Summe, gegebenenfalls unter Einbezug optionaler weiterer Inhaltsstoffe, 100 Gew.-% resultieren.

### Aspekt 18:

Verfahren nach einem der Aspekte 1 bis 14 sowie 16 oder 17,
wobei die Mischung mindestens einen Hilfsstoff, ausgewählt aus der Gruppe von Verarbeitungshilfsmitteln, Gleitmitteln, wie niedermolekularen Amiden, Estern, Wachsen; Dispergierhilfsmitteln (Dispergatoren); Tensiden oder oberflächenaktiven Stoffen; Entschäumern; Rheologiemodifizierern; Bindemitteln; Bioziden; Markerstoffen; Farbstoffen, insbesondere Farbpigmenten; UV-Absorbern; Anticloggingmitteln und Stabilisatoren oder deren Mischungen und Kombinationen, [Komponente (vi)] enthält; und/oder
wobei der Mischung mindestens ein Hilfsstoff, ausgewählt aus der Gruppe von Verarbeitungshilfsmitteln, Gleitmitteln, wie niedermolekularen Amiden, Estern, Wachsen; Dispergierhilfsmitteln (Dispergatoren), Tensiden oder oberflächenaktiven Stoffen, Entschäumern, Rheologiemodifizierern, Bindemitteln, Bioziden, Markerstoffen, Farbstoffen, insbesondere Farbpigmenten, UV-Absorbern, Anticloggingmitteln und Stabilisatoren sowie deren Mischungen und Kombinationen, [Komponente (vi)] zugegeben wird, insbesondere wobei der Hilfsstoff vorzugsweise gleichmäßig in die Mischung eingearbeitet und/oder inkorporiert wird.

### Aspekt 19:

Verfahren nach Aspekt 18,
wobei die Mischung den Hilfsstoff [Komponente (vi)] in Mengen im Bereich von 0,0001 Gew.-% bis 15 Gew.-%, insbesondere im Bereich von 0,001 Gew.-% bis 10 Gew.-%, vorzugsweise im Bereich von 0,01 Gew.-% bis 5 Gew.-%, bezogen auf die Mischung, enthält, insbesondere wobei die vorgenannten Mengenangaben derart gewählt werden, dass in der Summe, gegebenenfalls unter Einbezug optionaler weiterer Inhaltsstoffe, 100 Gew.-% resultieren.

### Aspekt 20:

Verfahren nach einem der vorangehenden Aspekte,
wobei die Mischung zumindest im Wesentlichen lösemittelfrei ist und/oder zumindest im Wesentlichen lösemittelfrei ausgebildet wird; und/oder wobei Verfahrensschritt (a), und/oder Verfahrensschritt (b), insbesondere Verfahrensschritt (a), vorzugsweise das Gesamtverfahren, zumindest im Wesentlichen unter Ausschluss von Lösemitteln durchgeführt wird.

### Aspekt 21:

Verfahren nach einem der vorangehenden Aspekte,
wobei in Verfahrensschritt (a) zunächst eine Vormischung von einer oder zwei der Komponenten (i) bis (iii) einerseits mit dem reaktiven Polymerkettenmodifizierer, insbesondere Peroxid, vorzugsweise organischen Peroxid, [Komponente (iv)] andererseits hergestellt und/oder bereitgestellt wird, insbesondere mit der Maßgabe, dass die Vormischung nicht sämtliche Komponenten (i) bis (iii) der Mischung gemäß Verfahrensschritt (a) und/oder mit der Maßgabe, dass die Vormischung mindestens eine der Komponenten (i) bis (iii) der Mischung gemäß Verfahrensschritt (a) nicht enthält, insbesondere wobei die Vormischung in eine vorzugsweise homogene Vormischungs-Schmelze überführt wird; und/oder
wobei in Verfahrensschritt (a) zunächst eine Vormischung des Polylactids [Komponente (i)] und/oder des Polybutylensuccinats [Komponente (ii)], vorzugsweise des Polylactids [Komponente (i)], einerseits mit dem reaktiven Polymerkettenmodifizierer, insbesondere Peroxid, vorzugsweise organischen Peroxid, [Komponente (iv)] andererseits hergestellt und/oder bereitgestellt wird, insbesondere wobei die Vormischung in eine vorzugsweise homogene Vormischungs-Schmelze überführt wird.

### Aspekt 22:

Verfahren nach Aspekt 21,
wobei die Vormischung, insbesondere die Vormischungs-Schmelze, zu einer Vielzahl von insbesondere partikulären Vormischungs-Formkörpern verarbeitet wird.

### Aspekt 23:

Verfahren nach Aspekt 21 oder 22,
wobei die Vormischung mit den weiteren Komponenten, insbesondere den weiteren Komponenten (i) bis (ii), welche nicht Bestandteil der Vormischung sind, zusammengeführt wird, insbesondere so dass die Mischung gemäß Verfahrensschritt (a) erhalten wird, insbesondere wobei das Zusammenführen ausgehend von der Vormischungs-Schmelze oder ausgehend von den Vormischungs-Formkörpern durchgeführt wird; und/oder
wobei die Herstellung und/oder Bereitstellung der Vormischungs-Schmelze und/oder der Vormischungs-Formkörper mittels (Vormischungs-)Extrusion, insbesondere (Vormischungs)-Reaktivextrusion, erfolgt.

### Aspekt 24:

Verfahren nach einem der vorangehenden Aspekte,
wobei in Verfahrensschritt (a), insbesondere bei der Extrusion, vorzugsweise bei der Reaktivextrusion, bei Temperaturen im Bereich von 130 °C bis 220 °C, insbesondere im Bereich von 140 °C bis 210 °C, vorzugsweise im Bereich von 145 °C bis 205 °C, bevorzugt im Bereich von 150 °C bis 200 °C, verfahren wird; und/oder
wobei in Verfahrensschritt (a), insbesondere bei der Extrusion, vorzugsweise bei der Reaktivextrusion, die Überführung der Mischung in die Schmelze und/oder die Verarbeitung der Schmelze zu den insbesondere partikulären Formkörpern bei Temperaturen im Bereich von 140 °C bis 215 °C, insbesondere im Bereich von 140 °C bis 210 °C, vorzugsweise im Bereich von 145 °C bis 205 °C, bevorzugt im Bereich von 150 °C bis 200 °C, durchgeführt wird.

### Aspekt 25:

Verfahren nach einem der vorangehenden Aspekte,
wobei in Verfahrensschritt (a) ein Extruder, insbesondere Schneckenextruder, vorzugsweise Doppelschneckenextruder, eingesetzt wird; und/oder
wobei in Verfahrensschritt (a), insbesondere bei der Extrusion, vorzugsweise bei der Reaktivextrusion, die Überführung der Mischung in die Schmelze und/oder die Verarbeitung der Schmelze zu den insbesondere partikulären Formkörpern unter Verwendung eines Extruders, insbesondere Schneckenextruders, vorzugsweise Doppelschneckenextruders, durchgeführt wird.

### Aspekt 26:

Verfahren nach einem der vorangehenden Aspekte,
wobei die in Verfahrensschritt (a) erhaltenen Formkörper zumindest im Wesentlichen gleichförmig und/oder gleichartig und/oder homogen ausgebildet sind.

### Aspekt 27:

Verfahren nach einem der vorangehenden Aspekte,
wobei in Verfahrensschritt (b), insbesondere bei der Extrusion, bei Temperaturen im Bereich von 140 °C bis 230 °C, insbesondere im Bereich von 145 °C bis 220 °C, vorzugsweise im Bereich von 150 °C bis 210 °C, bevorzugt im Bereich von 155 °C bis 205 °C, verfahren wird; und/oder
wobei in Verfahrensschritt (b), insbesondere bei der Extrusion, die Weiterverarbeitung der insbesondere partikulären Formkörper zu dem Flachkörper bei Temperaturen im Bereich von 140 °C bis 230 °C, insbesondere im Bereich von 145 °C bis 220 °C, vorzugsweise im Bereich von 150 °C bis 210 °C, bevorzugt im Bereich von 155 °C bis 205 °C, durchgeführt wird.

### Aspekt 28:

Verfahren nach einem der vorangehenden Aspekte,
wobei in Verfahrensschritt (b) ein Extruder, eingesetzt wird; und/oder wobei in Verfahrensschritt (b) eine Profilextrusion, insbesondere Hohlkammerprofilextrusion; Folienextrusion, insbesondere Flachfolienextrusion; und/oder Schaumextrusion durchgeführt wird; und/oder
wobei in Verfahrensschritt (b), insbesondere bei der Extrusion, die Weiterverarbeitung der partikulären Formkörper zu dem Flachkörper mittels Profilextrusion, insbesondere Hohlkammerprofilextrusion; Folienextrusion, insbesondere Flachfolienextrusion; und/oder Schaumextrusion durchgeführt wird.

### Aspekt 29:

Verfahren nach einem der vorangehenden Aspekte,
wobei der in Verfahrensschritt (b) erhaltene Flachkörper eine Dicke im Bereich von 50 µm bis 100 mm, insbesondere im Bereich von 75 µm bis 50 mm, vorzugsweise im Bereich von 100 µm bis 10 mm, bevorzugt im Bereich von 150 µm bis 5 mm, besonders bevorzugt im Bereich von 200 µm bis 3 mm, aufweist; und/oder
wobei in Verfahrensschritt (b) der Flachkörper kontinuierlich und/oder durchbrechungsfrei ausgebildet wird; oder wobei in Verfahrensschritt (b) der Flachkörper diskontinuierlich und/oder mit einer Vielzahl von Durchbrechungen, Löchern, Öffnungen oder dergleichen ausgebildet und/oder versehen wird, insbesondere wobei der Flachkörper netzförmig und/oder in Form eines insbesondere extrudierten Netzes ausgebildet wird.

### Aspekt 30:

Verfahren nach einem der Aspekte 1 bis 29,
wobei in Verfahrensschritt (b) der Flachkörper als Platte und/oder plattenförmiger Flachkörper, insbesondere Flachplatte, vorzugsweise als Profilplatte, bevorzugt Hohlprofilplatte, und/oder als Hohlkammerplatte, insbesondere Hohlkammerstegplatte, ausgebildet wird;
insbesondere wobei der Flachkörper eine Dicke im Bereich von 0,25 mm bis 100 mm, insbesondere im Bereich von 0,5 mm bis 50 mm, vorzugsweise im Bereich von 0,75 mm bis 10 mm, bevorzugt im Bereich von 1 mm bis 5 mm, besonders bevorzugt im Bereich von 1,5 mm bis 3,5 mm, aufweist; und/oder
wobei der Flachkörpers als Profilplatte, bevorzugt Hohlprofilplatte, und/oder als Hohlkammerplatte, insbesondere Hohlkammerstegplatte, ausgebildet wird, insbesondere wobei der Flachkörper Stege und/oder Verstrebungen und/oder Decklagen aufweist, insbesondere wobei die Stege und/oder Verstrebungen und/oder Decklagen, unabhängig voneinander, eine Dicke, insbesondere eine Wandstärke, im Bereich von 10 µm bis 3.000 µm, insbesondere im Bereich von 20 µm bis 2.000 µm, vorzugsweise im Bereich von 50 µm bis 1.500 µm, bevorzugt im Bereich von 100 µm bis 1.000 µm, aufweisen.

### Aspekt 31:

Verfahren nach einem der Aspekte 1 bis 29,
wobei in Verfahrensschritt (b) der Flachkörper als Folie oder folienförmiger Flachkörper, insbesondere Flachfolie, ausgebildet wird;
insbesondere wobei der Flachkörper eine Dicke im Bereich 50 µm bis 1.500 µm, insbesondere im Bereich von 75 µm bis 1.250 µm, vorzugsweise im Bereich von 100 µm bis 1.000 µm, bevorzugt im Bereich von 150 µm bis 900 µm, besonders bevorzugt im Bereich von 200 µm bis 750 µm, aufweist; und/oder
insbesondere wobei der Flachkörper ein Zug-E-Modul (Young's modulus) im Bereich von 500 MPa bis 3.500 MPa, insbesondere im Bereich von 1.000 MPa bis 3.000 MPa, vorzugsweise im Bereich von 1.250 MPa bis 2.500 MPa, aufweist; und/oder
insbesondere wobei der Flachkörper eine Zugfestigkeit (tensile strength) im Bereich von 20 MPa bis 100 MPa, insbesondere im Bereich von 25 MPa bis 80 MPa, vorzugsweise im Bereich von 25 MPa bis 60 MPa, bevorzugt im Bereich von 30 MPa bis 50 MPa, aufweist; und/oder
insbesondere wobei der Flachkörper eine Dehnung bei Zugfestigkeit (tensile elongation) im Bereich von 1 % bis 20 %, insbesondere im Bereich von 1,5 % bis 15 %, vorzugsweise im Bereich von 2 % bis 10 %, aufweist; und/oder
insbesondere wobei der Flachkörper eine Bruchdehnung (tensile elongation at break) im Bereich von 5 % bis 500 %, insbesondere im Bereich von 7,5 % bis 400 %, vorzugsweise im Bereich von 10 % bis 300 %, aufweist; und/oder
insbesondere wobei der Flachkörper eine Durchstoßfestigkeit (puncture resistance) im Bereich von 20 N/mm bis 500 N/mm, insbesondere im Bereich von 40 N/mm bis 400 N/mm, aufweist.

### Aspekt 32:

Verfahren nach einem der vorangehenden Aspekte,
wobei die in Verfahrensschritt (c) eingesetzte Mischung einen Schmelzindex (Schmelzflussrate, MFR, melt mass flow-rate) [230 °C / 2,16 kg] im Bereich von 2 g/10min bis 50 g/10min, insbesondere im Bereich von 3 g/10min bis 40g/10min, vorzugsweise im Bereich von 4g/10min bis 30g/10min, bevorzugt im Bereich von 4,5 g/10min bis 25 g/10min, besonders bevorzugt im Bereich von 5 g/10min bis 20 g/10min, aufweist.

### Aspekt 33:

Verfahren nach einem der vorangehenden Aspekte,
wobei die insbesondere partikulären Formkörper und/oder der Flachkörper jeweils einen Peroxidgehalt von höchstens 0,2 Gew.-%, insbesondere weniger als 0,2 Gew.-%, insbesondere höchstens 0,15 Gew.-%, vorzugsweise höchstens 0,1 Gew.-%, jeweils bezogen auf den partikulären Formkörper und/oder den Flachkörper, aufweisen.

### Aspekt 34:

Verfahren nach einem der vorangehenden Aspekte,
wobei der Flachkörper als Verpackung, insbesondere Lebensmittelverpackung und/oder Industrieverpackung, vorzugsweise Transport-, Um-, Service-, Bulk-, Geschenk-, Retail- und/oder Transportverpackung; Container; Box; Behälter; Ersatzprodukt für Karton und/oder Kartonagen; Halbzeug insbesondere für Tiefzieh- oder Blasformanwendungen; Verkleidungs- und/oder Abdeckmaterial; Schildmaterial und/oder Schild, insbesondere Werbeschild; Aufhänger und/oder Aufsteller; Material für den Baubereich; Material für den Interieur- und/oder Exterieurbereich; Schutzmaterial, insbesondere Schutzverpackung und/oder Schutzfolie; oder dergleichen eingesetzt und/oder ausgebildet wird.

### Aspekt 35:

Verfahren nach einem der vorangehenden Aspekte,
wobei die insbesondere partikulären Formkörper und/oder der Flachkörper jeweils biologisch abbaubar und/oder biodegradierbar ist, insbesondere unter Abbau- und/oder Kompostierungsbedingungen und/oder -anforderungen gemäß der DIN EN 13432 oder DIN EN 14995 oder ASTM D6400.

### Aspekt 36:

Flachkörper, insbesondere Platte oder Folie, vorzugsweise biologisch abbaubarer und/oder biodegradierbarer Flachkörper, wobei der Flachkörper erhältlich ist durch ein Verfahren nach einem der vorangehenden Aspekte und/oder wobei der Flachkörper durch ein Verfahren nach einem der vorangehenden Aspekte erhalten ist.

### Aspekt 37:

Flachkörper, insbesondere Platte oder Folie, vorzugsweise biologisch abbaubarer und/oder biodegradierbarer Flachkörper, insbesondere Flachkörper nach Aspekt 36, wobei der Flachkörper eine Mischung von
(i) mindestens einem Polylactid (PLA),
(ii) mindestens einem Polybutylensuccinat (PBS),
(iii) gegebenenfalls mindestens einem weiteren Polyester aus der Gruppe von
   (α) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT),
   (β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie
   (γ) Mischungen von (α) und (β),
(iv) gegebenenfalls mindestens einem reaktiven Polymerkettenmodifizierer (Polymerkettenmodifizierungsmittel)
und/oder deren Reaktionsprodukt, insbesondere Polymerisationsprodukt, vorzugsweise Copolymerisationsprodukt, aufweist oder hieraus besteht.

### Aspekt 38:

Flachkörper nach Aspekt 36 oder 37,
wobei die Mischung das Polylactid [Komponente (i)] in Mengen im Bereich von 10 Gew.-% bis 90 Gew.-%, insbesondere im Bereich von 15 Gew.-% bis 80 Gew.-%, vorzugsweise im Bereich von 20 Gew.-% bis 60 Gew.-%, bevorzugt im Bereich von 25 Gew.-% bis 50 Gew.-%, bezogen auf die Mischung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 39:

Flachkörper nach einem der Aspekte 36 bis 38,
wobei die Mischung Polybutylensuccinat [Komponente (ii)] in Mengen im Bereich von 10 Gew.-% bis 90 Gew.-%, insbesondere im Bereich von 20 Gew.-% bis 85 Gew.-%, vorzugsweise im Bereich von 40 Gew.-% bis 80 Gew.-%, bevorzugt im Bereich von 50 Gew.-% bis 70 Gew.-%, bezogen auf die Mischung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 40:

Flachkörper nach einem der Aspekte 36 bis 39,
wobei die Mischung den weiteren Polyester [Komponente (iii)] in Mengen im Bereich von 0 Gew.-% bis 50 Gew.-%, insbesondere im Bereich von 0 Gew.-% bis 20 Gew.-%, vorzugsweise im Bereich von 0 Gew.-% bis 10 Gew.-%, bevorzugt im Bereich von 2 Gew.-% bis 8 Gew.-%, bezogen auf die Mischung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 41:

Flachkörper nach einem der Aspekte 36 bis 40,
wobei die Mischung den reaktiven Polymerkettenmodifizierer [Komponente (iv)] in Mengen im Bereich von 0 Gew.-% bis 2 Gew.-%, insbesondere im Bereich von 0 Gew.-% bis 1,5 Gew.-%, vorzugsweise im Bereich von 0 Gew.-% bis 1 Gew.-%, bevorzugt im Bereich von 0,01 Gew.-% bis 0,5 Gew.-%, bezogen auf die Mischung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 42:

Flachkörper nach einem der Aspekte 36 bis 41,
wobei die Mischung
(i) mindestens ein Polylactid (PLA),
(ii) mindestens ein Polybutylensuccinat (PBS),
(iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und
(iv) mindestens einen reaktiven Polymerkettenmodifizierer (Polymerkettenmodifizierungsmittel)
aufweist oder hieraus besteht.

### Aspekt 43:

Flachkörper nach einem der Aspekte 36 bis 42,
wobei die Mischung
(i) mindestens ein Polylactid (PLA),
(ii) mindestens ein Polybutylensuccinat (PBS),
(iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und
(iv) mindestens einen reaktiven Polymerkettenmodifizierer (Polymerkettenmodifizierungsmittel) in Form eines organischen Peroxids
aufweist oder hieraus besteht.

### Aspekt 44:

Flachkörper nach einem der Aspekte 36 bis 43,
wobei die Mischung umfasst:
(i) mindestens ein Polylactid (PLA), insbesondere in Mengen im Bereich von 10 Gew.-% bis 90 Gew.-%, insbesondere im Bereich von 15 Gew.-% bis 80 Gew.-%, vorzugsweise im Bereich von 20 Gew.-% bis 60 Gew.-%, bevorzugt im Bereich von 25 Gew.-% bis 50 Gew.-%, bezogen auf die Mischung,
(ii) mindestens ein Polybutylensuccinat (PBS), insbesondere in Mengen im Bereich von 10 Gew.-% bis 90 Gew.-%, insbesondere im Bereich von 20 Gew.-% bis 85 Gew.-%, vorzugsweise im Bereich von 40 Gew.-% bis 80 Gew.-%, bevorzugt im Bereich von 50 Gew.-% bis 70 Gew.-%, bezogen auf die Mischung,
(iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), insbesondere in Mengen im Bereich von 0 Gew.-% bis 50 Gew.-%, insbesondere im Bereich von 0 Gew.-% bis 20 Gew.-%, vorzugsweise im Bereich von 0 Gew.-% bis 10 Gew.-%, bevorzugt im Bereich von 2 Gew.-% bis 8 Gew.-%, bezogen auf die Mischung, und
(iv) gegebenenfalls mindestens einen reaktiven Polymerkettenmodifizierer (Polymerkettenmodifizierungsmittel), insbesondere in Form eines organischen Peroxids, insbesondere in Mengen im Bereich von 0 Gew.-% bis 2 Gew.-%, insbesondere im Bereich von 0 Gew.-% bis 1,5 Gew.-%, vorzugsweise im Bereich von 0 Gew.-% bis 1 Gew.-%, bevorzugt im Bereich von 0,01 Gew.-% bis 0,5 Gew.-%, bezogen auf die Mischung, enthält,
insbesondere wobei die vorgenannten Mengenangaben jeweils derart gewählt sind, dass in der Summe, gegebenenfalls unter Einbezug optionaler weiterer Inhaltsstoffe, 100 Gew.-% resultieren.

### Aspekt 45:

Flachkörper nach einem der Aspekte 36 bis 44,
wobei der reaktive Polymerkettenmodifizierer [Komponente (iv)] ausgewählt ist aus der Gruppe von Polymerkettenverlängerern (Polymerkettenverlängerungsmitteln), Polymerkettenvernetzern (Polymerkettenvernetzungsmitteln) und Polymerkettenverzweigerer (Polymerkettenverzweigungsmitteln) sowie deren Mischungen oder Kombinationen;
insbesondere wobei der reaktive Polymerkettenmodifizierer [Komponente (iv)] mindestens einen (1) Polymerisationsinitiator (Radikalstarter), insbesondere mindestens ein Peroxid, vorzugsweise organisches Peroxid, und/oder insbesondere mindestens eine Azoverbindung, vorzugsweise Azoisobutyronitril (AIBN), und/oder (2) mindestens ein Styrol/(Meth)Acrylat-Copolymer, insbesondere modifiziertes und/oder reaktives Styrol/(Meth)Acrylat-Copolymer, und/oder (3) mindestens ein mit Glycidylmethacrylat (GMA) oder Acrylsäure (AS) oder Maleinsäureanhydrid (MSA) gepfropftes Polymer oder Copolymer, vorzugsweise ein mit Glycidylmethacrylat (GMA) gepfropftes Polymer oder Copolymer, umfasst oder hieraus besteht; und/oder
insbesondere wobei der reaktive Polymerkettenmodifizierer [Komponente (iv)] mindestens einen Polymerisationsinitiator (Radikalstarter), insbesondere mindestens ein Peroxid, vorzugsweise organisches Peroxid, umfasst oder hieraus besteht.

### Aspekt 46:

Flachkörper nach einem der Aspekte 36 bis 45,
wobei der reaktive Polymerkettenmodifizierer [Komponente (iv)] ausgewählt ist aus der Gruppe von (1) Polymerisationsinitiatoren (Radikalstartern), insbesondere Peroxiden, vorzugsweise organischen Peroxiden, und/oder Azoverbindungen, vorzugsweise Azoisobutyronitril (AIBN), (2) Styrol/(Meth)Acrylat-Copolymeren, insbesondere modifizierten und/oder reaktiven Styrol/(Meth)Acrylat-Copolymeren, und (3) mit Glycidylmethacrylat (GMA) oder Acrylsäure (AS) oder Maleinsäureanhydrid (MSA) gepfropfte Polymere oder Copolymere, vorzugsweise mit Glycidylmethacrylat (GMA) gepfropfte Polymere oder Copolymere, sowie (4) deren Mischungen oder Kombinationen.

### Aspekt 47:

Flachkörper nach einem der Aspekte 36 bis 46,
wobei die Mischung aus der Komponente (i), Komponente (ii), gegebenenfalls Komponente (iii) und gegebenenfalls Komponente (iv) besteht; oder wobei die Mischung aus der Komponente (i), Komponente (ii), gegebenenfalls Komponente (iii) und Komponente (iv) besteht; oder
wobei die Mischung aus der Komponente (i), Komponente (ii), Komponente (iii) und Komponente (iv) besteht.

### Aspekt 48:

Flachkörper nach einem der Aspekte 36 bis 46,
wobei die Mischung mindestens einen Füllstoff (Additiv), insbesondere anorganischen und/oder mineralischen Füllstoff (Additiv), vorzugsweise Talkum, Kreide und/oder Magnesium- und/oder Calciumcarbonat, [Komponente (v)] enthält; und/oder
wobei der Mischung mindestens ein Füllstoff (Additiv), insbesondere anorganischer und/oder mineralischer Füllstoff (Additiv), vorzugsweise Talkum, Kreide und/oder Magnesium- und/oder Calciumcarbonat, [Komponente (v)] zugegeben ist, insbesondere wobei der Füllstoff vorzugsweise gleichmäßig in die Mischung eingearbeitet und/oder inkorporiert ist.

### Aspekt 49:

Flachkörper nach Aspekt 48,
wobei die Mischung den Füllstoff (Additiv) [Komponente (v)] in Mengen im Bereich von 0,001 Gew.-% bis 20 Gew.-%, insbesondere im Bereich von 0,01 Gew.-% bis 15 Gew.-%, vorzugsweise im Bereich von 0,05 Gew.-% bis 10 Gew.-%, bevorzugt im Bereich von 0,05 Gew.-% bis 5 Gew.-%, bezogen auf die Mischung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 50:

Flachkörper nach einem der Aspekte 36 bis 46 und 48 oder 49,
wobei die Mischung mindestens einen Hilfsstoff, ausgewählt aus der Gruppe von Verarbeitungshilfsmitteln, Gleitmitteln, wie niedermolekularen Amiden, Estern, Wachsen; Dispergierhilfsmitteln (Dispergatoren); Tensiden oder oberflächenaktiven Stoffen; Entschäumern; Rheologiemodifizierern; Bindemitteln; Bioziden; Markerstoffen; Farbstoffen, insbesondere Farbpigmenten; UV-Absorbern; Anticloggingmitteln und Stabilisatoren oder deren Mischungen und Kombinationen, [Komponente (vi)] enthält; und/oder
wobei der Mischung mindestens ein Hilfsstoff, ausgewählt aus der Gruppe von Verarbeitungshilfsmitteln, Gleitmitteln, wie niedermolekularen Amiden, Estern, Wachsen; Dispergierhilfsmitteln (Dispergatoren), Tensiden oder oberflächenaktiven Stoffen, Entschäumern, Rheologiemodifizierern, Bindemitteln, Bioziden, Markerstoffen, Farbstoffen, insbesondere Farbpigmenten, UV-Absorbern, Anticloggingmitteln und Stabilisatoren sowie deren Mischungen und Kombinationen, [Komponente (vi)] zugegeben wird, insbesondere wobei der Hilfsstoff vorzugsweise gleichmäßig in die Mischung eingearbeitet und/oder inkorporiert wird.

### Aspekt 51:

Flachkörper nach Aspekt 50,
wobei die Mischung den Hilfsstoff [Komponente (vi)] in Mengen im Bereich von 0,0001 Gew.-% bis 15 Gew.-%, insbesondere im Bereich von 0,001 Gew.-% bis 10 Gew.-%, vorzugsweise im Bereich von 0,01 Gew.-% bis 5 Gew.-%, bezogen auf die Mischung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 52:

Flachkörper nach einem der Aspekte 36 bis 51,
wobei der Flachkörper eine Dicke im Bereich von 50 µm bis 100 mm, insbesondere im Bereich von 75 µm bis 50 mm, vorzugsweise im Bereich von 100 µm bis 10 mm, bevorzugt im Bereich von 150 µm bis 5 mm, besonders bevorzugt im Bereich von 200 µm bis 3 mm, aufweist; und/oder
wobei der Flachkörper kontinuierlich und/oder durchbrechungsfrei ausgebildet ist; oder wobei der Flachkörper diskontinuierlich und/oder mit einer Vielzahl von Durchbrechungen, Löchern, Öffnungen oder dergleichen ausgebildet und/oder versehen ist, insbesondere wobei der Flachkörper netzförmig und/oder in Form eines insbesondere extrudierten Netzes ausgebildet ist.

### Aspekt 53:

Flachkörper nach einem der Aspekte 36 bis 52,
wobei der Flachkörper als Platte und/oder plattenförmiger Flachkörper, insbesondere Flachplatte, vorzugsweise als Profilplatte, bevorzugt Hohlprofilplatte, und/oder als Hohlkammerplatte, insbesondere Hohlkammerstegplatte, ausgebildet ist;
insbesondere wobei der Flachkörper eine Dicke im Bereich von 0,25 mm bis 100 mm, insbesondere im Bereich von 0,5 mm bis 50 mm, vorzugsweise im Bereich von 0,75 mm bis 10 mm, bevorzugt im Bereich von 1 mm bis 5 mm, besonders bevorzugt im Bereich von 1,5 mm bis 3,5 mm, aufweist; und/oder insbesondere wobei der Flachkörper ein Flächengewicht im Bereich von 100 g/m² bis 2.000 g/m², insbesondere im Bereich von 100 g/m² bis 2.000 g/m², vorzugsweise im Bereich von 200 g/m² bis 1.600 g/m², bevorzugt im Bereich von 250 g/m² bis 1.400 g/m², besonders bevorzugt im Bereich von 300 g/m² bis 1.200 g/m², aufweist.

### Aspekt 54:

Flachkörper nach einem der Aspekte 36 bis 52,
wobei der Flachkörper als (ii) Folie oder folienförmiger Flachkörper, insbesondere Flachfolie, ausgebildet ist;
insbesondere wobei der Flachkörper eine Dicke im Bereich 50 µm bis 1.500 µm, insbesondere im Bereich von 75 µm bis 1.250 µm, vorzugsweise im Bereich von 100 µm bis 1.000 µm, bevorzugt im Bereich von 150 µm bis 900 µm, besonders bevorzugt im Bereich von 200 µm bis 750 µm, aufweist; und/oder
insbesondere wobei der Flachkörper ein Zug-E-Modul (Young's modulus) im Bereich von 500 MPa bis 3.500 MPa, insbesondere im Bereich von 1.000 MPa bis 3.000 MPa, vorzugsweise im Bereich von 1.250 MPa bis 2.500 MPa, aufweist; und/oder
insbesondere wobei der Flachkörper eine Zugfestigkeit (tensile strength) im Bereich von 20 MPa bis 100 MPa, insbesondere im Bereich von 25 MPa bis 80 MPa, vorzugsweise im Bereich von 25 MPa bis 60 MPa, bevorzugt im Bereich von 30 MPa bis 50 MPa, aufweist; und/oder
insbesondere wobei der Flachkörper eine Dehnung bei Zugfestigkeit (tensile elongation) im Bereich von 1 % bis 20 %, insbesondere im Bereich von 1,5 % bis 15 %, vorzugsweise im Bereich von 2 % bis 10 %, aufweist; und/oder
insbesondere wobei der Flachkörper eine Bruchdehnung (tensile elongation at break) im Bereich von 5 % bis 500 %, insbesondere im Bereich von 7,5 % bis 400 %, vorzugsweise im Bereich von 10 % bis 300 %, aufweist; und/oder
insbesondere wobei der Flachkörper eine Durchstoßfestigkeit (puncture resistance) im Bereich von 20 N/mm bis 500 N/mm, insbesondere im Bereich von 40 N/mm bis 400 N/mm, aufweist.

### Aspekt 55:

Flachkörper nach einem der Aspekte 36 bis 54,
wobei der Flachkörper einen Peroxidgehalt von höchstens 0,2 Gew.-%, insbesondere weniger als 0,2 Gew.-%, insbesondere höchstens 0,15 Gew.-%, vorzugsweise höchstens 0,1 Gew.-%, bezogen auf den partikulären Formkörper und/oder den Flachkörper, aufweisen.

### Aspekt 56:

Flachkörper nach einem der Aspekte 36 bis 55,
wobei der Flachkörper als Verpackung, insbesondere Lebensmittelverpackung und/oder Industrieverpackung, vorzugsweise Transport-, Um-, Service-, Bulk-, Geschenk-, Retail- und/oder Transportverpackung; Container; Box; Behälter; Ersatzprodukt für Karton und/oder Kartonagen; Halbzeug insbesondere für Tiefzieh- oder Blasformanwendungen; Verkleidungs- und/oder Abdeckmaterial; Schildmaterial und/oder Schild, insbesondere Werbeschild; Aufhänger und/oder Aufsteller; Material für den Baubereich; Material für den Interieur- und/oder Exterieurbereich; Schutzmaterial, insbesondere Schutzverpackung und/oder Schutzfolie; oder dergleichen ausgebildet ist.

### Aspekt 57:

Flachkörper nach einem der Aspekte 36 bis 56,
wobei der Flachkörper biologisch abbaubar und/oder biodegradierbar ist, insbesondere unter Abbau- und/oder Kompostierungsbedingungen und/oder -anforderungen gemäß der DIN EN 13432 oder DIN EN 14995 oder ASTM D6400.

### Aspekt 58:

Verpackung, insbesondere biologisch abbaubare und/oder biodegradierbare Verpackung, wobei die Verpackung mindestens einen Flachkörper nach einem der Aspekte 36 bis 57 aufweist oder hieraus besteht und/oder wobei die Verpackung aus mindestens einem Flachkörper nach einem der Aspekte 36 bis 57 hergestellt ist.

### Aspekt 59:

Verpackung nach Aspekt 58,
wobei die Verpackung als Lebensmittelverpackung und/oder Industrieverpackung, vorzugsweise Transport-, Um-, Service-, Bulk-, Geschenk-, Retail- und/oder Transportverpackung; Container; Box; Behälter; Ersatzprodukt für Karton und/oder Kartonagen; Halbzeug insbesondere für Tiefzieh- oder Blasformanwendungen; Verkleidungs- und/oder Abdeckmaterial; Schildmaterial und/oder Schild, insbesondere Werbeschild; Aufhänger und/oder Aufsteller; Material für den Baubereich; Material für den Interieur- und/oder Exterieurbereich; Schutzmaterial, insbesondere Schutzverpackung und/oder Schutzfolie; oder dergleichen ausgebildet ist.

### Aspekt 60:

Verpackung nach Aspekt 58 oder 59,
wobei die Verpackung biologisch abbaubar und/oder biodegradierbar ist, insbesondere unter Abbau- und/oder Kompostierungsbedingungen und/oder -anforderungen gemäß der DIN EN 13432 oder DIN EN 14995 oder ASTM D6400

### Aspekt 61:

Kunststoffzusammensetzung, insbesondere biologisch abbaubare und/oder biodegradierbare Kunststoffzusammensetzung, vorzugsweise in Form einer Mischung, wobei die Kunststoffzusammensetzung
(i) mindestens ein Polylactid (PLA) und
(ii) mindestens ein Polybutylensuccinat (PBS)
   aufweist oder hieraus besteht mit der Maßgabe, dass die Kunststoffzusammensetzung außerdem
(iii) mindestens einen weiteren Polyester aus der Gruppe von
   (α) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT),
   (β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie
   (γ) Mischungen von (α) und (β),
   und/oder
(iv) mindestens einen reaktiven Polymerkettenmodifizierer (Polymerkettenmodifizierungsmittel) und/oder das Reaktionsprodukt, insbesondere Polymerisationsprodukt, vorzugsweise Copolymerisationsprodukt, der vorgenannten Komponenten aufweist.

### Aspekt 62:

Kunststoffzusammensetzung nach Aspekt 61,
wobei die Kunststoffzusammensetzung das Polylactid [Komponente (i)] in Mengen im Bereich von 10 Gew.-% bis 90 Gew.-%, insbesondere im Bereich von 15 Gew.-% bis 80 Gew.-%, vorzugsweise im Bereich von 20 Gew.-% bis 60 Gew.-%, bevorzugt im Bereich von 25 Gew.-% bis 50 Gew.-%, bezogen auf die Mischung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 63:

Kunststoffzusammensetzung nach Aspekt 61 oder 62,
wobei die Kunststoffzusammensetzung das Polybutylensuccinat [Komponente (ii)] in Mengen im Bereich von 10 Gew.-% bis 90 Gew.-%, insbesondere im Bereich von 20 Gew.-% bis 85 Gew.-%, vorzugsweise im Bereich von 40 Gew.-% bis 80 Gew.-%, bevorzugt im Bereich von 50 Gew.-% bis 70 Gew.-%, bezogen auf die Kunststoffzusammensetzung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 64:

Kunststoffzusammensetzung nach einem der Aspekte 61 bis 63,
wobei die Kunststoffzusammensetzung den weiteren Polyester [Komponente (iii)] in Mengen im Bereich von 0 Gew.-% bis 50 Gew.-%, insbesondere im Bereich von 0 Gew.-% bis 20 Gew.-%, vorzugsweise im Bereich von 0 Gew.-% bis 10 Gew.-%, bevorzugt im Bereich von 2 Gew.-% bis 8 Gew.-%, bezogen auf die Kunststoffzusammensetzung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 65:

Kunststoffzusammensetzung nach einem der Aspekte 61 bis 64,
wobei die Kunststoffzusammensetzung den reaktiven Polymerkettenmodifizierer [Komponente (iv)] in Mengen im Bereich von 0 Gew.-% bis 2 Gew.-%, insbesondere im Bereich von 0 Gew.-% bis 1,5 Gew.-%,
vorzugsweise im Bereich von 0 Gew.-% bis 1 Gew.-%, bevorzugt im Bereich von 0,01 Gew.-% bis 0,5 Gew.-%, bezogen auf die Kunststoffzusammensetzung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 66:

Kunststoffzusammensetzung nach einem der Aspekte 61 bis 65,
wobei die Kunststoffzusammensetzung
(i) mindestens ein Polylactid (PLA),
(ii) mindestens ein Polybutylensuccinat (PBS),
(iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und
(iv) mindestens einen reaktiven Polymerkettenmodifizierer (Polymerkettenmodifizierungsmittel)
aufweist oder hieraus besteht.

### Aspekt 67:

Kunststoffzusammensetzung nach einem der Aspekte 61 bis 66,
wobei die Kunststoffzusammensetzung
(i) mindestens ein Polylactid (PLA),
(ii) mindestens ein Polybutylensuccinat (PBS),
(iii) gegebenenfalls mindestens einen weiteren Polyester, wie zuvor definiert, insbesondere gegebenenfalls mindestens ein Polybutylenadipat-terephthalat (PBAT) und/oder Polybutylensuccinat-terephthalat (PBST) und/oder Polybutylensebacat-terephthalat (PBSeT) und/oder Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), vorzugsweise gegebenenfalls mindestens ein Polybutylenadipat-terephthalat (PBAT), und
(iv) mindestens einen reaktiven Polymerkettenmodifizierer (Polymerkettenmodifizierungsmittel) in Form eines organischen Peroxids
aufweist oder hieraus besteht.

### Aspekt 68:

Kunststoffzusammensetzung nach einem der Aspekte 61 bis 67,
wobei der reaktive Polymerkettenmodifizierer [Komponente (iv)] ausgewählt ist aus der Gruppe von Polymerkettenverlängerern (Polymerkettenverlängerungsmitteln), Polymerkettenvernetzern (Polymerkettenvernetzungsmitteln) und Polymerkettenverzweigerer (Polymerkettenverzweigungsmitteln) sowie deren Mischungen oder Kombinationen;
insbesondere wobei der reaktive Polymerkettenmodifizierer [Komponente (iv)] mindestens einen (1) Polymerisationsinitiator (Radikalstarter), insbesondere mindestens ein Peroxid, vorzugsweise organisches Peroxid, und/oder insbesondere mindestens eine Azoverbindung, vorzugsweise Azoisobutyronitril (AIBN), und/oder (2) mindestens ein Styrol/(Meth)Acrylat-Copolymer, insbesondere modifiziertes und/oder reaktives Styrol/(Meth)Acrylat-Copolymer, und/oder (3) mindestens ein mit Glycidylmethacrylat (GMA) oder Acrylsäure (AS) oder Maleinsäureanhydrid (MSA) gepfropftes Polymer oder Copolymer, vorzugsweise ein mit Glycidylmethacrylat (GMA) gepfropftes Polymer oder Copolymer, umfasst oder hieraus besteht; und/oder
insbesondere wobei der reaktive Polymerkettenmodifizierer [Komponente (iv)] mindestens einen Polymerisationsinitiator (Radikalstarter), insbesondere mindestens ein Peroxid, vorzugsweise organisches Peroxid, umfasst oder hieraus besteht.

### Aspekt 69:

Kunststoffzusammensetzung nach einem der Aspekte 61 bis 68,
wobei der reaktive Polymerkettenmodifizierer [Komponente (iv)] ausgewählt ist aus der Gruppe von (1) Polymerisationsinitiatoren (Radikalstartern), insbesondere Peroxiden, vorzugsweise organischen Peroxiden, und/oder Azoverbindungen, vorzugsweise Azoisobutyronitril (AIBN), (2) Styrol/(Meth)Acrylat-Copolymeren, insbesondere modifizierten und/oder reaktiven Styrol/(Meth)Acrylat-Copolymeren, (3) mit Glycidylmethacrylat (GMA) oder Acrylsäure (AS) oder Maleinsäureanhydrid (MSA) gepfropfte Polymere oder Copolymere, vorzugsweise mit Glycidylmethacrylat (GMA) gepfropfte Polymere oder Copolymere, sowie (4) deren Mischungen oder Kombinationen.

### Aspekt 70:

Kunststoffzusammensetzung nach einem der Aspekte 61 bis 69,
wobei die Kunststoffzusammensetzung aus der Komponente (i), Komponente (ii), gegebenenfalls Komponente (iii) und gegebenenfalls Komponente (iv) besteht; oder
wobei die Kunststoffzusammensetzung aus der Komponente (i), Komponente (ii), gegebenenfalls Komponente (iii) und Komponente (iv) besteht; oder wobei die Kunststoffzusammensetzung aus der Komponente (i), Komponente (ii), Komponente (iii) und Komponente (iv) besteht.

### Aspekt 71:

Kunststoffzusammensetzung nach einem der Aspekte 61 bis 70,
wobei die Kunststoffzusammensetzung mindestens einen Füllstoff (Additiv), insbesondere anorganischen und/oder mineralischen Füllstoff (Additiv), vorzugsweise Talkum, Kreide und/oder Magnesium- und/oder Calciumcarbonat, [Komponente (v)] enthält; und/oder
wobei der Kunststoffzusammensetzung mindestens ein Füllstoff (Additiv), insbesondere anorganischer und/oder mineralischer Füllstoff (Additiv), vorzugsweise Talkum, Kreide und/oder Magnesium- und/oder Calciumcarbonat, [Komponente (v)] zugegeben ist, insbesondere wobei der Füllstoff vorzugsweise gleichmäßig in die Kunststoffzusammensetzung, vorzugsweise in Form der Mischung, eingearbeitet und/oder inkorporiert ist.

### Aspekt 72:

Kunststoffzusammensetzung nach einem der Aspekte 61 bis 71,
wobei die Kunststoffzusammensetzung den Füllstoff (Additiv) [Komponente (v)] in Mengen im Bereich von 0,001 Gew.-% bis 20 Gew.-%, insbesondere 0,01 Gew.-% bis 15 Gew.-%, vorzugsweise 0,05 Gew.-% bis 10 Gew.-%, bevorzugt 0,05 Gew.-% bis 5 Gew.-%, bezogen auf die Kunststoffzusammensetzung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 73:

Kunststoffzusammensetzung nach einem der Aspekte 61 bis 72,
wobei die Kunststoffzusammensetzung mindestens einen Hilfsstoff, ausgewählt aus der Gruppe von Dispergierhilfsmitteln (Dispergatoren), Tensiden oder oberflächenaktiven Stoffen, Entschäumern, Rheologiemodifizierern, Bindemitteln, Bioziden, Markerstoffen, Farbstoffen, insbesondere Farbpigmenten, UV-Absorbern, Anticloggingmitteln und Stabilisatoren sowie deren Mischungen und Kombinationen, [Komponente (vi)] enthält; und/oder
wobei der Kunststoffzusammensetzung mindestens ein Hilfsstoff, ausgewählt aus der Gruppe von Dispergierhilfsmitteln (Dispergatoren), Tensiden oder oberflächenaktiven Stoffen, Entschäumern, Rheologiemodifizierern, Bindemitteln, Bioziden, Markerstoffen, Farbstoffen, insbesondere Farbpigmenten, UV-Absorbern, Anticloggingmitteln und Stabilisatoren sowie deren Mischungen und Kombinationen, [Komponente (vi)] zugegeben ist, insbesondere wobei der Hilfsstoff vorzugsweise gleichmäßig in die Mischung eingearbeitet und/oder inkorporiert ist.

### Aspekt 74:

Kunststoffzusammensetzung nach Aspekt 73,
wobei die Kunststoffzusammensetzung den Hilfsstoff [Komponente (vi)] in Mengen im Bereich von 0,0001 Gew.-% bis 15 Gew.-%, insbesondere im Bereich von 0,001 Gew.-% bis 10 Gew.-%, vorzugsweise im Bereich von 0,01 Gew.-% bis 5 Gew.-%, bezogen auf die Mischung, enthält, insbesondere wobei die vorgenannten Mengenangaben derart gewählt sind, dass in der Summe, gegebenenfalls unter Einbezug optionaler weiterer Inhaltsstoffe, 100 Gew.-% resultieren.

### Aspekt 75:

Kunststoffzusammensetzung nach einem der Aspekte 61 bis 74,
wobei Kunststoffzusammensetzung biologisch abbaubar und/oder biodegradierbar ist, insbesondere unter Abbau- und/oder Kompostierungsbedingungen gemäß der DIN EN 13432 oder DIN EN 14995 oder ASTM D6400.

### Aspekt 76:

Verwendung eines Flachkörpers nach einem der Aspekte 36 bis 57,
als und/oder zur Herstellung einer Verpackung, insbesondere Lebensmittelverpackung und/oder Industrieverpackung, vorzugsweise Transport-, Um-, Service-, Bulk-, Geschenk-, Retail- und/oder Transportverpackung; Container; Box; Behälter; Ersatzprodukt für Karton und/oder Kartonagen; Halbzeug insbesondere für Tiefzieh- oder Blasformanwendungen; Verkleidungs- und/oder Abdeckmaterial; Schildmaterial und/oder Schild, insbesondere Werbeschild; Aufhänger und/oder Aufsteller; Material für den Baubereich; Material für den Interieur- und/oder Exterieurbereich; Schutzmaterial, insbesondere Schutzverpackung und/oder Schutzfolie; oder dergleichen.

### Aspekt 77:

Verwendung einer Kunststoffzusammensetzung nach einem der Aspekte 61 bis 75 zur Herstellung eines Flachkörpers nach einem der Aspekte 36 bis 57.

### Aspekt 78:

Produktionsanlage, insbesondere zur Durchführung eines Verfahrens, insbesondere wie in den Aspekten 1 bis 35 definiert, zur Herstellung eines Flachkörpers, insbesondere in Form einer Platte oder Folie, aus einem biologisch abbaubaren und/oder biodegradierbaren Kunststoffmaterial,
wobei die Produktionsanlage die folgenden Vorrichtungen umfasst:
(a) eine erste Vorrichtung zur Herstellung einer Vielzahl von insbesondere partikulären Formkörpern, vorzugsweise in Form von Granalien, Pellets, Extrudaten, Kügelchen, Prills oder dergleichen, bevorzugt Granalien, wobei eine Mischung, welche als Komponenten (Inhaltsstoffe)
   (i) mindestens ein Polylactid (PLA),
   (ii) mindestens ein Polybutylensuccinat (PBS),
   (iii) gegebenenfalls mindestens einen weiteren Polyester aus der Gruppe von
      (α) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinatterephthalat (PBST) und/oder Polybutylensebacat-terephthalat (PBSeT), vorzugsweise mindestens ein Polybutylenadipatterephthalat (PBAT) und/oder Polybutylensuccinatterephthalat (PBST), bevorzugt mindestens ein Polybutylenadipat-terephthalat (PBAT),
      (β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie
      (γ) Mischungen von (α) und (β) und
   (iv) gegebenenfalls mindestens einen reaktiven Polymerkettenmodifizierer (Polymerkettenmodifizierungsmittel)
   umfasst oder hieraus besteht, in eine vorzugsweise homogene Schmelze überführt wird, vorzugsweise unter Vermischung, wobei im Fall der Anwesenheit der Komponente (iv) gleichzeitig eine Polymerisationsreaktion erfolgt, und nachfolgend die resultierende Schmelze zu der Vielzahl von insbesondere partikulären Formkörpern verarbeitet wird; und
(b) eine zweite Vorrichtung zur Weiterverarbeitung der mittels der ersten Vorrichtung erhaltenen, insbesondere partikulären Formkörper zu einem Flachkörper, insbesondere einer Platte oder Folie.

### Aspekt 79:

Produktionsanlage nach Aspekt 78,
wobei die erste Vorrichtung der zweiten Vorrichtung verfahrens- und/oder prozesstechnisch vorgeschaltet ist und/oder wobei die zweite Vorrichtung der ersten Vorrichtung verfahrens- und/oder prozesstechnisch nachgeschaltet ist.

### Aspekt 80:

Produktionsanlage nach Aspekt 78 oder 79,
wobei die erste Vorrichtung und die zweite Vorrichtung räumlich voneinander getrennt vorliegen und/oder angeordnet sind.

### Aspekt 81:

Produktionsanlage nach einem der Aspekte 78 bis 80,
wobei die erste Vorrichtung mindestens einen Extruder, insbesondere Schneckenextruder, vorzugsweise Doppelschneckenextruder, umfasst oder wobei die erste Vorrichtung als Extruder, insbesondere Schneckenextruder, vorzugsweise Doppelschneckenextruder, ausgebildet ist.

### Aspekt 82:

Produktionsanlage nach einem der Aspekte 78 bis 81,
wobei die zweite Vorrichtung einen Extruder, insbesondere zur Durchführung einer Profilextrusion, insbesondere Hohlkammerprofilextrusion; Folienextrusion, insbesondere Flachfolienextrusion; und/oder Schaumextrusion, umfasst oder wobei die zweite Vorrichtung als Extruder, insbesondere zur Durchführung einer Profilextrusion, insbesondere Hohlkammerprofilextrusion; Folienextrusion, insbesondere Flachfolienextrusion; und/oder Schaumextrusion; ausgebildet ist.

### Aspekt 83:

Flachkörper nach einem der Aspekte 36 bis 57, Verpackung nach einem der Aspekte 58 bis 60, Kunststoffzusammensetzung nach einem der Aspekte 61 bis 75, Verwendung nach Aspekt 76, Verwendung nach Aspekt 77 und/oder Produktionsanlage nach einem der Aspekte 78 bis 82, jeweils gekennzeichnet durch eines oder mehrere der Merkmale eines der Aspekte 1 bis 35.

## Patentansprüche

1. Verfahren zur Herstellung eines Flachkörpers, insbesondere in Form einer Platte oder Folie, aus einem biologisch abbaubaren und/oder biodegradierbaren Kunststoffmaterial,
wobei das Verfahren die folgenden Verfahrensschritte in der nachfolgend spezifizierten Abfolge umfasst:
(a) Herstellung einer Vielzahl von insbesondere partikulären Formkörpern, vorzugsweise in Form von Granalien, Pellets, Extrudaten, Kügelchen, Prills oder dergleichen, bevorzugt Granalien, wobei eine Mischung, welche als Komponenten (Inhaltsstoffe)
(i) mindestens ein Polylactid (PLA),
(ii) mindestens ein Polybutylensuccinat (PBS),
(iii) gegebenenfalls mindestens einen weiteren Polyester aus der Gruppe von
(α) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT),
(β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie
(γ) Mischungen von (α) und (β),
(iv) gegebenenfalls mindestens einen reaktiven Polymerkettenmodifizierer (Polymerkettenmodifizierungsmittel)
umfasst, in eine vorzugsweise homogene Schmelze überführt wird, vorzugsweise unter Vermischung, wobei im Fall der Anwesenheit der Komponente (iv) gleichzeitig eine Polymerisationsreaktion erfolgt, und nachfolgend die resultierende Schmelze zu der Vielzahl von insbesondere partikulären Formkörpern verarbeitet wird, vorzugsweise mittels Extrusion; dann
(b) Weiterverarbeitung der in Verfahrensschritt (a) erhaltenen, insbesondere partikulären Formkörper zu einem Flachkörper, insbesondere einer Platte oder Folie, vorzugsweise mittels Extrusion, bevorzugt mittels Profilextrusion.

2. Verfahren nach Anspruch 1,
wobei die Mischung aus der Komponente (i), Komponente (ii), gegebenenfalls Komponente (iii) und gegebenenfalls Komponente (iv) besteht; oder wobei die Mischung aus der Komponente (i), Komponente (ii), gegebenenfalls Komponente (iii) und Komponente (iv) besteht; oder
wobei die Mischung aus der Komponente (i), Komponente (ii), Komponente (iii) und Komponente (iv) besteht.

3. Verfahren nach Anspruch 1 oder 2,
wobei die Mischung zumindest im Wesentlichen lösemittelfrei ist und/oder zumindest im Wesentlichen lösemittelfrei ausgebildet wird; und/oder
wobei Verfahrensschritt (a), und/oder Verfahrensschritt (b), insbesondere Verfahrensschritt (a), vorzugsweise das Gesamtverfahren, zumindest im Wesentlichen unter Ausschluss von Lösemitteln durchgeführt wird; und/oder
wobei in Verfahrensschritt (a) zunächst eine Vormischung von einer oder zwei der Komponenten (i) bis (iii) einerseits mit dem reaktiven Polymerkettenmodifizierer, insbesondere Peroxid, vorzugsweise organischen Peroxid, [Komponente (iv)] andererseits hergestellt und/oder bereitgestellt wird, insbesondere mit der Maßgabe, dass die Vormischung nicht sämtliche Komponenten (i) bis (iii) der Mischung gemäß Verfahrensschritt (a) und/oder mit der Maßgabe, dass die Vormischung mindestens eine der Komponenten (i) bis (iii) der Mischung gemäß Verfahrensschritt (a) nicht enthält, insbesondere wobei die Vormischung in eine vorzugsweise homogene Vormischungs-Schmelze überführt wird; und/oder
wobei in Verfahrensschritt (a) zunächst eine Vormischung des Polylactids [Komponente (i)] und/oder des Polybutylensuccinats [Komponente (ii)], vorzugsweise des Polylactids [Komponente (i)], einerseits mit dem reaktiven Polymerkettenmodifizierer, insbesondere Peroxid, vorzugsweise organischen Peroxid, [Komponente (iv)] andererseits hergestellt und/oder bereitgestellt wird, insbesondere wobei die Vormischung in eine vorzugsweise homogene Vormischungs-Schmelze überführt wird.

4. Flachkörper, insbesondere Platte oder Folie, vorzugsweise biologisch abbaubarer und/oder biodegradierbarer Flachkörper, wobei der Flachkörper erhältlich ist durch ein Verfahren nach einem der vorangehenden Ansprüche und/oder wobei der Flachkörper durch ein Verfahren nach einem der vorangehenden Ansprüche erhalten ist.

5. Flachkörper, insbesondere Platte oder Folie, vorzugsweise biologisch abbaubarer und/oder biodegradierbarer Flachkörper, insbesondere Flachkörper nach Anspruch 4, wobei der Flachkörper eine Mischung von
(i) mindestens einem Polylactid (PLA),
(ii) mindestens einem Polybutylensuccinat (PBS),
(iii) gegebenenfalls mindestens einem weiteren Polyester aus der Gruppe von
(α) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT),
(β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie
(γ) Mischungen von (α) und (β),
(iv) gegebenenfalls mindestens einem reaktiven Polymerkettenmodifizierer (Polymerkettenmodifizierungsmittel)
und/oder deren Reaktionsprodukt, insbesondere Polymerisationsprodukt, vorzugsweise Copolymerisationsprodukt,
aufweist oder hieraus besteht.

6. Verpackung, insbesondere biologisch abbaubare und/oder biodegradierbare Verpackung, wobei die Verpackung mindestens einen Flachkörper nach Anspruch 4 oder 5 aufweist oder hieraus besteht und/oder wobei die Verpackung aus mindestens einem Flachkörper nach Anspruch 4 oder 5 hergestellt ist.

7. Kunststoffzusammensetzung, insbesondere biologisch abbaubare und/oder biodegradierbare Kunststoffzusammensetzung, vorzugsweise in Form einer Mischung, wobei die Kunststoffzusammensetzung
(i) mindestens ein Polylactid (PLA) und
(ii) mindestens ein Polybutylensuccinat (PBS)
aufweist oder hieraus besteht mit der Maßgabe, dass die Kunststoffzusammensetzung außerdem
(iii) mindestens einen weiteren Polyester aus der Gruppe von
(α) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT),
(β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie
(γ) Mischungen von (α) und (β),
und/oder
(iv) mindestens einen reaktiven Polymerkettenmodifizierer (Polymerkettenmodifizierungsmittel)
und/oder das Reaktionsprodukt, insbesondere Polymerisationsprodukt, vorzugsweise Copolymerisationsprodukt, der vorgenannten Komponenten aufweist.

8. Verwendung eines Flachkörpers nach Anspruch 4 oder 5,
als und/oder zur Herstellung einer Verpackung, insbesondere Lebensmittelverpackung und/oder Industrieverpackung, vorzugsweise Transport-, Um-, Service-, Bulk-, Geschenk-, Retail- und/oder Transportverpackung; Container; Box; Behälter; Ersatzprodukt für Karton und/oder Kartonagen; Halbzeug insbesondere für Tiefzieh- oder Blasformanwendungen; Verkleidungs- und/oder Abdeckmaterial; Schildmaterial und/oder Schild, insbesondere Werbeschild; Aufhänger und/oder Aufsteller; Material für den Baubereich; Material für den Interieur- und/oder Exterieurbereich; Schutzmaterial, insbesondere Schutzverpackung und/oder Schutzfolie; oder dergleichen.

9. Verwendung einer Kunststoffzusammensetzung nach Anspruch 7 zur Herstellung eines Flachkörpers nach Anspruch 4 oder 5.

10. Produktionsanlage, insbesondere zur Durchführung eines Verfahrens, insbesondere wie in den Ansprüchen 1 bis 3 definiert, zur Herstellung eines Flachkörpers, insbesondere in Form einer Platte oder Folie, aus einem biologisch abbaubaren und/oder biodegradierbaren Kunststoffmaterial, wobei die Produktionsanlage die folgenden Vorrichtungen umfasst:
(a) eine erste Vorrichtung zur Herstellung einer Vielzahl von insbesondere partikulären Formkörpern, vorzugsweise in Form von Granalien, Pellets, Extrudaten, Kügelchen, Prills oder dergleichen, bevorzugt Granalien, wobei eine Mischung, welche als Komponenten (Inhaltsstoffe)
(i) mindestens ein Polylactid (PLA),
(ii) mindestens ein Polybutylensuccinat (PBS),
(iii) gegebenenfalls mindestens einen weiteren Polyester aus der Gruppe von
(α) aromatisch-aliphatischen Copolyestern auf Basis von Butandiol, Terephthalsäure und mindestens einer aliphatischen Dicarbonsäure, insbesondere mindestens ein Polybutylenadipat-terephthalat (PBAT) und/oder Polybutylensuccinat-terephthalat (PBST) und/oder Polybutylensebacat-terephthalat (PBSeT), vorzugsweise mindestens ein Polybutylenadipat-terephthalat (PBAT) und/oder Polybutylensuccinat-terephthalat (PBST), bevorzugt mindestens ein Polybutylenadipat-terephthalat (PBAT),
(β) Polyhydroxyalkanoaten (PHA), insbesondere Polyhydroxybutyrat (PHB) und/oder Polyhydroxyvalerat (PHV) und/oder Polyhydroxybutyrat-Polyhydroxyvalerat-Copolymer (PHBV bzw. PHB-PHV-Copolymer), sowie
(γ) Mischungen von (α) und (β) und
(iv) gegebenenfalls mindestens einen reaktiven Polymerkettenmodifizierer (Polymerkettenmodifizierungsmittel)
umfasst oder hieraus besteht, in eine vorzugsweise homogene Schmelze überführt wird, vorzugsweise unter Vermischung, wobei im Fall der Anwesenheit der Komponente (iv) gleichzeitig eine Polymerisationsreaktion erfolgt, und nachfolgend die resultierende Schmelze zu der Vielzahl von insbesondere partikulären Formkörpern verarbeitet wird; und
(b) eine zweite Vorrichtung zur Weiterverarbeitung der mittels der ersten Vorrichtung erhaltenen, insbesondere partikulären Formkörper zu einem Flachkörper, insbesondere einer Platte oder Folie.
